(19) Europäisches Patentamt
European Patent Office
Office européen des brevets

(11) EP 4 651 220 A1

(12) **EUROPEAN PATENT APPLICATION**
published in accordance with Art. 153(4) EPC

(43) Date of publication:
**19.11.2025 Bulletin 2025/47**

(21) Application number: **24760540.5**

(22) Date of filing: **20.02.2024**

(51) International Patent Classification (IPC):
***H01M 4/13*** *(2010.01)* ***H01M 10/0565*** *(2010.01)*
***H01M 4/134*** *(2010.01)* ***H01M 10/0568*** *(2010.01)*
***H01M 10/052*** *(2010.01)*

(52) Cooperative Patent Classification (CPC):
**H01M 4/13; H01M 4/134; H01M 10/052; H01M 10/0565; H01M 10/0568;** Y02E 60/10

(86) International application number:
**PCT/KR2024/002186**

(87) International publication number:
**WO 2024/177351 (29.08.2024 Gazette 2024/35)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **20.02.2023 KR 20230022353**

(71) Applicants:
- **LG Energy Solution, Ltd.**
  **Seoul 07335 (KR)**
- **Korea Advanced Institute of Science and Technology**
  **Daejeon 34141 (KR)**

(72) Inventors:
- **KIM, Hong Sin**
  **Daejeon 34122 (KR)**
- **KIM, Il Doo**
  **Daejeon 34141 (KR)**
- **IM, Sung Gap**
  **Daejeon 34141 (KR)**
- **BAE, Jaehyeong**
  **Daejeon 34141 (KR)**
- **SONG, Hyunsub**
  **Daejeon 34141 (KR)**
- **CHOI, Keonwoo**
  **Daejeon 34141 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **LITHIUM METAL SECONDARY BATTERY COMPRISING ELECTROLYTE-SWELLABLE POLYMER FILM**

(57) An electrode for lithium metal battery, a method for manufacturing the same, and a lithium metal battery including the electrode are provided. The electrode comprises an anode current collector, a lithium metal layer formed on the anode current collector, and a polymer protective thin-film layer formed on the lithium metal layer, the polymer protective thin-film layer including an electrolyte-swellable polymer.

FIG. 1A

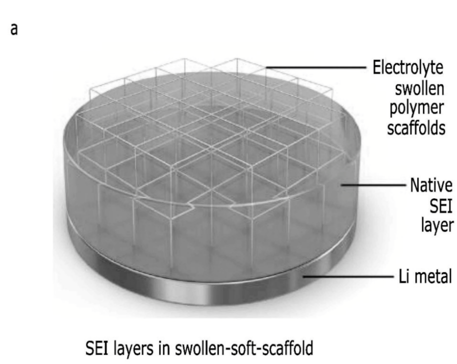




EP 4 651 220 A1

FIG. 1B

b

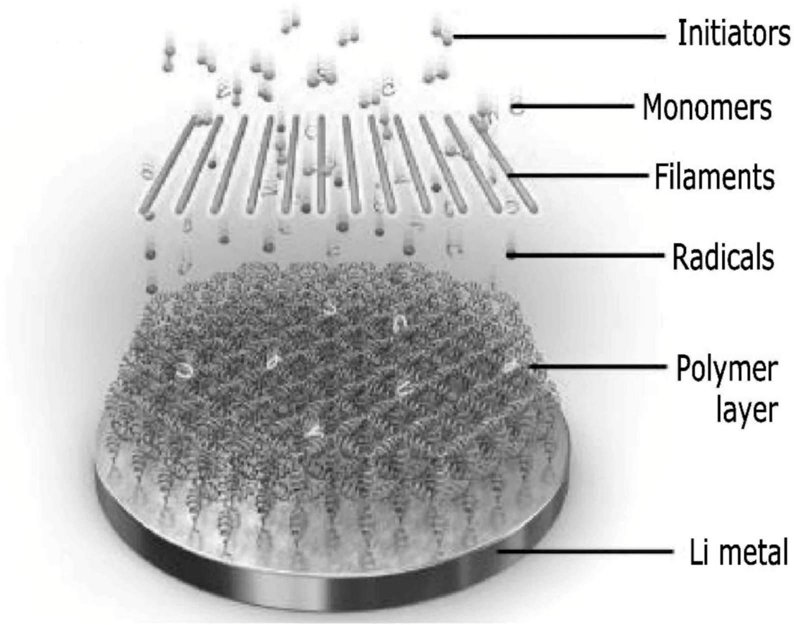




(Cont. next page)

# FIG. 1C

c

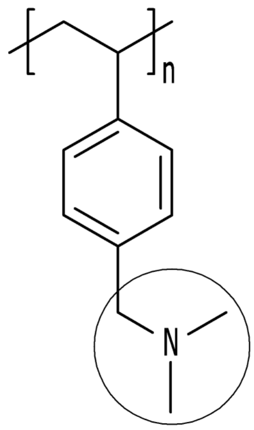

pDMAMS

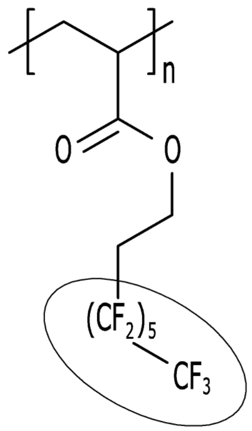

pC6FA

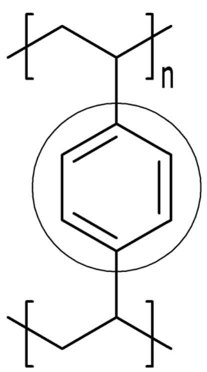

pDVB

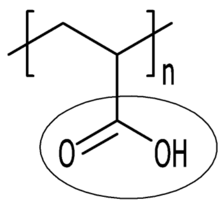

pAA

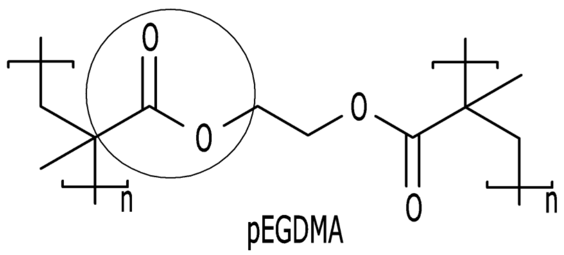

pEGDMA



(Cont. next page)

FIG. 1D

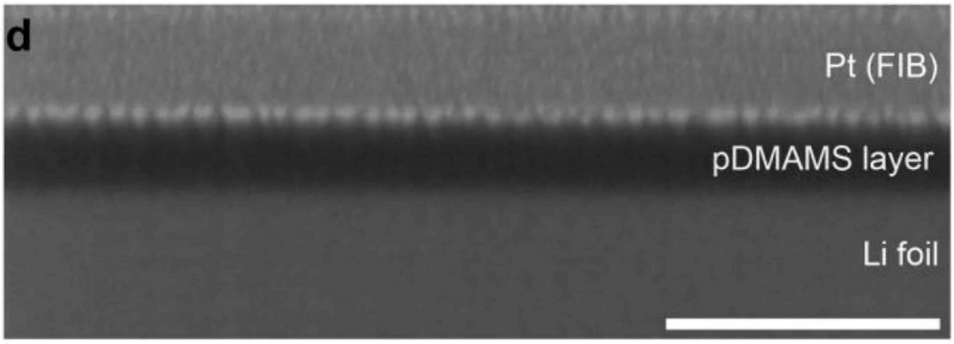


FIG. 1E

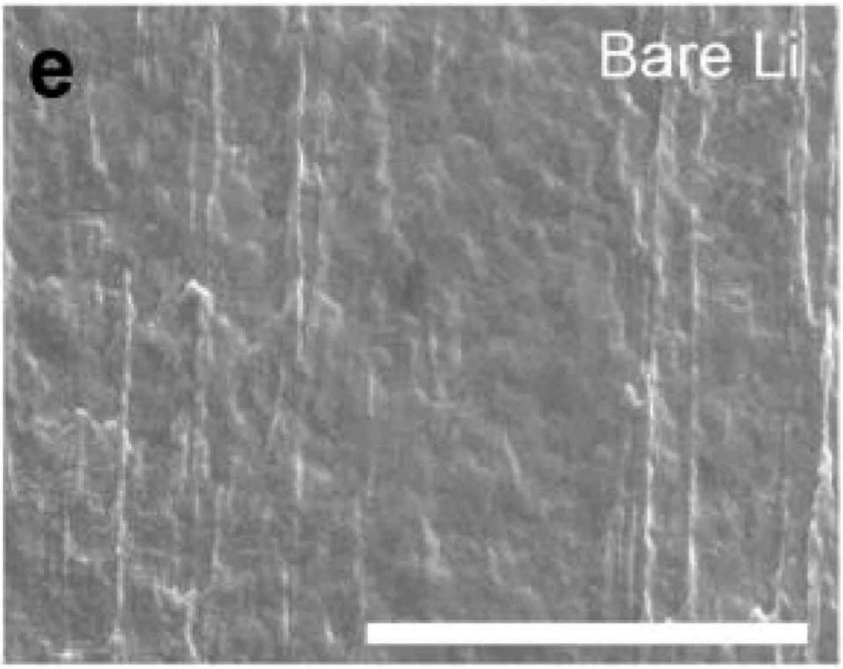




(Cont. next page)

FIG. 1F

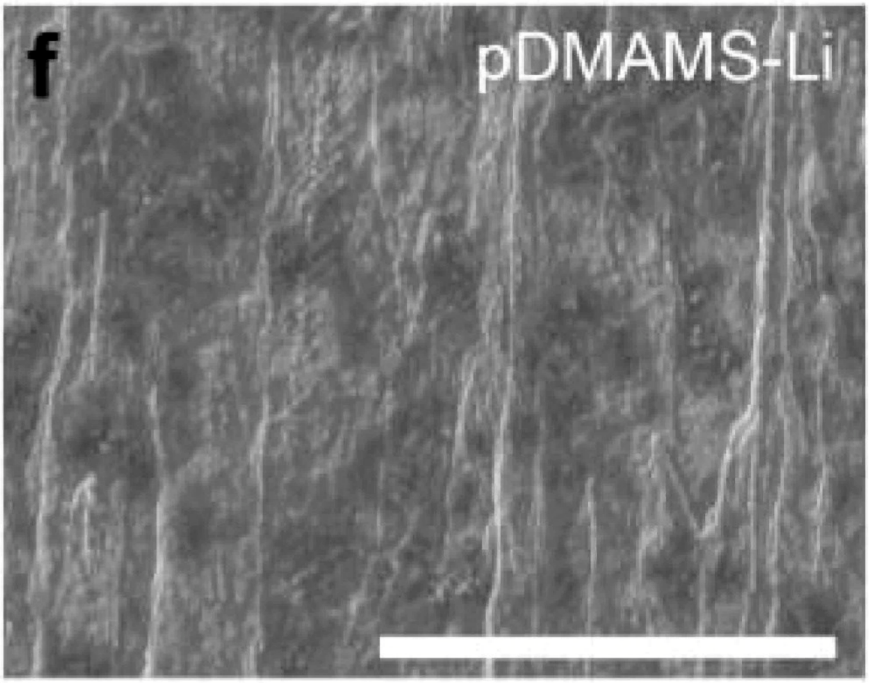




(Cont. next page)

FIG. 1G

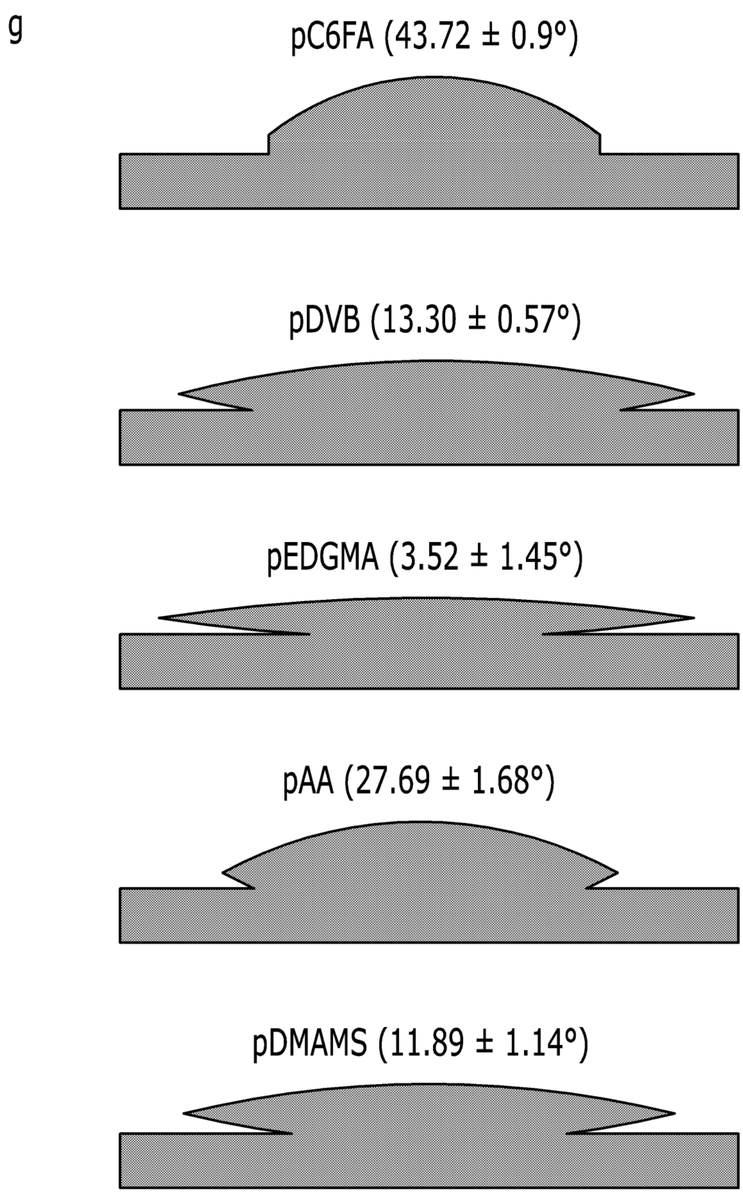




(Cont. next page)

FIG. 1H

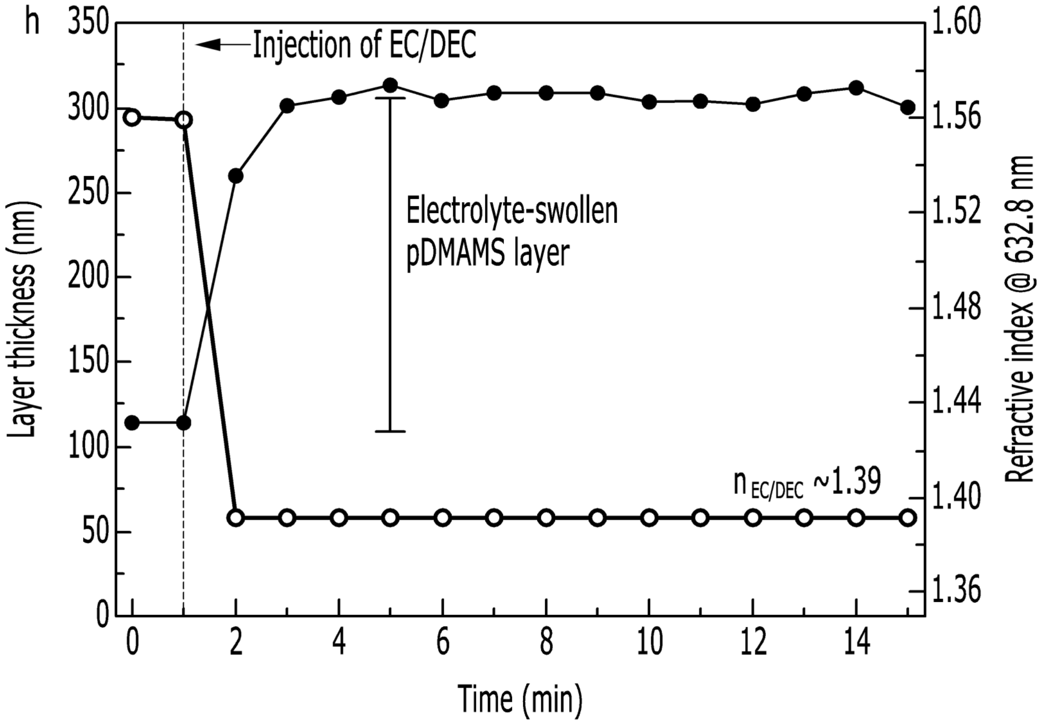
h
Injection of EC/DEC
Electrolyte-swollen
pDMAMS layer
$n_{EC/DEC}$ ~1.39
Layer thickness (nm)
Refractive index @ 632.8 nm
Time (min)
0
50
100
150
200
250
300
350
1.36
1.40
1.44
1.48
1.52
1.56
1.60
0
2
4
6
8
10
12
14

FIG. 1I

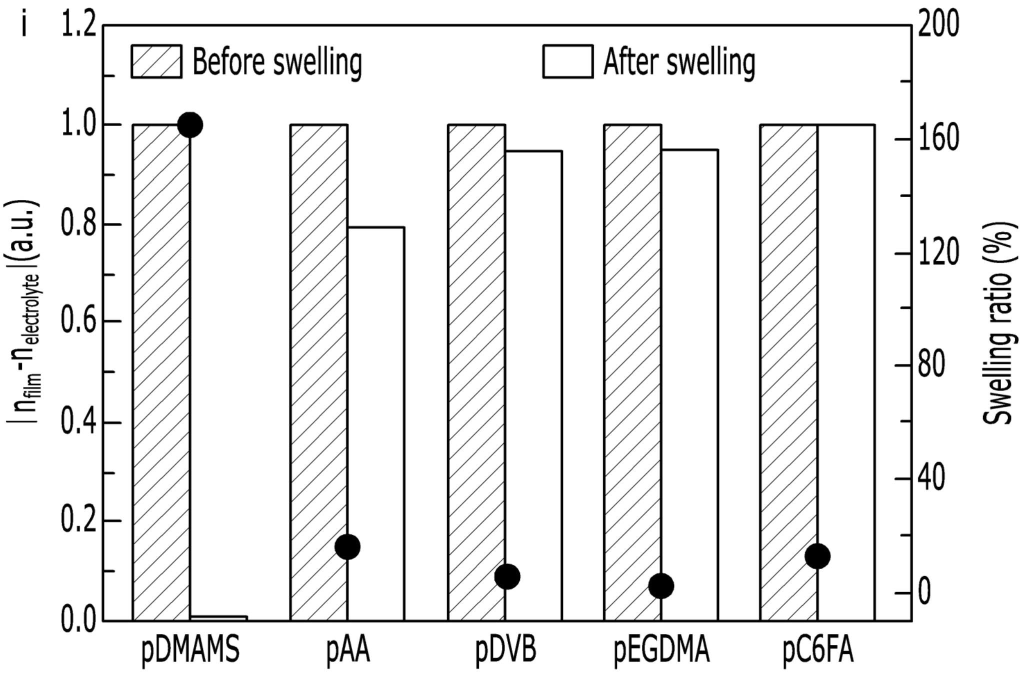
i
Before swelling
After swelling
$|n_{film}-n_{electrolyte}|$(a.u.)
Swelling ratio (%)
0.0
0.2
0.4
0.6
0.8
1.0
1.2
0
40
80
120
160
200
pDMAMS
pAA
pDVB
pEGDMA
pC6FA

## Description

## [TECHNICAL FIELD]

Cross Citation with Related Application(s)

This application claims the benefit of Korean Patent Application No. 10-2023-0022353 filed on February 20, 2023 and Korean Patent Application No. 10-2024-0024293 filed on February 20, 2024 in the Korean Intellectual Property Office, the disclosures of which are incorporated herein by reference in their entirety.

The present disclosure relates to a lithium metal battery comprising an electrolyte-swellable polymer film.

## [BACKGROUND]

Lithium metal has been recognized as an anode material for high-energy lithium batteries due to its high theoretical specific capacity (3860 mAh $g^{-1}$) and low redox potential (-3.040 V vs. standard hydrogen electrode). However, despite the fact that lithium batteries have a development history of over 100 years, lithium metal anodes have been difficult to apply to actual battery systems because they induce formation of dendrites during the charge and discharge process due to unstable surface chemistry. Metal Li itself is a strong reducing agent having a high hydration enthalpy(-520 kJ $mol^{-1}$), and can easily react with the electrolyte to form a solid-electrolyte interphase(SEI) layer without applying a potential. However, because the SEI layer has a heterogeneous polycrystalline grain boundary where cracking easily occurs with the volume change of the lithium metal anode, it has the disadvantage of being mechanically weak. Further, the SEI layer is exposed to the electrolyte while lithium grows through cracking, and an additional SEI layer is formed on the surface by a spontaneous reaction, whereby the liquid electrolyte is consumed (FIG. 6). Because lithium metal and electrolyte are consumed as dead lithium in this way and lithium dendrites grow over subsequent cycles, a lithium metal battery shows low coulombic efficiency over a long period of time, short battery cycle life, and safety problems due to the risk of explosion of lithium metal.

As a method for solving such problems, there is a method of introducing an "artificial SEI layer" which modifies the lithium surface via a functional outer layer to stabilize electrochemical reaction. For example, the Li metal surface may be coated with various materials such as etched polymer layers, organic/inorganic frameworks, nanosheets, and the like, which promote lithium ion transport and simultaneously block lithium dendrites. There is also a method of producing a lithium based composite film as an artificial SEI layer, in which the outermost lithium surface is treated with liquid and gaseous chemical materials to stabilize the lithium surface, but a native SEI layer preferentially begins to grow between Li surfaces adjacent to the artificial SEI layer. This is because the native SEI layer exhibits low interface resistance to the Li surface, while the artificial SEI layer with poor contact with the Li surface exhibits high resistance. Due to these problems, the method of introducing an artificial SEI layer is limited.

On the other hand, a method of directly modifying the native SEI layer by using an electrolyte that is decomposed by reacting with the electrode material has also been proposed. The additive can be used to adjust the electrolyte composition or to adjust cycling conditions so that the native SEI layer may be modified so as to promote or hinder electrochemical reactions in the cathode and the anode. In this case, the contact between the SEI layer and the lithium surface may be improved, but the directly modified SEI layer has polycrystalline properties of having particles randomly distributed, and having element compositions different from each other. Due to such structural characteristics, mechanical stability is weakened, and cracking is particularly likely to occur, and the native SEI layer is vulnerable to swelling due to various electrolytes to thereby reduce mechanical strength. Therefore, there is a need to develop a solution strategy that can promote formation of a structurally enhanced native SEI layer.

## [DETAILED DESCRIPTION OF THE INVENTION]

## [Technical Solution]

Lithium (Li) metal anodes have the problem of being unstable and having reactivity to electrolytes, and have non-uniform distribution to form a fragile SEI layer and ultimately form Li dendrites, which worsens battery life. Therefore, in embodiments of the present disclosure, in order to strengthen the SEI layer and stabilize the interface, the electrolyte-swellable polymer nanolayer can be monolithically deposited by using an initiator chemical vapor deposition (iCVD) to passivate the lithium metal. For example, a 100 nm thick iCVD poly(dimethylaminomethylstyrene)(pDMAMS) layer may swell approximately 264% in carbonate electrolyte to construct a soft scaffold filled with an electrolyte for lithium ion transport. In this case, it is possible to provide a uniform, $Li_2O$-free and $Li_2CO_3$-rich native SEI layer.

Disclosed herein is a new functional polymer scaffold that can structurally accommodate and strengthen the SEI layer to improve mechanical properties and stabilize electrochemical reactions. Specifically, the functional polymer scaffold requires the following characteristics: 1) it must be possible to transport lithium ion and electrolyte through a matrix, 2) it must be compatible and miscible with the native SEI layer and allow lithium ions and electrolytes to be incorporated into the matrix; 3) it must provide sufficient mechanical strength, and 4) it must not be structurally damaged during electrochemical decomposition. Ideally, a functional polymer layer that can fully accommodate the native SEI layer in a large free space while being swollen by the electrolyte present in the battery system should meet the aforementioned criteria. Thus, in an embodiment of the present disclosure, a polymer protective thin-film layer including an electrolyte-swellable polymer is applied (FIG. 1A).

Meanwhile, an initiated chemical vapor deposition (iCVD), which is a method of coating a functional polymer layer onto a lithium metal surface, can precisely produce a uniform polymer layer in a thickness of 10 nm or less, and thereby may be particularly useful for minimizing cell resistance, improving lithium ion diffusivity, and investigating interfacial phenomena (FIG. 1B). In particular, since the iCVD method can modify the lithium surface without solvents or high-temperature processes, it can directly coat various types of high purity functional polymers while preventing potential damage to lithium. It is also possible to adjust the composition of the copolymers composed of opposite chemical properties (e.g., hydrophilic-hydrophobic) via the iCVD method.

In one embodiment of the present disclosure, there is provided an electrode for lithium metal battery, the electrode comprising: an anode current collector; a lithium metal layer formed on the anode current collector; and a polymer protective thin-film layer formed on the lithium metal layer, wherein the polymer protective thin-film layer includes an electrolyte-swellable polymer, and the electrolyte-swellable polymer has a swelling ratio(%) represented by the following Mathematical Formula 1 of 15% or more.

[Mathematical Formula 1]

$$Swelling\ ratio\ (\%) = \frac{d_{swollen} - d_{pristine}}{d_{pristine}} \times 100$$

wherein $d_{pristine}$ is a thickness of the polymer protective thin-film layer before swelling, and $d_{swollen}$ is a thickness of the polymer protective thin-film layer after swelling.

In an exemplary embodiment, the lithium metal layer may have a thickness of 1 to 200 μm.

In an exemplary embodiment, the electrolyte-swellable polymer may be a polymer including one or more monomers selected from the group consisting of dimethylaminomethyl styrene, ethylene glycol dimethacrylate, acrylic acid, (2-perfluorohexyl) ethyl acrylate, and divinylbenzene.

For example, the electrolyte-swellable polymer may include one or more polymers selected from the group consisting of pDMAMS [poly(dimethylaminomethyl styrene)], pDVB (polydivinylbenzne), pC6FA [poly {2-(perfluorohexyl) ethyl acrylate}], pEGDMA [poly(ethylene glycol dimethacrylate)], and pAA [poly(acrylic acid)].

Meanwhile, the present applicants selected amine-rich poly(dimethylaminomethylstyrene) (pDMAMS), amine-rich poly(dimethylaminomethylstyrene) (pDMAMS), fluorine-rich poly[2-(perfluorohexyl)ethyl acrylate] (pC6FA), oxygen-rich poly(ethylene glycol dimethacrylate) (pEGDMA), ionic poly(acrylic acid) (pAA) and aromatic polydivinylbenzene (pDVB) as the electrolyte-swellable polymers, and confirmed their interaction with the electrolyte (FIG. 1C). The polymers have characteristics such as a compatibility with electrolytes, a high LUMO energy level, and excellent electrical insulation properties, and thus have been widely studied as additives or binders for lithium-ion batteries heretofore. In particular, the iCVD technology, which is entirely unaffected by oxygen and moisture, allows the polymer to be coated directly onto lithium metal with a uniform and controlled thickness because it is free from the effects of oxygen and moisture. Specifically, a surface growth polymerization process that promotes stable and sustained adsorption of monomers and radicals vaporized in iCVD onto lithium metal may be carried out (Table 1). For example, the cross-sectional SEM image in FIG. 1D shows that a uniform 100 nm pDMAMS coating is formed onto the Li metal surface (FIG. 1D). Using a constant iCVD deposition rate (2 nm/min~12 nm/min), the deposition time can be easily adjusted to obtain precise nanolayer thicknesses (FIG. 7). This one-step surface treatment process that is carried out at a relatively low treatment temperature of less than 40°C protects the core functional group of each monomer, which can be confirmed by in-situ Fourier transform infrared (FT-IR) analysis (FIG. 8).

[Table 1]

| | Flow rate (sccm)a) | | Flow rate ratio | $P_m/P_{sat}$ | | Dep.rate (nm $min^{-1}$) | Atomic % | | | | DMAMS Contentsb) |
|---|---|---|---|---|---|---|---|---|---|---|---|
| | DMAMS | C6FA | | DMAMS | C6FA | | C | F | N | O | |
| pDMAMS | 0.82 | | | 0.043 | | 2.4 | 88.8 | 0.0 | 7.5 | 3.7 | 100:0 |

(continued)

| | Flow rate (sccm)[a)] | | Flow rate ratio | $P_m/P_{sat}$ | | Dep.rate (nm $min^{-1}$) | Atomic % | | | | DMAMS Contents[b)] |
|---|---|---|---|---|---|---|---|---|---|---|---|
| | DMAMS | C6FA | | DMAMS | C6FA | | C | F | N | O | |
| pC6FA | | 0.55 | | | 0.026 | 12.5 | 41.0 | 51.8 | 0.0 | 7.2 | 0:100 |
| pD2F1 | 0.55 | 0.27 | 2:1 | 0.032 | 0.013 | 2.2 | 72.0 | 15.2 | 3.1 | 9.7 | 73:27 |
| pD3F1 | 0.82 | 0.27 | 3:1 | 0.048 | 0.013 | 2.7 | 76.6 | 10.7 | 3.9 | 8.8 | 83:17 |
| pD7F2 | 0.96 | 0.27 | 7:2 | 0.056 | 0.013 | 2.8 | 78.4 | 8.8 | 4.6 | 8.2 | 87:13 |

Table 1 shows the iCVD process conditions and composition of poly(DMAMS-co-C6FA). Wherein a) shows that the flow rate of TBPO in the copolymerization is 0.59 sccm, and b) shows the composition ratio of DMAMS and C6FA present in the polymer film.

In an exemplary embodiment, the polymer protective thin-film layer may be provided so as to cover all or part of the surface where the anode current collector and the lithium metal layer are in contact with each other. Specifically, iCVD technology is particularly useful for creating conformal coatings onto rough surfaces in that the vaporized monomers and initiators can easily access even a deep section of the concave surface. As a result, the Li surface coated with pDMAMS showed almost the same topology as the bare lithium surface (FIGs. 1E and 1F). This smooth contact and sufficient adhesion between the polymer nanolayer and the Li surface is very important to stabilize the interface so that it can withstand mechanical stresses during cell manufacturing and electrochemical cell operation. Especially when the coating thickness is less than 100 nm, the iCVD-treated surface can be effectively planarized, as can be seen from the fact that sharp edge (FIG. 1F) is reduced and the upper end boundary is flattened (FIG. 7B) compared to the untreated region at the lower edge. This planarizing effect induces an even electric field in the whole cell for uniform lithium ion transport and electrochemical reaction.

In an exemplary embodiment, the electrolyte-swellable polymer may be swollen in an electrolyte solution to form a solid-electrolyte layer composite.

Specifically, the polymer protective thin-film layer must have very high permeability to the battery electrolyte to ensure high lithium ion conductivity. Permeability of a lithium ion can be achieved by diffusion through an open polymer network via a hopping mechanism or through an expanded polymer network swollen by an electrolyte solution. For reference, all polymer candidates in the unswollen state are essentially composed of multiple open channels that allow the passage of oxygen molecules (0.35 nm in diameter) and water vapor (0.26 nm in diameter), as can be seen from the oxidation of polymer-coated lithium when exposed to ambient air (FIG. 9). Nevertheless, the pores of the scaffold must be larger ($\approx$0.9 nm in diameter) in order to ensure that the free space within the polymer protective thin-film layer is completely filled with a battery electrolyte that facilitates movement of lithium ions. Thus, the surface and swelling properties of the expected polymer layer were comprehensively evaluated using an electrolyte solvent (mixture of EC: DEC = 30:70, v/v). As a result of contact angle measurement, pEGDMA (3.52°) had the most excellent interfacial affinity with the electrolyte solvent, and the next appeared in the order: pDMAMS (11.89°), pDVB (13.30°), pAA (27.69°), and pC6FA (43.72°) (FIG. 1G). Based on the measured contact angle values, pEGDMA, pDMAMS, and pDVB can be confirmed as electrolyte hydrophilic materials that facilitate the interfacial transport of electrolyte.

Their swelling properties were confirmed using elliptical measurement analysis, which compares the thickness change of the iCVD films before and after immersion in the electrolyte solution. In contrast to the trend of the interfacial properties, the amine-rich pDMAMS layer showed the largest swelling capacity with a significant swelling ratio of 164%, followed by pAA (16%), pC6FA (12%), pDVB (6%), and pEGDMA (2%) ( FIGs. 1H, 1I and 10). This unusual fast (<3 min) swelling behavior of pDMAMS in carbonate solvents is presumably due to the presence of abundant amine functional groups in the side chains, which is confirmed by similar Hansen solubility parameters of DEC(20.2 $MPa^{1/2}$) and dimethylaminomethyl-containing polymer(20.4 $MPa^{1/2}$ ~ 21.0 $MPa^{1/2}$). Furthermore, the electrolyte-swollen pDMAMS layer maintained its layer thickness even after 3 minutes, and may be free of resistance to further dissolution and structural defects, which is all due to the high degree of entanglement of the pDMAMS polymer chains. In addition, polyionic amines combine with lithium ions to dynamically stabilize the structure, and provide strong adhesion to the lithium surface even in a highly swollen state of 164%. On the other hand, the crosslinked molecular structure of pEGDMA did not contribute to the swelling properties as in the case of pDVB. pC6FA had the poorest interfacial contact with the battery electrolyte solvent, and its swelling properties appeared below level. Although pC6FA may appear to be swollen by the solvent, the slight change in refractive index indicates that the change in thickness actually results from a partial rearrangement of the ethyl group of pC6FA. In particular, pDMAMS showed the most excellent swelling performance among other iCVD polymers, and thus can exhibit high lithium ion transport properties.

Further, the lithium ion transport properties of the iCVD polymer layer were evaluated through lithium stripping/-

plating measurements in a symmetric lithium-lithium coin cell. FIG. 2A shows galvanostatic voltage profiles over time versus actual lithium capacity (1 mAh $cm^{-2}$) at high current density (1 mA $cm^{-2}$) for each discharge/charge cycle. A bare lithium cell only lasts for 120 hours, and a high cell polarization of 150mV occurs mainly due to the formation of lithium dendrite, dead lithium debris, and depleted electrolyte, which are each identified by voltage fluctuations.

On the other hand, lithium batteries coated with iCVD polymers have different chemical structures and therefore exhibit very different electrochemical performances depending on the type of polymer used ( FIG. 2A). As predicted from the swelling test results, electrolyte swellable pDMAMS-Li shows the longest cycling performance with a low polarization of 50 mV and a cumulative capacity of 410 mAh $cm^{-2}$ at 820 hours, followed by pAA-Li (430 hours), pDVB-Li (270 hours), pEGDMA-Li (130 hours) and pC6FA-Li (20 hours). All iCVD polymer-Li cells showed high cell polarization at the early cycle (less than 50 hours), which subsequently decreased due to the formation of a low-impedance SEI layer. However, pC6FA only lasted for 14 hours with rapidly increasing cell polarization, showing that the electrolyte-aversive fluorine-rich polymer has insulating property to lithium ions. For other polymers, the cycle life is inversely proportional to the mass transfer control potential ($\mu$mtc, FIG. 2B), which indicates that it is difficult to transport lithium ions through the polymer layer without swelling. pDMAMS-Li showed the lowest $\mu$mtc and tip potential ($\mu$tip,begin,$\mu$tip,end), which is correlated with Li dendrite and dead Li formation, respectively. The low degree of polarization of the pDMAMS-Li cell may be because the uniform and close proximity of pDMAMS to Li metal greatly reduces the interface resistance and induces uniform lithium ion flux. After the 1st, 10th, and 100th cycles at 1 mA $cm^{-2}$, as demonstrated through a comparative analysis of photographs and SEM images of pDMAMS-Li and bare Li passed through the 1st, 10th, and 100th cycles, pDMAMS-Li cells showed significantly reduced formation of Li dendrite and dead Li (FIGs. 1A and 1I). In particular, bare lithium cells showed the formation of irregular and mossy dendrites within a few cycles, and subsequently, it gradually turned into isolated dead lithium, which reduced battery life. On the contrary to this, the pDMAMS-Li anode showed a densely packed and well-preserved topology without dendrites even after 100 cycles (200 hours), exhibiting uniform lithium transport through the layer (FIG. 11).

In an exemplary embodiment, the electrolyte may have a lithium ion transference number (tLi+) in the range of 0.2 to 1 as measured using Bruce-Vincent method.

Specifically, Bruce-Vincent method was used to measure the lithium ion transference number (tLi; the contribution of cations to the overall ion conduction performance) of bare-Li and pDMAMS-Li cells (FIGs. 2C, 2D, and 12). As a result, compared to the existing organic liquid electrolyte (LiPF6 EC/DEC = 3:7 (v/v), tLi $\approx$ 0.4), pDMAMS-Li showed a tLi+ value of 0.95, which corresponds to the highest value ever reported for all types of electrolyte additives, artificial SEI or solid electrolytes known to date. Such high tLi+ values ensure that the electrolyte-swollen pDMAMS matrix does not possess a dissolution shell and provides a favorable diffusion path for lithium ions, showing that the coordination composite of lithium and a polymeric polydisaccharide amine can contribute to lithium ion selectivity. Further, the 100 nm pDMAMS layer exhibits excellent ionic conductivity of 6.54 mS $cm^{-1}$ due to the pDMAMS matrix swollen with electrolyte (FIG. 13).

In order to separate the contribution of the interfacial effect and the swelling phenomenon of pDMAMS-Li to stabilize the electrochemical reaction, poly(DMAMS-co-C6FA)-Li with different ratios of electrolyte-swellable DMAMS and electrolyte-aversive C6FA moieties were prepared. (FIGs. 1G and 2E). For this purpose, the flow rate of each monomer during the iCVD process was adjusted to prepare three copolymer nanolayer samples with different ratios of DMAMS and C6FA, and the mixing ratio was confirmed through FT-IR and X-ray photoelectron spectroscopy(XPS) analysis (FIGs. 2F, 14, and 15, Table 1). The cycle life of poly(DMAMS-co-C6FA)-Li was found to be proportional to the DMAMS/C6FA ratio (FIG. 2G). The integration of C6FA moiety enables modulation of three properties of the polymer-Li layer, i.e., the degree of electrolyte swelling, adhesive force, and mechanical robustness between the lithium surface and poly(DMAMS-co-C6FA) layer. The $\mu$mtc values of poly(DMAMS-co-C6FA)-Li showed a positive correlation with the C6FA content, but were lower than those of bare lithium cells. Considering that the $\mu$mtc (44 mV~54 mV) values are somewhat similar between all types of pDMAMS-containing polymers evaluated (FIG. 2H), the effect of C6FA moiety integration on lithium ion transport properties appears to be slight. This is because lithium ions can bypass the electrolyte-aversive C6FA domain through the electrolyte-swollen DMAMS domain (FIGs. 1H and 1I). Additionally, the two peaks in the initial (dendrite formation) and terminal (dead Li formation) sections of the voltage profile of the C6FA-containing polymer become stronger as the C6FA content is higher (FIG. 2H), indicating that C6FA weakens the interfacial contact and adhesion with lithium (FIG. 16). The C6FA domain at the poly(DMAMS-co-C6FA)-Li interface acts as an impurity on which lithium dendrites and dead lithium grow favorably (FIGs. 17). Finally, the higher C6FA content weakens the mechanical robustness of poly(DMAMS-co-C6FA) because the number of DMAMS moieties with hard aromatic rings decreases. Further, the long fluoroalkyl chains of C6FA promote chain mobility and expand the free volume in the copolymer network. Therefore, the C6FA domain is vulnerable to dendritic lithium growth, and the cycle life of poly(DMAMS-co-C6FA) is inversely proportional to the content of C6FA (FIGs. 2G and 17A). Overall, we were able to confirm that appropriate adhesion between the 3S layer and the lithium surface is important as having appropriate lithium ion transport properties to promote stable electrochemical reactions.

Further, the electrochemical performance of full cells assembled with poly(DMAMS-co-C6FA)-Li anode and $LiNi_{0.6}Mn_{0.2}Co_{0.2}O_2$(NMC-622) cathode was investigated. Conventionally, especially high-voltage anodes operating above 4.2V have different operating voltage windows, and therefore, symmetric lithium battery performance has not been fully reflected in full battery evaluations. Therefore, in order to determine the voltage window capable of completely avoiding electrochemical decomposition before evaluating battery performance, electrochemical floating experiments of the iCVD layer were performed. Compared with bare lithium, most iCVD polymer layers except pC6FA were electrochemically stable below 4.8 V (FIG. 18). In particular, the leakage current of the pDMAMS-Li cell at 4.8 V was 0.5 μA lower than that of bare Li. Further, cyclic voltammetry data collected within the entire cell voltage window (3.0 V ~ 4.2 V) support the fact that other iCVD polymers except pC6FA do not undergo electrochemical degradation in the operating cell (FIG. 19). Thanks to this excellent electrochemical stability, the 3S layer can also be applied to the NMC-622 full cell using a high voltage of 4.2 V (FIG. 3A). A discharge capacity of 159 mAh $g^{-1}$ at 1C (2 mA $cm^{-2}$) was maintained without capacity reduction (0.08% per cycle) for 650 cycles or more at 20°C, whereas bare lithium resulted in a significant decay of 0.29% per cycle (FIGs. 3B and 3C). Further, galvanostatic intermittent titration technique(GITT) and in-situ XPS data also supported that the pDMAMS coating of lithium metal had no detrimental side effects on the anode and instead slightly improved the lithium ion diffusivity of the NMC cathode compared to bare lithium (FIG. 20).

Impedance spectroscopy of a lithium-lithium symmetric cell was performed to analyze the interfacial behavior of pDMAMS-Li without the influence of the cathode (FIGs. 3D, 3E and 21, Table 2). Under non-circulating conditions, the interfacial resistance of pDMAMS-Li (~ 190 Ω) was two times lower than that of bare-Li (~ 440 Ω) and other artificial SEI layers (Table S3). Interestingly, when an insulating polymer layer was added, the interfacial resistance was reduced to less than half that of bare-Li. This means that the bare lithium/electrolyte interface has inherent electrochemical instability, which indicates that it can be dramatically improved by reducing the interfacial resistance with the polymer layer swollen with electrolyte. Further, as the cell is cycled, the interfacial resistance of pDMAMS-Li further decreases to 60Ω by forming a low-impedance SEI layer, and this value was similar to that of bare lithium (55Ω) (FIGs. 3D and 3E). This difference in interfacial resistance means that the composition of the SEI layer with and without the pDMAMS layer is distinctly different, which suggests that SEI layers with higher resistance may be more advantageous in stabilizing cell performance.

[Table 2]

| Cycle | Bare-Li cell | | | pDMAMS-Li (100 nm) cell | | |
|---|---|---|---|---|---|---|
| | $R_s$(Ω) | $R_{tot}$(Ω) | $R_{ct}$(Ω) | $R_s$(Ω) | $R_{int}$ (Ω) | $R_{ct}$ (Ω) |
| $0^{th}$ | 2.8 | - | 435 | 2.8 | 48 | 149 |
| $1^{th}$ | 2.8 | 190 | 157 | 2.8 | 45 | 128 |
| $10^{th}$ | 2.8 | 51 | 100 | 3.0 | 78 | 79 |
| $50^{th}$ | 3.09 | 81.5 | 91 | 3.1 | 64 | 55 |

Table 2 shows the corresponding fitting parameters for bare lithium and pDMAMS-Li (100 nm) cells obtained by fitting the impedance data of FIGs. 3D and 3E to the equivalent circuit model in FIG. 21.

[Table 3]

| Ref. | Cycle | Interfacial resistance (Ω) | Charge transfer resistance (Ω) | Current density / capacity (mA $cm^{-2}$/ mAh $cm^{-2}$) |
|---|---|---|---|---|
| [S2] | 100 | 35 | - | 0.5/0.5 |
| [S3] | 150 | 115.6 | 75.75 | 0.5/1 |
| [S4] | 30 | 54.6 | 134.3 | 1/1 |
| [S5] | 0 | 32 | - | 1/2 (Li/Cu cell) |
| [S6] | 150 | ~30 | 30.17 | 1/1 |
| [S7] | 100 | 32.36 | 28.88 | 2/1 |
| [S8] | 10 | 6.2 | 12.4 | 0.5/1 |
| [S9] | 1 | 28.5 | 61.28 | 0.2/0.5 |
| ***This work*** | 50 | 64 | 55 | 1/1 |

Table 3 shows a comparison of the resistance measured in symmetrical cells and the Nyquist plots in embodiments of the present disclosure with the previous studies.

Typically, since bare Li forms an additional SEI layer on the surface, a single semicircle of electrical impedance spectroscopy(EIS) data is divided into two parts for analysis after the first cycle. In particular, pDMAMS-Li maintains the initial two interfaces (i.e., two semicircles each for Li and pDMAMS) even after cycling, which demonstrates that the native SEI layer formed by LiPF6 carbonate electrolyte is compatible with the pDMAMS layer. This is possible because the native SEI layer evolves inside the electrolyte-swollen structure to form a single electrochemically indistinguishable thermodynamic phase. The unique interfacial design according to embodiments of the present disclosure that accommodates native SEI layers opens another chemically deformable pathway toward a practical lithium metal anode.

As a result of examining pDMAMS-Li on the NMC-622 full cell after 10 cycles, it was found to maintain a much shinier surface compared to bare Li and pC6FA-Li (FIG. 3F). Among the poly(DMAMS-co-C6FA)-Li samples, the pure pDMAMS-Li cell showed the highest capacity of 130 mAh $g^{-1}$ at a rate of 2C (70% of the capacity at a rate of 0.1C), indicating a reasonable rate capability (FIG. 3G). According to symmetric cell tests, the critical current density of the pDMAMS solvogel was approximately 2 mA $cm^{-2}$, after which the capacity and cycle life began to decrease (FIGs. 22). Lithium dendrites begin to appear only in the region above a critical current density, and this is because supersaturated lithium ions accumulate at the pDMAMS/Li interface and provide space for dendrite growth. Thanks to the flexibility of the swollen pDMAMS layer, the further growth of Li dendrites is effectively mitigated even in the full cell operating at 2 C conditions (FIG. 3H). On the whole, the overall performance of the pDMAMS-Li full cell was much better than other types of iCVD thin-film layers and bare lithium (FIG. 23).

To clarify the chemical composition of the 3S/SEI layer, the pDMAMS-Li anode was analyzed before and after lithiation (i.e., after the first cycle using NMC cathode in the full cell) using time-of-flight secondary ion mass spectrometry (TOF-SIMS) and XPS with depth profiling. In TOF-SIMS analysis, pDMAMS is characterized by fragments of $C_{12}H_{16}^+$ released from the backbone and amine-containing $C_3H_8N^+$ and $C_8H_7N^+$ that are well maintained in pDMAMS-Li (FIGS, 4a, 4b, and 24). Because pDMAMS was swollen and accommodated by the SEI layer and electrolyte, the intensity of ionized pDMAMS species was reduced compared to that of non-cycling pDMAMS-Li after one cycle of lithiation. On the other hand, the reduced portion appears to have been replaced by the native SEI layer (FIGs. 4B and 4C). The coexistence of native SEI layer components and the pDMAMS structure confirms the miscibility and compatibility of the two structures, and is in good agreement with the results of the EIS data analysis (FIG. 3E). Further, the composite material also exhibited improved mechanical stability, similar to that of reinforced concrete (FIG. 3H) (wherein, the pDMAMS can be explained by corresponding the pDMAMS to "rebar" and the native SEI layer to "concrete body", FIG. 4G). The native SEI layer generally consists of a multi-granular structure with an inorganic layer adjacent to the electrode and a layer rich in organic material toward the outside, but it was confirmed that the SEI layer formed in the pDMAMS structure is more homogeneous, with the outer layer being richer in inorganic species, namely $LiF^+$ and $PF2^+$, instead of $CH_2Li^+$ and other organic components.

The structural composition of the SEI layer was further investigated using XPS in depth profiling mode. As a result, the native SEI layer on bare lithium showed a typical composition of an organic outer layer and an inorganic inner layer with markedly abundant $Li_2O$ (FIGs. 4D, 4H, and 25). However, the organic and inorganic components of the composite layer composed of native SEI and pDMAMS were largely homogenized, which is due to the excellent miscibility of the pDMAMS and native SEI layers (FIGs. 4E, 4F, 4I, 26, 27, and 28).

In particular, the $Li_2O$ component completely disappeared in the SEI layer formed on the pDMAMS structure. Such inhibition of $Li_2O$ formation is because the miscibility between pDMAMS and $Li_2O$ was low, and pDMAMS prevented further decomposition of lithium carbonate into $Li_2O$ and LiF (FIG. 4I). Another mechanism is that some tertiary amine groups at the ends of the pDMAMS polymer branches electrochemically react with DEC to form quaternary ammonium cations and carbonate ions (FIGs. 27, 28, and 29). The resulting quaternary ammonium cationic polymer (poly(vinylbenzyl trimethylammonium carbonate), pVBTMAC) effectively trap and preserve carbonate anions and other beneficial SEI components, with the side chain functional groups constituting one of the key precursors for the synthesis of selective ion exchange polymers. Further, the partially tetramolecularized poly(DMAMS-co-VBTMAC) layer selectively filters lithium ions from the dissolution shell and can only pass through the 3S layer, which results in a high tLi+ value (0.95). It should be noted that the quaternization reaction always involves an electrochemical reaction (FIG. 30). The slightly higher interface resistance of pDMAMS-Li (60 Ω) than that of bare-Li (55 Ω, FIGs. 3D and 3E) can be confirmed by the fact that $Li_2CO_3$ is more insulating than LiF and $Li_2O$, which is also consistent with the $Li_2CO_3$-rich composition of the SEI layer formed around the pDMAMS layer. These results also suggest that inorganic and crystalline $Li_2O$ has heterogeneous multicomponent characteristics with grain boundaries rich in the SEI layer, which may be the main factor in reducing the mechanical and chemical stability. This corresponds to a different perspective from the role of $Li_2O$ in the conventionally known SEI layer. The uniform, $Li_2O$-free pDMAMS-SEI composite layer provides flexibility and durability to the Li/SEI interface so that it can withstand large volume changes due to the formation of Li metal and dendrites (FIG. 3H). Further, the homogeneous SEI layer without $Li_2O$ improves the adhesion between the Li surface and the pDMAMS layer, which results in the mechanical properties and electrochemical stability of the Li/SEI/pDMAMS interface. The SEI layer structurally reinforces the 3S layer, similar to the way rebar reinforces concrete, and physically inhibits the swelling of the SEI layer. Through such a strengthening mechanism, the principles of low polarization in lithium-lithium symmetric cells, low interface resistance in the full cell, and extended battery life can be explained.

In an exemplary embodiment, the polymer protective thin-film layer may have a thickness in the range of 10 to 500 nm. Although it has been confirmed that lithium ions can permeate the 3S layer, the thickness needs to be optimized taking practical considerations into account. If the thickness is too thick, it reduces lithium flux, but if the thickness is too thin, it increases the likelihood of physical damage (e.g., burns, tears, holes, creases, etc.). Therefore, cells made of symmetric and full pDMAMS-Li ranging from 10 nm to 500 nm were evaluated, and in particular, it was confirmed that the 100 nm 3S layer provided the best cycling performance (FIGs. 5A, 5B, and 5C). For thinner 3S layers (less than 50 nm), the pDMAMS layer could not fully accommodate the native SEI layer and thus could not withstand the formation of Li dendrites and dead Li, as seen in the reduced double peak potential compared to bare Li (Fig. 5C). On the other hand, when the 3S layer was much thicker than 100 nm, the interface resistance increased and the initial specific capacity decreased (FIGs. 5B, 5D, 5E, and 5F). Furthermore, the thicker the layer, the more difficult it is to achieve complete swelling, so that the unswelled region was located at a lower end of the layer to reduce the usability of the 3S layer (FIGs. 5C and 31). This increases overall cell resistance and reduces cell performance. Further, the transference number of 300 nm pDMAMS-Li (0.63) is significantly reduced than that of 100 nm pDMAMS-Li (0.95), showing that complete swelling of the pDMAMS layer is required to provide high lithium ion flux (FIG. 32).

In conclusion, the present inventors report a novel 3S nanolayer formed directly onto a Li metal anode by the iCVD method. The 3S layer prepared from pDMAMS shows satisfactory swelling behavior in the presence of carbonate electrolyte. The formed electrolyte solbogel is homogeneous in the swollen structure and can host a native SEI layer without $Li_2O$, thereby providing high lithium ion transference values with low DC ionic conductivity (Fig. 5G, Table 4) and low interfacial resistance through strong interfacial adhesion, which may exhibit mechanical stability and stable electrochemical reaction. In particular, pDMAMS-Li with an optimal thickness of 100 nm showed a cycle life extension of 550% in a symmetric cell and 600% in a full cell using a high-load NMC cathode compared to the case of bare lithium metal. Table S4 summarizes the ionic conductivity, lithium transfer number and cycling performance data.

Based on the research results, the present inventors established the ideal criteria required for a swollen soft scaffold layer (Fig. 5H). First, the 3S layer must provide sufficient free volume which can be properly swelled by the battery electrolyte to facilitate lithium ion transport. Second, the electrolyte solvogel must be thermodynamically miscible with the native SEI layer. Third, the thickness of the 3S layer should be approximately 100 nm to minimize cellular resistance and fully accommodate the native SEI layer. Fourth, the 3S layer must be chemically and electrochemically inert over the large voltage range of high-voltage anode batteries. Fifth, the layer must be flexible and mechanically strong to withstand large volume changes in lithium metal. Finally, the adhesion of the 3S layer on the Li surface must be strong enough to suppress the formation of Li dendrites or dead Li. In particular, since the 3S layer and Li must maintain close adhesion, complete stripping of the Li metal down to copper is not desirable. Since the 3S layer formation method using iCVD supports a roll-to-roll process that supports especially commercial-scale production, it can also be widely applied to other metal battery systems (e.g., sodium, potassium, zinc, magnesium, aluminum, etc.).

In another embodiment of the present disclosure, there is provided a secondary battery comprising: an anode, which is the above-mentioned electrode for a lithium metal battery; a cathode; and an electrolyte layer between the cathode and the anode, wherein the anode includes a solid electrolyte interphase layer formed on the surface.

In an exemplary embodiment, the solid electrolyte interphase layer may be a $Li_2O$-free SEI layer. Wherein the $Li_2O$-free SEI layer may not substantially contain $Li_2O$ on the SEI layer. For example, when the electrolyte-swellable polymer is pDMAMS, the miscibility between pDMAMS and $Li_2O$ is low, and pDMAMS prevents lithium carbonate from further decomposing into $Li_2O$ and LiF, which may result in the formation of a $Li_2O$-free SEI layer. By substantially not containing $Li_2O$ on the SEI layer, it can have flexibility and durability against volume changes due to the formation of dendrites. On the other hand, in the lithium secondary battery of other embodiments, the above-mentioned cathode may be manufactured by dispersing and mixing the cathode active material, a binder, and a conductive material in a dispersion medium (solvent) to form a slurry, coating the slurry onto the cathode current collector, followed by drying and rolling. At this time, the dispersion medium may be NMP(N-methyl-2-pyrrolidone), DMF(dimethyl formamide), DMSO(dimethyl sulfoxide), ethanol, isopropanol, water, and mixtures thereof, but is not necessarily limited thereto.

The cathode active material is not particularly limited as long as it is a material capable of reversibly intercalating and de-intercalating lithium ions, and examples thereof include a lithium metal composite oxide containing at least one metal element selected from the group consisting of Co, Mn, Ni, W, Cu, Fe, V, Cr, Ti, Zr, Zn, Al, In, Ta, Y, La, Sr, Ga, Sc, Gd, Sm, Ca, Ce, Nb, Mg and Mo.

More specifically, a compound represented by any one of the following formulas can be used as the cathode active material. $Li_aA_{1-b}R_bD_2$(wherein, $0.90 \le a \le 1.8$ and $0 \le b \le 0.5$); $Li_aE_{1-b}R_bO_{2-c}D_c$(wherein, $0.90 \le a \le 1.8$, $0 \le b \le 0.5$, and $0 \le c \le 0.05$); $LiE_{2-b}R_bO_{4-c}D_c$(wherein, $0 \le b \le 0.5$, $0 \le c \le 0.05$); $Li_aNi_{1-b-c}Co_bR_cD_a$(wherein, $0.90 \le a \le 1.8$, $0 \le b \le 0.5$, $0 \le c \le 0.05$ and $0 < \alpha \le 2$); $Li_aNi_{1-b-c}Co_bR_cO_{2-\alpha}Z_\alpha$(wherein, $0.90 \le a \le 1.8$, $0 \le b \le 0.5$, $0 \le c \le 0.05$ and $0 < \alpha < 2$); $Li_aNi_{1-b-c}Co_bR_cO_{2-\alpha}Z_2$(wherein, $0.90 \le a \le 1.8$, $0 \le b \le 0.5$, $0 \le c \le 0.05$ and $0 < \alpha < 2$); $Li_aNi_{1-b-c}Mn_bR_cD_\alpha$(wherein, $0.90 \le a \le 1.8$, $0 \le b \le 0.5$, $0 \le c \le 0.05$ and $0 < \alpha \le 2$); $Li_aNi_{1-b-c}Mn_bR_cO_{2-\alpha}Z_\alpha$(wherein, $0.90 \le a \le 1.8$, $0 \le b \le 0.5$, $0 \le c \le 0.05$ and $0 < \alpha < 2$); $Li_aNi_{1-b-c}Mn_bR_cO_{2-\alpha}Z_2$(wherein, $0.90 \le a \le 1.8$, $0 \le b \le 0.5$, $0 \le c \le 0.05$ and $0 < \alpha < 2$); $Li_aNi_bE_cG_dO_2$(wherein, $0.90 \le a \le 1.8$, $0 \le b \le 0.9$, $0 \le c \le 0.5$ and $0.001 \le d \le 0.1$); $Li_aNi_bCo_cMn_dGeO_2$(wherein, $0.90 \le a \le 1.8$, $0 \le b \le 0.9$, $0 \le c \le 0.5$, $0 \le d <0.5$ and $0.001 \le e \le 0.1$); $Li_aNiG_bO_2$(wherein, $0.90 \le a \le 1.8$ and $0.001 \le b \le 0.1$); $Li_aCoG_bO_2$(wherein, $0.90 \le a \le 1.8$ and $0.001 \le b \le 0.1$); $Li_aMnG_bO_2$(wherein, $0.90 \le a \le 1.8$ and $0.001 \le b \le 0.1$); $Li_aMn_2G_bO_4$(wherein, $0.90 \le a \le 1.8$ and $0.001 \le b \le 0.1$); $QO_2$; $QS_2$; $LiQS_2$; $V_2O_5$; $LiV_2O_5$; $LiTO_2$; $LiNiVO_4$; and $Li_{(3-f)}J_2(PO_4)_3$($0 \le f \le 2$).

In the above formulas, A is Ni, Co, Mn or a combination thereof; R is Al, Ni, Co, Mn, Cr, Fe, Mg, V, or a combination thereof; D is O, F, S, P or a combination thereof; E is Co, Mn or a combination thereof; Z is F, S, P or a combination thereof; G is Al, Cr, Mn, Fe, Mg, La, Ce, V or a combination thereof; Q is Ti, Mo, Mn or a combination thereof; T is Cr, V, Fe, Sc, Y or a combination thereof; and J is V, Cr, Mn, Co, Ni, Cu or a combination thereof.

In addition, the cathode may further include a binder and a conductive material in addition to the cathode active material described above. The binder is a component assisting in binding between the cathode active material and the conductive material, and in binding with the current collector. Examples of the binder may include at least one selected from the group consisting of polyvinylidene fluoride(PVdF), polyvinylidene fluoride-polyhexafluoropropylene copolymer(PVdF/HFP), polyvinyl acetate, polyvinyl alcohol, polyvinyl ether, polyethylene, polyethylene oxide, alkylated polyethylene oxide, polypropylene, polymethyl(meth)acrylate, polyethyl(meth)acrylate, polytetrafluoroethylene(PTFE), polyvinyl chloride, polyacrylonitrile, polyvinylpyridine, polyvinylpyrrolidone, styrene-butadiene rubber, acrylonitrile-butadiene rubber, ethylene-propylene-diene monomer(EPDM) rubber, sulfonated EPDM rubber, styrene-butylene rubber, fluororubber, carboxymethylcellulose(CMC), starch, hydroxypropyl cellulose, regenerated cellulose, and mixtures thereof, but are not necessarily limited thereto.

The binder may be included in an amount of 1 to 50% by weight, or 3 to 15 parts by weight, based on 100 parts by weight of the total weight of the cathode. As a result, adhesion between the cathode active material and the current collector, and capacity characteristics of the secondary battery can be maintained excellently.

Further, the conductive material included in the cathode is not particularly limited as long as it does not cause side reactions in the internal environment of the lithium secondary battery and does not cause chemical changes in the battery but has excellent electrical conductivity. The conductive material may typically be graphite or electrically conductive carbon, and may be, for example, but is not limited to, one selected from the group consisting of graphite such as natural graphite or artificial graphite; carbon black such as carbon black, acetylene black, Ketjen black, Denka black, thermal black, channel black, furnace black, lamp black, and summer black; carbon-based materials whose crystal structure is graphene or graphite; electrically conductive fibers such as carbon fibers and metal fibers; carbon fluoride; metal powders such as aluminum powder and nickel powder; electrically conductive whiskers such as zinc oxide and potassium titanate; electrically conductive oxides such as titanium oxide; electrically conductive polymers such as polyphenylene derivatives; and a mixture of two or more thereof.

The conductive material may be included in an amount of 0.5 to 50 parts by weight, or 1 to 30 parts by weight, based on 100 parts by weight of the total weight of the cathode. Thereby, electrochemical properties such as conductivity and capacity of the cathode and lithium secondary battery can be maintained excellently.

In addition, a filler may be optionally added to the cathode as a component for inhibiting the expansion of the cathode. Such a filler is not particularly limited as long as it can inhibit the expansion of the electrode without causing chemical changes in the battery, and examples thereof may include olefinic polymers such as polyethylene and polypropylene; fibrous materials such as glass fibers and carbon fibers.

Further, the cathode current collector may be platinum(Pt), gold(Au), palladium(Pd), iridium(Ir), silver(Ag), ruthenium(Ru), nickel(Ni), stainless steel(STS), aluminum(Al), molybdenum(Mo), chromium(Cr), carbon(C), titanium(Ti), tungsten(W), ITO(In doped $SnO_2$), FTO(F doped $SnO_2$), or an alloy thereof, or aluminum(Al) or stainless steel whose surface is treated with carbon(C), nickel(Ni), titanium(Ti) or silver(Ag), or the like, but is not necessarily limited thereto. The shape of the cathode current collector may be in the form of a foil, a film, a sheet, a punched form, a porous body, a foam or the like.

On the other hand, a liquid electrolyte included in the electrolyte layer may include a non-aqueous organic solvent and a lithium salt. The kind of a non-aqueous organic solvent that can be used herein is not particularly limited, and any organic solvent that has been known to be applicable to the electrolyte of a lithium ion battery can be used. Examples of such organic solvents include at least one selected from the group consisting of a carbonate-based solvent, an ether-based solvent, a nitrile-based solvent, a phosphate-based solvent, and a sulfone-based solvent.

More specifically, the carbonate-based solvent may include dimethyl carbonate, diethyl carbonate, dipropyl carbonate, ethylene carbonate, propylene carbonate, butylene carbonate, fluoroethylene carbonate, methyl propyl carbonate, ethyl methyl carbonate, ethyl propyl carbonate, methyl(2,2,2-trifluoroethyl)carbonate, or the like, and the phosphate-based solvent may include trimethyl phosphate, triethyl phosphate, 2-(2,2,2-trifluoroethoxy)-1,3,2-dioxaphosphorane 2-oxide, or the like.

Further, the ether-based solvent may include dibutyl ether, tetraglyme, diglyme, dimethoxyethane, or a tetrahydrofuran derivative such as 2-methyltetrahydrofuran, and the nitrile-based solvent may include succinonitrile, adiponitrile, sebaconitrile, acetonitrile, propionitrile, or the like. Further, the sulfone-based solvent may include dimethyl sulfone, ethylmethyl sulfone, sulforane, or the like.

In an exemplary embodiment, the electrolyte may be a liquid electrolyte or a solid electrolyte. For example, the liquid electrolyte is a non-aqueous electrolyte, and may include any one or a mixture of two or more selected from the group consisting of cyclic carbonate compounds of ethylene carbonate(EC), propylene carbonate(PC), 1,2-butylene carbonate, 2,3-butylene carbonate, 1,2-pentylene carbonate, 2,3-pentylene carbonate, vinylene carbonate, vinylethylene carbonate, fluoroethylene carbonate(FEC), and linear carbonate compounds of dimethyl carbonate(DMC), diethyl carbonate(DEC), dipropyl carbonate, ethyl methyl carbonate(EMC), methylpropyl carbonate and ethylpropyl carbonate. In addition, the solid electrolyte may include $Li_{10}GeP_2S_{12}$(LGPS), $Li_2SiP_2S_5Cl$(LSPSCl), LPS, $LiLaTiO_4$(LLTO), $Li_7La_3Zr_2O_{12}$(LLZO), $Li_{2+2x}Zn_{1-x}GeO_4$(LISICON), $Na_{1+x}Zr_2Si_xP_{3-x}O_{12}$(NASICON, 0<x<3) and a combination thereof.

However, in terms of superior mechanical properties and safety, etc. of the composite electrolyte membrane, it is preferable to use, as the organic solvent, a carbonate-based solvent, a sulfone-based solvent, or a phosphate-based solvent that can be at least partially cured together with the crosslinked polymer and can exhibit flame retardant properties. Further, as the organic solvent, it is more preferable to use a solvent that exhibits low volatility under curing conditions for forming the crosslinked polymer, for example, under heat curing conditions of 60 to 80°C.

Meanwhile, as the lithium salt dissolved or dispersed in the organic solvent, any lithium salt that has been previously known to be applicable to the electrolyte of a lithium secondary battery, for example, at least one selected from the group consisting of LiFSI(lithium bis(fluorosulfonyl)imide), LiTFSI (lithium bis(trifluoromethanesulfonyl)imide), LiCl, LiBr, LiI, $LiClO_4$, $LiBF_4$, $LiPF_6$, $LiB_{10}Ch_{10}$, $LiCF_3SO_3$, $LiCF_3CO_2$, $LiC_4BO_8$, $LiAsF_6$, $LiSbF_6$, $LiAlCl_4$, $CH_3SO_3Li$, $CF_3SO_3Li$, $(C_2F_5SO_2)_2NLi$, $(CF_3SO_2)_3CLi$, chloroborane lithium, lithium lower aliphatic carboxylate having 4 or less carbon atoms, lithium 4-phenyl borate and lithium imide may be used.

This lithium salt may be included in the organic solvent of the liquid electrolyte at a concentration of 0.8 M to 4.0 M, or 1.0 M to 2.0 M, so that the composite electrolyte membrane of one embodiment can exhibit excellent thermal stability and ionic conductivity.

Meanwhile, in the lithium secondary battery of the other embodiments, an electrolyte layer may be disposed between the anode and the cathode, for example, in the form of a membrane or film with a layered structure. In this case, the electrolyte layer may also serve as a separator (that is, it serves to electrically insulate the anode and the cathode and simultaneously to allow lithium ions to pass through). At this time, the electrolyte layer may be included in the secondary battery by being coated and attached to one surface of the cathode or the anode in the form of a thin film. Further, the electrolyte layer may be independently disposed between the cathode and the anode. In addition, the lithium secondary battery of the other embodiments may be a semi-solid battery that concurrently uses a liquid electrolyte and a solid electrolyte.

In addition, when a porous separator is added to the electrolyte layer in the lithium secondary battery, olefin-based polymers such as polyethylene and polypropylene, glass fibers or the like may be used in the form of sheets, multilayers, microporous films, woven fabrics, nonwoven fabrics or the like as the separator, but are not necessarily limited thereto. However, it may be preferable to use a porous polyethylene or a porous glass fiber nonwoven fabric as the separator, and it may be more desirable to apply porous glass fiber non-woven fabric as a separator. The separator may be an insulating thin film with high ion permeability and mechanical strength, and the pore diameter of the separator may generally range from 0.01 to 10 μm, and the thickness thereof may generally range from 5 to 300 μm, but are not limited thereto.

Meanwhile, the lithium secondary battery of the other embodiments may be manufactured according to a conventional method in the art. For example, the lithium secondary battery can be manufactured by forming a composite electrolyte membrane or the like between the cathode and the anode, and optionally adding a porous separator.

The lithium secondary battery is not only applicable to a battery cell used as a power source of a small device but also particularly suitably usable as a unit cell of a battery module which is a power source of a medium and large-sized device.

In another embodiment of the present disclosure, there is provided a method for manufacturing the above-mentioned electrode for a lithium metal battery, the method comprising: forming a polymer protective thin-film layer on an anode current collector by an initiated Chemical Vapor Deposition (iCVD) process using an initiator, wherein the polymer protective thin-film layer includes an electrolyte-swellable polymer, and the electrolyte-swellable polymer is formed from one or more monomers selected from the group consisting of dimethylaminomethyl styrene, ethylene glycol dimethacrylate, acrylic acid, 2-(perfluorohexyl)ethyl acrylate and divinylbenzene.

In an exemplary embodiment, the initiated chemical vapor deposition process using the initiator may be performed using an initiator including tert-butyl peroxide (TBPO).

In an exemplary embodiment, the initiated chemical vapor deposition process using the initiator may be performed at a deposition rate of 2 nm/min to 14 nm/min. For example, the deposition rate may range from 2 to 12 nm/min.

## BRIEF DESCRIPTION OF THE DRAWINGS

Figs. 1A to 1I relates to an electrolyte-swellable iCVD polymer nanolayer formed on Li metal, wherein FIG. 1A shows a schematic diagram of a swellable-soft scaffold formed onto a Li metal anode for strengthening the SEI layer, and FIG. 1B shows a schematic diagram of an iCVD polymer nanolayers formed directly onto Li metal. FIG. 1C shows the chemical structures of pDMAMS, pC6FA, pDVB, pAA and pEGDMA. FIG. 1D shows a cross-sectional focused ion beam scanning electron microscopy (FIB-SEM) image of Li metal coated with a 100 nm thick pDMAMS layer (scale bar: 500 nm). FIG. 1E shows the SEM image of bare Li. FIG. 1F shows the SEM image of 100nm pDMAMS-Li. FIG. 1G shows the contact angle for EC:DEC (3:7, v/v) mixture of a sample coated with iCVD polymer onto Si substrate. FIG. 1H shows the results of ellipsometry analysis of 100 nm pDMAMS-Si swollen with an electrolyte solvent (where the refractive index(n) of the EC:DEC mixture is 1.39). FIG. 1I shows the refractive index difference and swelling ratio of the iCVD polymer film before and after swelling with electrolyte solvent.

FIGs. 2A to 2H relates to the voltage profiles of symmetric bare-Li and 100 nm iCVD polymer-Li symmetric cells. FIG. 2A inserted images are images of the Li anode after the 10th and 50th cycles of pDMAMS-Li. FIG. 2B is an enlarged view of the voltage profiles for the 2nd, 10th, 100th and 200th cycles in FIG. 2A. FIGS. 2C and 2D show the results of steady-state current measurements of symmetric bare-Li and pDMAMS-Li (100 nm) cells under 10 mV polarization for 1 hour in 1 cycle. FIG. 2E shows the molecular structure of poly(DMAMS-co-C6FA). FIG. 2F shows the content ratio (DMAMS:C6FA) of poly(DMAMS-co-C6FA)-Li sample. FIG. 2G shows the voltage profile of a symmetric poly(DMAMS-co-C6FA)-Li(100 nm) cell. FIG. 2H enlarges and shows the voltage profile of the 10th cycle in FIG. 2G.

FIGs. 3A to 3H relates to the electrochemical behavior of 3S-Li‖NMC battery, wherein FIG. 3A shows the cycling performance and coulombic efficiency of 100 nm poly(DMAMS-co-C6FA)-Li‖NMC batteries having different DMAMS/C6FA ratios (charge and discharge current densities are fixed at 2 mA $cm^{-2}$ after a formation cycle of 0.1 mA $cm^{-2}$ at 20°C). FIGs. 3B and 3C show the charge/discharge profiles of bare lithium and 100nm pDMAMS-Li‖NMC batteries at 1st to 100th cycle. FIGs. 3D and 3E show Nyquist plots of symmetric bare lithium and 100 nm pDMAMS-Li cells at 0 to 100th cycle. FIG. 3F shows images of bare lithium, pC6FA-Li, and pDMAMS-Li after the 10th cycle. FIG. 3G shows the rate performance of a 100nm poly(DMAMS-co-C6FA)-Li‖NMC battery (1C=2mA $cm^{-2}$). FIG. 3H is a SEM image of the pDMAMS layer, showing the inhibition of propagation of Li dendrites (scale bar: 50 μm).

FIGs. 4A to 4C show the results of TOF-SIMS analysis for non-cycling 100 nm pDMAMS-Li, resourced 100 nm pDMAMS-Li, and resourced bare-Li anode via depth profiling. FIGs. 4D to 4F show the results of XPS analysis of non-cycling 100 nm pDMAMS-Li, lithiated 100 nm pDMAMS-Li and lithiated bare-Li anodes with depth profiling applied. FIG. 4G shows a schematic diagram of the native SEI layer housed in a swollen pDMAMS layer. FIG. 4H and 4I show XPS spectra for C1s and O1s data of lithiated bare Li and 100 nm pDMAMS-Li with depth profiling applied.

FIGs. 5A to 5H relates to the electrochemical performance of 3S-Li cells with different layer thicknesses, wherein FIG. 5A shows the voltage profile of a symmetrical pDMAMS-Li cell with pDMAMS layers ranging from 10 nm to 500 nm. FIG. 5B shows the cycling performance and coulombic efficiency of pDMAMS-Li‖NMC batteries with different layer thicknesses (charge and discharge current densities are fixed at 2 mA $cm^{-2}$ after formation cycle at 0.1 mA $cm^{-2}$). FIG. 5C is an enlarged view of the voltage profile of FIG. 5A. FIG. 5D shows the initial charge/discharge profiles of bare-Li and pDMAMS-Li‖NMC batteries with different pDMAMS layer thicknesses. FIGs. 5E and 5F show Nyquist plots of pDMAMS-Li‖NMC batteries at the initial and 50th cycle with different thicknesses. FIG. 5G is a summary comparing the lithium ion transference number and ionic conductivity in recent studies. FIG. 5H shows a schematic diagram of the 3S strategy.

FIGs. 6A and 6B illustrate a schematic diagram of the challenges of lithium metal anodes, wherein FIG. 6A shows a schematic diagram showing the general interface problems of lithium metal anodes. FIG. 6B shows a schematic diagram showing the limitations of the artificial SEI layer approach.

FIGs. 7A and 7B illustrate the results of cross-sectional focused ion beam scanning electron microscopy (FIB-SEM) analysis, wherein FIG. 7A shows FIB-SEM images of Li foils each coated with a 50 nm layer of poly (dimethyl amino methyl styrene) (pDMAMS) (scale bar, 500 nm). FIG. 7B shows FIB-SEM images of Li foils each coated with a 200 nm layer of pDMAMS (scale bar, 500 nm).

FIG. 8 illustrates Fourier transform infrared (FT-IR) spectroscopy results of monomers and iCVD-polymers in embodiments of the present disclosure.

FIG. 9 illustrates images of iCVD polymer-coated lithium metal exposed to ambient air at 25°C and relative humidity (RH) of 20%~35% for 0 hours, 1 hour, 2 hours, and 24 hours.

FIGs. 10A to 10D show the results of ellipsometry analysis of pAA-Si, pEGDMA-Si, pDVB-Si and pC6FA-Si swollen by the battery electrolyte solvent.

FIGs. 11A and 11B show the topology of bare and iCVD-coated lithium anodes after cycling, wherein FIG. 11A shows SEM images of bare lithium after the 1st, 10th, and 100th cycles. FIG. 11B shows SEM images of pDMAMS-Li after the 1st, 10th, and 100th cycle.

FIG. 12A shows the results of steady-state current measurements of a symmetrical bare-lithium cell under 10 mV polarization for 1 hour at the 50th cycle. FIG. 12B shows the results of steady-state current measurements of a symmetrical pDMAMS-Li (100 nm) cell under 10 mV polarization for 1 hour at the 50th cycle. FIG. 12C shows the results of electrochemical impedance spectroscopy(EIS) measurements of a symmetric bare-Li cell at open circuit voltages in the range of 100 mHz~1 MHz with an amplitude of 10 mV. FIG. 12D shows the results of EIS measurements of a symmetrical pDMAMS-Li (100 nm) cell at open circuit voltages in the range of 100 mHz to 1 MHz with an amplitude of 10 mV.

FIGs. 13A and 13B are related to the ionic conductivity of the iCVD polymer nanolayer, wherein FIG. 13A shows a comparison of various 100 nm iCVD polymer layers measured by EIS. FIG. 13B shows (EIS) data measured by assembling the cells of stainless steel/iCVD polymer/stainless steel.

FIG. 14A shows the results of FT-IR spectroscopy. FIG. 14B shows X-ray photoelectron spectroscopy (XPS) illumination spectra. FIG. 14C shows high resolution (N1s) XPS spectra of pDMAMS, poly(DMAMS-co-C6FA) and pC6FA according to an embodiment of the present disclosure.

FIGs. 15A to 15C show the topology of pDMAMS homopolymer, poly(DMAMS-co-pC6FA) copolymer (pD2F1), and pC6FA homopolymer, comparing SEM images of pDMAMS-Li, pD2F1-Li and pC6FA-Li (scale bar, 50 $\mu$m).

FIG. 16 shows a FIB-SEM image of pC6FA-Li (scale bar, 400 nm).

FIGs. 17A, 17B, and 17C show a topological evaluation of pD2F1 after cycling, showing SEM images of pD2F1-Li after the 1st, 10th, and 100th cycles respectively (scale bar, 50 $\mu$m).

FIGs. 18A to 18F show an electrochemical plotting experiment results, wherein FIGs. 18A, 18B, 18C, 18D, 18E, and 18F show electrochemical plots of full cells of bare-Li, pC6FA-Li, pEGDMA-Li, pDVB-Li, pAA-Li, and pDMAMS-Li respectively, each using $LiNi_{0.6}Mn_{0.2}Co_{0.2}O_2$(NMC-622) cathode (Cells were charged to 4.0 V at 0.2C and then kept at progressively higher voltages for 10 hours up to 4.9 V).

FIGs. 19A, 19B, 19C, 19D, 19E, and 19F show results of cycling voltage-current experiments of bare lithium, pC6FA-Li, pEGDMA-Li, pDVB-Li, pAA-Li, pDMAMS-Li cells respectively at scan rates of 0.1, 0.2, 0.3, 0.5, and 1.0 mV $s^{-1}$.

FIGs. 20A to 20F show results of galvanostatic intermittent titration technique (GITT) and in-situ XPS analysis of NMC cathodes, wherein FIGs. 20A and 20B show typical GITT plots of bare lithium and pDMAMS-Li (100 nm) full cells using NMC 622, respectively. FIGs. 20C and 20D show the response resistance of bare-lithium and pDMAMS-Li (100 nm) cells in FIGs. 20A and 20B, respectively. FIGs. 20E and 20F show high-resolution N1s XPS spectra of NMC cathodes assembled with bare-lithium and pDMAMS-Li anodes.

FIG. 21 illustrates the equivalent circuit of the EIS analysis.

FIGs. 22A and 22B show the velocity capacity of a symmetric cell, wherein FIG. 22A shows the voltage profile of a symmetrical bare lithium cell at various current densities of 1, 2, 5, and 10 mA $cm^{-2}$ (1 mAh $cm^{-2}$) and FIG. 22B shows the voltage profile of a symmetric pDMAMS-Li (100 nm) cell at various current densities of 1, 2, 5, and 10 mA $cm^{-2}$ (1 mAh $cm^{-2}$).

FIGs. 23A to 23H show the full cell performance of iCVD polymer applied with NMC cathode, wherein FIG. 23A shows the cycling performance and coulombic efficiency of 100 nm pC6FA-Li, pEGDMA-Li, pDVB-Li, pAA-Li and pDMAMS-Li full cells using NMC 622 cathode (charge and discharge current densities are fixed at 0.1 mA $cm^{-2}$ and 2 mA $cm^{-2}$ after formation cycle at 25°C). FIGs. 23B, 23C, and 23D show the charge/discharge profiles of 100 nm pAA-Li, pEGDMA-Li, and pDVB-Li full cells using NMC at the 1st ~100th cycle respectively. FIGs. 23E, 23F, 23G, and 23H show the charge/discharge profiles of 100 nm pC6FA-Li and poly(DMAMS-co-C6FA)-Li full cells, e.g., pD2F1-Li, pD3F1-Li, abd pD7F2-Li, using NMC cathode at the $1^{st}$~100th cycle respectively.

FIGs. 24A and 24B show results of time-of- flight secondary ion mass spectrometry (TOF-SIMS), wherein FIG. 24A shows the results of TOF-SIMS analysis of non-cycling 300 nm pDMAMS-Li, and FIG. 24B shows TOF-SIMS analysis results of cycled 300 nm pDMAMS-Li.

FIG. 25 shows the results of XPS analysis of a non-cycling bare lithium anode through depth profiling.

FIGs. 26A and 26B show the results of XPS analysis of the pDMAMS-Li anode with depth profiling applied, wherein FIG. 26A shows the results of XPS analysis of non-cycling 300 nm pDMAMS-Li with depth profiling applied, and FIG. 26B shows the results of XPS analysis of a cyclic 300 nm pDMAMS-Li anode with depth profiling applied.

FIGs. 27A, 27B, and 27C show the N1s XPS spectrum of pDMAMS-Li with depth profiling applied, the XPS spectra of N1s data of lithiated bare lithium, lithiated pDMAMS-Li, and non-cycling pDMAMS-Li with depth profiling applied, respectively.

FIGs. 28A to 28E show the N1s XPS spectra of pDMAMS-Li with depth profiling, wherein FIG. 28A shows the illumination XPS spectrum of 100 nm pDMAMS-Li, FIG. 28B shows the high-resolution N1s XPS spectrum of 100 nm pDMAMS-Li, FIG. 28C shows the high-resolution C1s XPS spectrum of 100 nm pDMAMS-Li, FIG. 28D shows the XPS spectrum of N1s in pDMAMS-Li after the 50th cycle, and FIG. 28E shows the XPS spectrum of C1s of pDMAMS-Li after the 50th cycle.

FIG. 29 illustrates a schematic diagram of the proposed quaternization reaction between pDMAMS and diethyl carbonate(DEC) to form poly(DMAMS-co-VBTMAC).

FIGs. 30A to 30C show the results of NMR analysis of pDMAMS cultured in various solvents, wherein FIG. 30A shows the results of NMR analysis of pDMAMS, DEC and pDMAMS cultured in DEC solvent, FIG. 30B shows the NMR analysis results, showing the application of 3.0 ppm~3.5 ppm and 2.0 ppm~2.5 ppm of pDMAMS, DEC, and pDMAMS cultured in DEC solvent, and FIG. 30C shows the results of FT-IR analysis of pDMAMS, DEC, ethylene carbonate (EC):DEC (3:7, v/v) and pDMAMS cultured in solvent (*: tertiary amine (2764 $cm^{-1}$), **: C-N $(CH_3)_3$ (930 $cm^{-1}$~ 920 $cm^{-1}$).

FIG. 31A shows the results of ellipsometric analysis of 300 nm pDMAMS-Li swollen by electrolyte solvent. FIG. 31B shows the Nyquist plot of a 300 nm pDMAMS-Li‖NMC battery during 50 cycles. FIG. 31C shows the Nyquist plot of a 500 nm pDMAMS-Li| |NMC battery during 50 cycles.

FIGs. 32A to 32C show the transference number of a thick pDMAMS layer, wherein FIG. 32A shows the results of steady-state current measurements of a symmetric 300 nm pDMAMS-Li cell under 10 mV polarization for 1 hour at 1 cycle, FIG. 32B shows the results of steady-state current measurements of a symmetric 300 nm pDMAMS-Li cell under 10 mV polarization for 1 hour at 50 cycles, and FIG. 32C shows the results of EIS measurements of a symmetric 300nm (10nm) cell in the range 100mHz~1MHz at an open circuit voltage of 10mV amplitude.

**[DETAILED DESCRIPTION OF THE EMBODIMENTS]**

**Analysis method**

FT-IR characterization

The monomers and polymers synthesized by iCVD were characterized by Fourier transform infrared(FT-IR) spectroscopy. In FIG. 8, the peak in the blue region of 1637 $cm^{-1}$ ~ 1627 $cm^{-1}$ was derived only from the vinyl moiety of each monomer, and the peak intensity of the iCVD polymer was reduced compared to that of the monomer. The reduction in the vinyl peak in the spectrum indicates successful polymerization through the iCVD process. On the other hand, in FIG. 14A, the copolymerization of DMAMS and C6FA was confirmed by the tertiary aminomethyl peak at 2764 $cm^{-1}$ in the red region and the carbonyl peak at 1735 $cm^{-1}$ in the green region.

As the DMAMS content of poly(DMAMS-co-C6FA) increased, the peak intensity in the red region gradually strengthened, and the peak intensity in the green region weakened. The composition of each copolymer could be appropriately controlled by precisely controlling the flow rate of the monomer injected into the iCVD chamber (Table 1).

XPS peak deconvolution

The SEI component of the pDMAMS layer was investigated by X-ray photoelectron spectroscopy (XPS) depth profiling using an Ar cluster gun (10 keV). For precipitated bare Li and pDMAMS-Li, C1, O1, and N1, high-resolution spectra at various depths were obtained through Ar sputtering. For more accurate XPS deconvolution of the pDMAMS layer swollen by an electrolyte, irradiation scanning and high resolution of the pDMAMS were performed on a flat Si substrate. As can be seen in FIGs. 28A, 28B, and 28C, the peak at 399.25 eV in the N1s spectrum is C-N, and the peaks at 285.6 eV and 284.7 eV in the C1s spectrum correspond to C-N and C-C/C=C, respectively. After precipitation with bare lithium, the C1s spectrum resolves to organic components in the electrolyte, especially $Li_2CO_3$(290 eV), C-O-C(288.5 eV), C-O(286.8 eV), C-C(284.8 eV), and lithium carbide (R-Li) (283.5 eV) derived from ethylene carbonate (EC) (left side of FIG. 4H). On the other hand, the O1s spectrum shows the C-O-C related peaks of $ROCO_2Li$(533.5 eV), $Li_2CO_3$(532 eV) and LiOR(531.5 eV) associated with associated with the carbonate electrolyte and the inorganic $Li_2O$ (528 eV) of $LiPF_6$ salt (right side of FIG. 4H). As the etching time increased, the organic SEI component rapidly disappeared, and at the same time, the intensity of the inorganic SEI component increased. In the case of precipitated pDMAMS-Li, FIG. 4I shows the peaks of pDMAMS and organic electrolyte, except for R-Li where the EC is reduced and $Li_2O$ in the salt. In addition, despite the gradual surface etching, the precipitated pDMAMS-Li showed a uniform organic SEI component without significant decrease in the intensity of existing peaks or formation of other inorganic peaks. After the 50th cycle, the quaternized pDMAMS in the N1s spectrum showed a characteristic peak at 402.5 eV, corresponding to quaternary ammonium salt ($C-N^+(CH_3)_3$) (FIG. 28D).

NMR characterization

To confirm the reaction between pDMAMS and electrolyte, 1H nuclear magnetic resonance (NMR) spectra were recorded using a Bruker Avance Neo NanoBay 400 MHz NMR spectrometer at T = 298 K, and analyzed with Topspin 4.1.3 software on CentOS. For NMR sampling, the pDMAMS film deposited on the substrate was peeled off using a razor blade and collected in a vial. Deuterated chloroform($CDCl_3$) containing 0.03% tetramethylsilane(TMS) was used as the NMR solvent. The ratio between pDMAMS and electrolyte was adjusted to 1:10, an NMR solution was prepared at a mixture ratio of 5 mg per 1 ml of $CDCl_3$, and about 0.6 mL of the solution was transferred to a 5 mm NMR tube.

**Experimental Method**

Materials

Dimethylaminomethylstyrene (DMAMS, 90%, Acros, Belgium), 2-(perfluorohexyl)ethyl acrylate (C6FA, 98%, Shanghai Chuanbai Chemical, China), ethylene glycol dimethylacrylate (EGMDA, 98%, Sigma-Aldrich, USA), divinylbenzene (DVB, 80%, Sigma-Aldrich, USA), acrylic acid (AA, 99%, TCI, Japan) were respectively used as the monomer, and butyl peroxide (TBPO, 98%, Sigma-Aldrich, USA) was used as a thermal initiator.

Fabrication of iCVD polymer-Li

For iCVD polymer-Li, Li metal foil was punched and then functionalized using a customized iCVD reactor installed in a glove box under Ar atmosphere. Poly(dimethylaminomethylstyrene) (pDMAMS), poly[2-(perfluorohexyl) ethyl acrylate](pC6FA), poly(ethylene glycol dimethacrylate) (pEGDMA), polydivinylbenzene (pDVB), poly(acrylic acid) (pAA), and poly(DMAMS-co-C6FA) were synthesized, and conformally coated onto the Li metal anode through the iCVD process. The monomers, DMAMS, C6FA, EGDMA, DVB, AA, and the initiator, TBPO, were heated and vaporized to 50, 50, 65, 45, 35, and 25°C, respectively, and then added to the iCVD reactor. For polymerization applying single monomers in iCVD, the flow rates of DMAMS, C6FA, EGDMA, DVB, and AA were fixed at 0.82, 0.55, 0.33, 2.50, and 1.43 sccm, respectively, and TBPO was fixed at 0.59, 0.30, 0.44, 0.89, and 0.74 sccm, respectively. The substrate temperature was changed from 30°C to 40°C, and the corresponding chamber pressure was adjusted from 100mTorr to 300mTorr to prevent excessive adsorption of reactants, such as condensation on the surface of lithium metal. The deposition rates of pDMAMS, pC6FA, pEGDMA, pDVB and pAA are 2.4, 12.5, 4.0, 6.1 and 8.0 nm $min^{-1}$, respectively. For the copolymerization of poly(DMAMS-co-C6FA), Pm/Psat and the surface concentration of each comonomer were controlled by the flow rate of DMAMS and C6FA at fixed chamber pressure and substrate temperature. In all iCVD processes, the filament temperature was maintained at 140°C to initiate vapor phase polymerization.

Characterization of iCVD polymer films and SEI layers

Polymerization of each monomer was chemically confirmed by absorbance mode of Fourier transform infrared (FT-IR) spectroscopy (ALPHA FT-IR, Bruker Optics). Structural compositions, including the DMAMS ratio of DMAMS and C6FA copolymers, were obtained through multipurpose X-ray photoelectron spectroscopy (Sigma Probe, Thermo VG Scientific) using a microfocus monochromated Al source (1486.7 eV). The electrolyte contact angle of the iCVD coating polymer was measured by a contact angle analyzer (Phoenix 150, SEO). Cross-sectional images of the iCVD-coated polymer on lithium metal were obtained using a high-resolution focused ion beam (FIB, Helios G4 FX, Thermo Fisher). The surface morphology of lithium metal, including dendrites and SEI layers, was observed using ultra-high resolution field emission scanning electron microscopy (UHR FE-SEM, SU8230, Hitachi). The iCVD polymer film coated on the Si wafer and the lithium metal oxidation process were optically imaged using a digital camera (ILCE-7M3, SONY). Imaging for lithium metal oxidation was performed every hour until 6 hours, and thereafter every 6 hours until 1 day after air exposure. To identify the pDMAMS-SEI layer, depth profiling was performed using in-situ X-ray photoelectron spectroscopy (In-situ XPS, Axis-Supra, Kratos) and time-of-flight secondary ion mass spectrometry (TOF-SIMS, TOF.SIMS 5, ION-TOF). In-situ XPS was used to investigate the component and bonding state of the SEI layer at $1 \times 10^{-9}$ torr using an Al K$\alpha$ radiation source at 15 kV operation. XPS depth profiling was performed by etching with Ar clusters (10 keV). In addition, TOF-SIMS was performed to analyze the chemical component of the SEI layer in a vacuum chamber of $5 \times 10^{-9}$ mbar. The etched region of 300 $\mu$m $\times$ 300 $\mu$m and the analysis region of 100 $\mu$m $\times$ 100 $\mu$m were sputtered and profiled with Ar cluster (5 keV) and $Bi_3^+$ (60 keV) ion beams, respectively. To prevent oxidation by air, lithium metal was sealed in an aluminum pouch welded inside an Ar-filled glove box before all characterization.

Elliptical measurement characterization of iCVD polymer films

The refractive index(n) and thickness(d) of all iCVD polymer films on Si substrates were obtained through spectroscopic ellipsometry (M2000U mounted on the auto-angle ESM-300 base, J. A. Woollam). The swelling ratio of the polymer film in the organic electrolyte was measured in a liquid cell (5mL Heated Liquid CellTM, J. A. Woollam), which is an optical attachment of an ellipsometer under constant temperature conditions of 25°C, and $d_{pristine}$ and $d_{swollen}$ are the thickness before and after injection of electrolyte into the liquid cell, respectively.

$$Swelling\ ratio\ (\%) = \frac{d_{swollen} - d_{pristine}}{d_{pristine}} \times 100$$

Specifically, spectroscopic elliptical measurements started by aligning at the air/film interface at a nominal angle of 75°, and then the thickness and refractive index of the deposited film in ambient air at optical wavelengths of 400 nm ~ 800 nm was measured. All profile data were fitted by a Cauchy model. The dispersion of the refractive index is a function of wavelength and is described as follows.

$$n = A + \frac{B}{\lambda^2} + \frac{C}{\lambda^4}$$

wherein $\lambda$ is the wavelength of the beam, A, B, and C are optical constants derived through data fitting. In order not to physically deviate from the fitting, the ranges of the constants were set to A > 0, 0 < B < 2, and C = 0.

For observing the swelling behavior, a 25 nm $SiO_2$ calibrated Si wafer fixed in an electrolyte-filled cell was used to confirm the liquid perimeter model at the liquid/solid interface. The optical constant of the EC:DEC (3:7, v/v) electrolyte was allowed to be consistent with previously reported literature values. It was assumed that the refractive index gradient occurs in the direction perpendicular to the plane of the polymer thin film when the thin film swells after the electrolyte is infiltrated into the thin film. The graded layer was divided into five layers and each layer was analyzed as having an individual refractive index. All model fits were performed within a mean square error (MSE) of less than 5 using CompleteEASE 6 software (J.A. Woollam).

Electrochemical measurements

For all electrochemical tests, a 2032-type coin cell containing 75 μL of 1.0 M $LiPF_6$ in EC:DEC (3:7, v/v) electrolyte (Panax Etec) was used. The amount of electrolyte required to swell the entire electrolyte is less than 1.2% (less than 700 nm for pDMAMS), which is a small amount for cell operation and falls within the experimental error tolerance. The separator used was polypropylene-polyethylene-polypropylene (25 μm, Celgard). High-purity Li foil (200μm, 99.95% (Shinhyung E&T)) and $LiNi_{0.6}Mn_{0.2}Co_{0.2}O_2$(NMC 622) sheets (94% active material, Welcos) were punched into 1 $cm^2$ and used as bare-Li symmetric cell and bare Li. ||NMC full cell. Galvanostatic cycling measurements of Li-Li symmetric cells were performed at a current density of 1 mA $cm^{-2}$ (1 mAh $cm^{-2}$). The Li||NMC full cell was cycled at 1 C (2 mA $cm^{-2}$, 177 mA $g^{-1}$) within a voltage window of 3.0 V~4.2 V after the first activation cycle at C/20 charge/discharge. Electrical impedance spectroscopy (EIS) measurements were performed on a ZIVE MP1 system. Impedance data for the lithium electrode were calculated by fitting a Nyquist plot to an equivalent circuit consisting of resistance(R) and constant phase elements(CPE) using ZIVE's ZMAN software. Cycling tests for symmetric cells and full cells were performed on a Wonatech battery system in an environmental chamber. EIS measurements were performed in the frequency range of 100 mHz~1 MHz with an amplitude of 10 mV. The ionic conductivity of the iCVD-coated polymer film was measured using the same device by assembling a stainless steel/iCVD-coated polymer film/stainless steel cell. Ionic conductivity was calculated by Nyquist plot using the following Equation.

$$\sigma = t/(R \times A)$$

wherein $\sigma$ is the ionic conductivity, t is the thickness, R is the resistance, and A is the area of the iCVD-coated polymer film. To measure the transference number, a 10 mV constant voltage bias was applied to the lithium symmetric cell for 1 hour, and the lithium ion transference number ($tLi^+$) was obtained through the following Bruce-Vincent-Evans equation.

$$t_{Li^+} = \frac{I_S(\Delta V - I_0 R_0)}{I_0(\Delta V - I_S R_S)}$$

wherein $I_s$ and $I_0$ are the steady-state current and initial current, respectively, $\Delta V$ is the applied potential, and $R_s$ and $R_0$ are the steady-state resistance and initial resistance before and after polarization, respectively.

In addition, to confirm the stability of the NMC cathode and the interface between the lithium metal anode and the deposited polymer, the cyclic voltammetry, galvanostatic intermittent titration (GITT), and floating experiments were performed. The cycling voltage measurement test was performed for 3 cycles within the voltage range of 0.1mV~1V. In the GITT experiment, the full cell was repeatedly discharged and charged at C/2 for 5 minutes, and then rested for 1 hour within the window voltage. The lithium ion diffusivity was measured using the Wechner-Huggins method, taking into account the planar shape of the electrodes. For the floating test, the full cell was charged to 4.0V at 0.05C and then applied up to 4.9V for 10 hours.

**Example 1: 100 nm pDMAMS**

A positive electrode mixed in a weight ratio of 94% NMC-based cathode active material, 3% conductive material, and 3% binder and coated onto an aluminum current collector was used (2mAh$cm^{-2}$). Through the iCVD process, a 25μm

thick separator (Celgard 2325) was disposed between the cathode and a 200 μm thick lithium metal covered and protected by a 100 nm thick pDMAMS [poly(dimethylaminomethyl styrene)] polymer, and an electrolyte was then injected to fabricate a 2032 type coin cell as a lithium metal secondary battery. The electrolyte used was an organic solvent consisting of EC:DEC in a volume ratio of 3:7 and 1M $LiPF_6$ salt dissolved therein. A 2032 type coin cell was used as a lithium metal symmetric battery, in which the coin cell was manufactured by interposing the same lithium metal anode on the cathode position without using the NMC-based cathode in the above production method. Specifically, pDMAMS polymer thin film was manufactured using the iCVD process. The substrate was placed in an iCVD chamber, and the temperature of the substrate was maintained at 40°C. Then, dimethylaminomethyl styrene (DMAMS) and the initiator tert-butyl peroxide(TBPO) were vaporized at a rate of 0.82 and 0.59 sccm, respectively, and transferred to a chemical vapor deposition chamber, and the . The pressure inside the chamber was maintained at a vacuum state of 200 mTorr, and at the same time, the filament was heated to 140°C to radically polymerize the monomers adsorbed on the substrate, thereby preparing pDMAMS homopolymer. Here, the desired thickness of the polymer thin film was obtained at a deposition rate of 2.4 nm/min.

**Example 2: 10 nm pDMAMS**

A coin cell was manufactured in the same manner as in Example 1, except that the thickness of the pDMAMS polymer protective layer in the anode of Example 1 was about 10 nm.

**Example 3: 500 nm pDMAMS**

A coin cell was manufactured in the same manner as in Example 1, except that the thickness of the pDMAMS polymer protective layer in the anode of Example 1 was 500 nm.

**Example 4: 100nm pDVB**

A coin cell was manufactured in the same manner as in Example 1, except that the thickness of the pDVB (polydivinylbenzne) polymer protective layer in the anode of Example 1 was about 100 nm. Specifically, the pDVB polymer thin film was produced using the iCVD process. The substrate was placed in the iCVD chamber, and the temperature of the substrate was maintained at 30°C. Then, divinylbenzene and the initiator tert-butyl peroxide (TBPO) were vaporized at a rate of 2.50 and 0.89 sccm, respectively, and transferred to the chemical vapor deposition chamber. The pressure inside the chamber was maintained at a vacuum of 300 mTorr, and at the same time, the filament was heated to 140°C to radically polymerize the monomers adsorbed on the substrate, thereby producing a pDVB homopolymer. Here, the desired thickness of the polymer thin film was obtained at a deposition rate of 6.1 nm/min.

**Example 5: 100 nm pC6FA**

A coin cell was manufactured in the same manner as in Example 1, except that the thickness of the pC6FA [poly {2-(perfluorohexyl) ethyl acrylate}] polymer protective layer in the anode of Example 1 was about 100 nm. Specifically, pC6FA polymer thin film was produced using the iCVD process. The substrate was placed in the iCVD chamber, and the temperature of the substrate was maintained at 30°C. Then, 2-(perfluorohexyl) ethyl acrylate(C6FA) and the initiator tert-butyl peroxide(TBPO) were vaporized at a rate of 0.55 and 0.30 sccm, respectively, and transferred to a chemical vapor deposition chamber. The pressure inside the chamber was maintained at a vacuum of 100 mTorr, and at the same time, the filament was heated to 140°C to radically polymerize the monomers adsorbed on the substrate, thereby producing a pC6FA homopolymer. Here, the desired thickness of the polymer thin film was obtained at a deposition rate of 12.5 nm/min.

**Example 6: 100 nm pEGDMA**

A coin cell was manufactured in the same manner as in Example 1, except that the thickness of the pEGDMA [poly(ethylene glycol dimethacrylate)] polymer in the anode of Example 1 was about 100 nm. Specifically, a pEGDMA polymer thin film was produced using the iCVD process. The substrate was placed in the iCVD chamber, and the temperature of the substrate was maintained at 30°C. Then, ethylene glycol dimethacrylate(EGDMA) and the initiator tert-butyl peroxide (TBPO) were vaporized at a rate of 0.33 and 0.44 sccm, respectively, and transferred to the chemical vapor deposition chamber. The pressure inside the chamber was maintained at a vacuum state of 150 mTorr, and at the same time, the filament was heated to 140°C to radically polymerize the monomers adsorbed on the substrate, thereby producing a pEGDMA homopolymer. Here, the desired thickness of the polymer thin film was obtained at a deposition rate of 4.0 nm/min.

**Example 7: 100 nm pAA**

A coin cell was manufactured in the same manner as in Example 1, except that the thickness of the pAA polymer in the anode of Example 1 was about 100 nm. Specifically, pAA [poly(acrylic acid)] polymer thin film was produced using the iCVD process. The substrate was placed in the iCVD chamber, and the temperature of the substrate was maintained at 30°C. Then, acrylic acid and the initiator tert-butyl peroxide (TBPO) were vaporized at a rate of 1.43 and 0.74 sccm, respectively, and transferred to the chemical vapor deposition chamber. The pressure inside the chamber was maintained at a vacuum state of 200 mTorr, and at the same time, the filament was heated to 140°C to radically polymerize the monomers adsorbed on the substrate, thereby producing a pAA homopolymer. Here, the desired thickness of the polymer thin film was obtained at a deposition rate of 8.0 nm/min.

**Comparative Example 1: 200 μm pure lithium metal**

A 2032 type coin cell of the same size was manufactured using pure lithium metal with a thickness of about 200 μm that was not covered with the polymer protective film in Example 1.

**Experimental Example 1: Analysis of refractive index and swelling ratio**

For the polymer thin film according to embodiments of the present disclosure, the refractive index and swelling property of the obtained thin film were measured using the ellipsometer-liquid-cell. A polymer thin film deposited to a thickness of 100 nm on a silicon wafer (Si wafer) substrate was prepared in the liquid cell, and the changes in refractive index and the swelling ratio of the polymer thin film before and after injecting the electrolyte into the liquid cell were recorded in Table 4 below.

[Table 4]

| | Changes in refractive index (*n*@632.8 nm) | Swelling ratio (%) |
|---|---|---|
| Example 1 | 1.560 → 1.392 | 164 |
| Example 4 | 1.589 → 1.579 | 6 |
| Example 5 | 1.364 → 1.364 | 12 |
| Example 6 | 1.517 → 1.511 | 2 |
| Example 7 | 1.521 → 1.494 | 16 |

**Experimental Example 2: Cycle life**

The lithium metal symmetric batteries manufactured in Examples 1 to 7 and Comparative Example 1 were charged and discharged at a current density of 1 $mAcm^{-2}$ for 1 hour each, and the number of cycles in which overvoltage of 5V or more occurred is recorded in Table 5 below.

[Table 5]

| | Number of cycles of lithium symmetric battery |
|---|---|
| Example 1 | 425 |
| Example 2 | 70 |
| Example 3 | 90 |
| Example 4 | 140 |
| Example 5 | 15 |
| Example 6 | 110 |
| Example 7 | 250 |
| Comparative Example 1 | 75 |

It was confirmed that the cycle number of the lithium symmetric battery of Example 1 protected with the pDMAMS polymer thin film was significantly improved compared to the lithium symmetric battery without the polymer thin film of Comparative Example 1. In addition, it could be confirmed that Example 7 and Example 1, in where the swelling ratio was 15% or more, exhibited significant improvement in cycle life compared to the Comparative Example.

**Experimental Example 2: Charge/discharge test**

The lithium metal secondary batteries manufactured in Examples 1 to 7 and Comparative Example 1 were evaluated by the following charge/discharge test. In the first cycle of the charge/discharge test, the secondary battery was charged at a constant current of 0.5C until the voltage reached 4.2V, and then discharged at a constant current of 0.5C until the voltage reached 3.0V. After that, the lithium metal secondary battery was charged under CC/CV conditions of 1C and 4.2V, and then a charge/discharge test was performed under discharge conditions of 1C and CC 3V. At this time, the number of cycles at the point where it reaches 80% of the initial specific capacity is recorded in Table 6 below.

[Table 6]

| | Number of cycles at 80% point relative to initial capacity |
|---|---|
| Example 1 | 272 |
| Example 2 | 147 |
| Example 3 | 128 |
| Example 4 | 141 |
| Example 5 | 61 |
| Example 6 | 159 |
| Example 7 | 200 |
| Comparative Example 1 | 101 |

It can be seen that the cycle number of the lithium metal secondary battery of Example 1 was greatly improved compared to the lithium metal secondary battery of Comparative Example 1, whereby the pDMAMS polymer thin film suppresses the formation of dendrites of lithium metal and the formation of dead lithium. In addition, it can be confirmed that Example 7 and Example 1, in which the swelling ratio was 15% or more, exhibited significant improvement in cycle life compared to the Comparative Example.

## Claims

1. An electrode for lithium metal battery, the electrode comprising:

    an anode current collector;
    a lithium metal layer formed on the anode current collector; and
    a polymer protective thin-film layer formed on the lithium metal layer,
    wherein the polymer protective thin-film layer includes an electrolyte-swellable polymer, and the electrolyte-swellable polymer has a swelling ratio(%) represented by the following Mathematical Formula 1 of 15% or more,

    [Mathematical Formula 1]

    $$Swelling\ ratio\ (\%) = \frac{d_{swollen} - d_{pristine}}{d_{pristine}} \times 100$$

    wherein $d_{pristine}$ is a thickness of the polymer protective thin-film layer before swelling, and $d_{swollen}$ is a thickness of the polymer protective thin-film layer after swelling.

2. The electrode according to claim 1, wherein the electrolyte-swellable polymer is a polymer including one or more monomers selected from the group consisting of dimethylaminomethyl styrene, ethylene glycol dimethacrylate, acrylic acid, (2-perfluorohexyl) ethyl acrylate, and divinylbenzene.

3. The electrode according to claim 1, wherein the electrolyte-swellable polymer includes one or more polymers selected from the group consisting of pDMAMS [poly(dimethylaminomethyl styrene)], pDVB (polydivinylbenzne), pC6FA [poly {2-(perfluorohexyl) ethyl acrylate}], pEGDMA [poly(ethylene glycol dimethacrylate)], and pAA [poly(acrylic acid)].

4. The electrode according to claim 1, wherein the polymer protective thin-film layer is provided so as to cover all or part of a surface where the anode current collector and the lithium metal layer are in contact with each other.

5. The electrode according to claim 1, wherein the polymer protective thin-film layer has a thickness in the range of 10 to 500 nm.

6. The electrode according to claim 1, wherein the polymer protective thin-film layer is formed by an iCVD process using an initiator, wherein the initiator includes tert-butyl peroxide(TBPO).

7. The electrode according to claim 1, wherein the electrolyte-swellable polymer swells into an electrolyte solution to form a solid-electrolyte layer composite.

8. The electrode according to claim 7, wherein the electrolyte solution has a lithium ion transference number (tLi+) in the range of 0.2 to 1 as measured using Bruce-Vincent method.

9. The electrode according to claim 1, wherein the lithium metal layer has a thickness of 1 to 200 $\mu$m.

10. A secondary battery comprising:

an anode, which is the electrode according to any one of claims 1 to 9; a cathode; and an electrolyte layer between the cathode and the anode,
wherein the anode includes a solid electrolyte interphase layer formed on a surface thereof.

11. The secondary battery according to claim 10, wherein the solid electrolyte interphase layer is a $Li_2O$-free SEI layer.

12. A method for manufacturing the electrode of claim 9, the method comprising:

forming the polymer protective thin-film layer on the anode current collector by an initiated Chemical Vapor Deposition (iCVD) process using an initiator,
wherein the polymer protective thin-film layer includes the electrolyte-swellable polymer which is formed from one or more monomers selected from the group consisting of dimethylaminomethyl styrene, ethylene glycol dimethacrylate, acrylic acid, 2-(perfluorohexyl)ethyl acrylate and divinylbenzene.

13. The method according to claim 12, wherein the Chemical Vapor Deposition (iCVD) process using an initiator is carried out using the initiator including tert-butyl peroxide (TBPO).

14. The method according to claim 12, wherein the Chemical Vapor Deposition (iCVD) process using an initiator is carried out at a deposition rate of 2 nm/min to 14 nm/min.

FIG. 1A

a

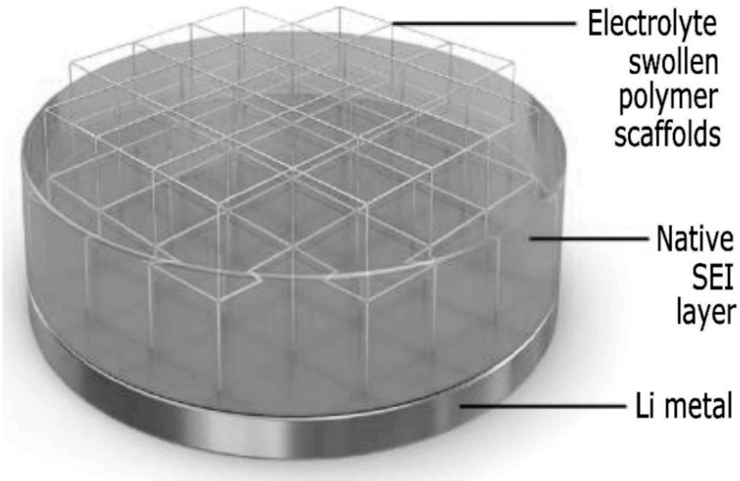


SEI layers in swollen-soft-scaffold

FIG. 1B

b

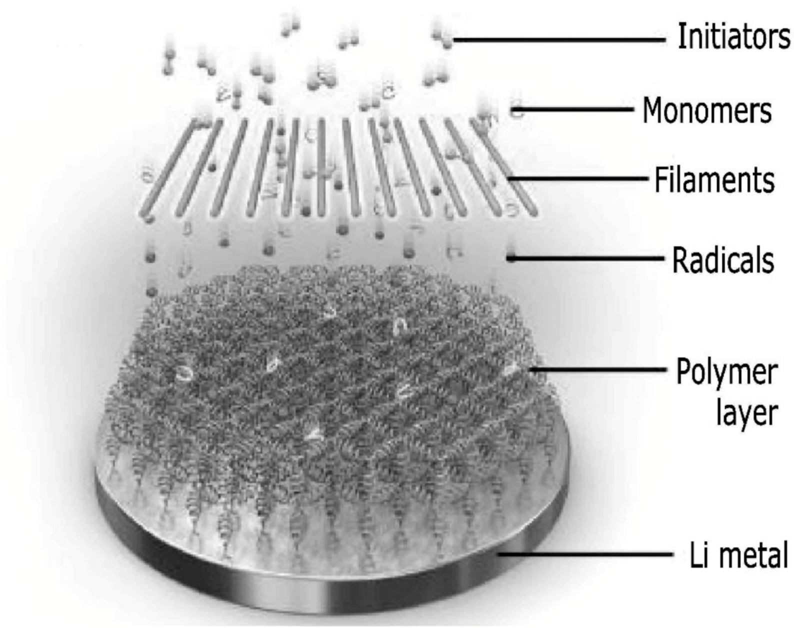
Initiators
Monomers
Filaments
Radicals
Polymer layer
Li metal

FIG. 1C

c

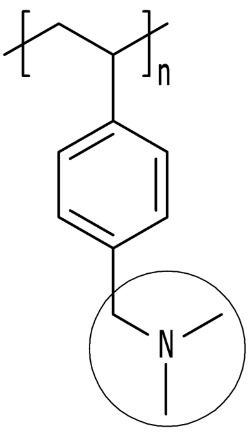

pDMAMS

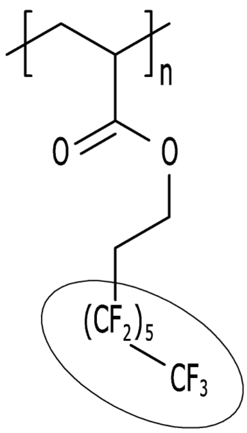

pC6FA

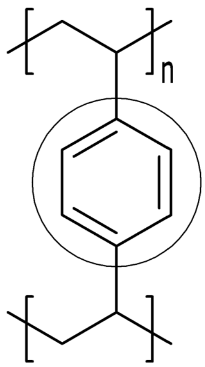

pDVB

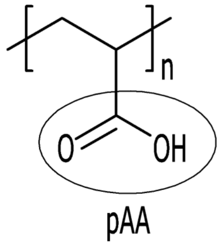

pAA

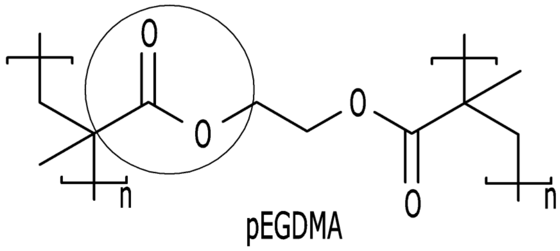

pEGDMA

FIG. 1D

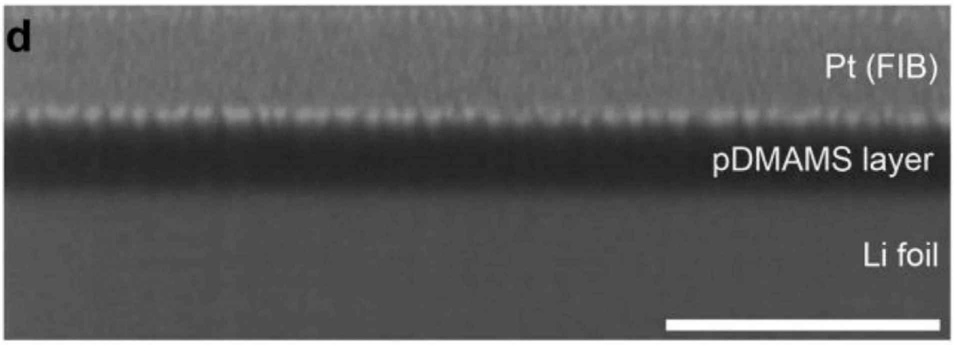

FIG. 1E

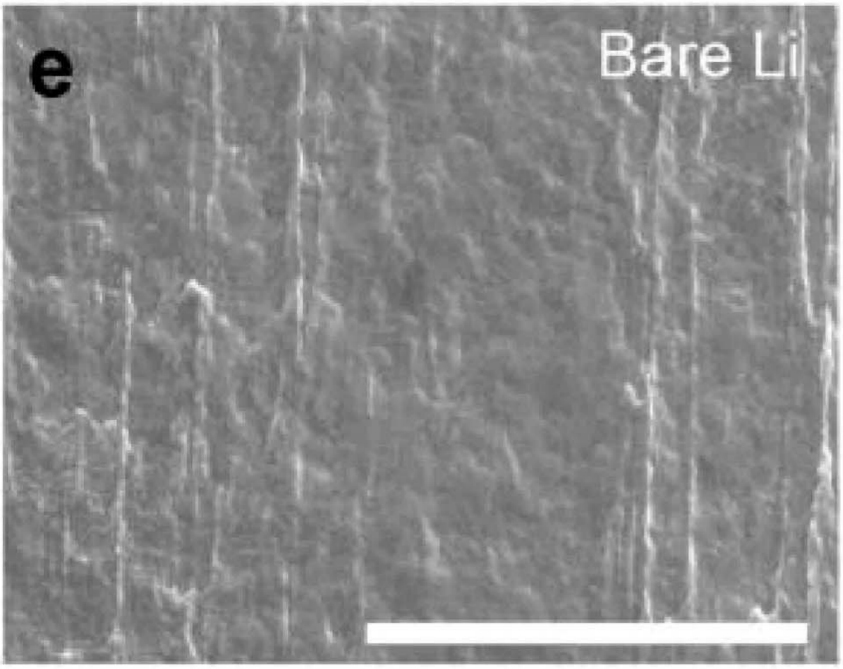

FIG. 1F

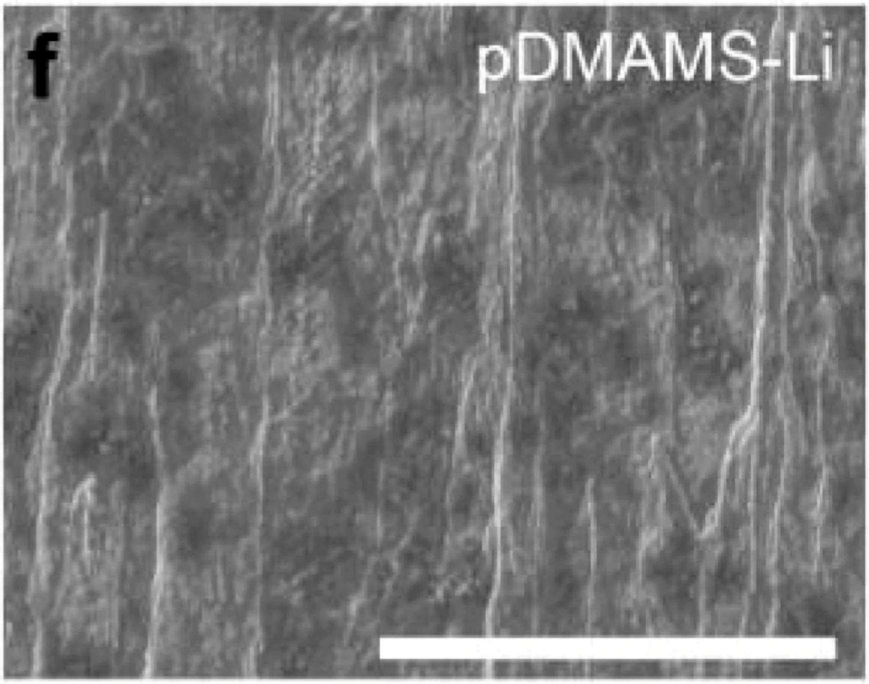

FIG. 1G

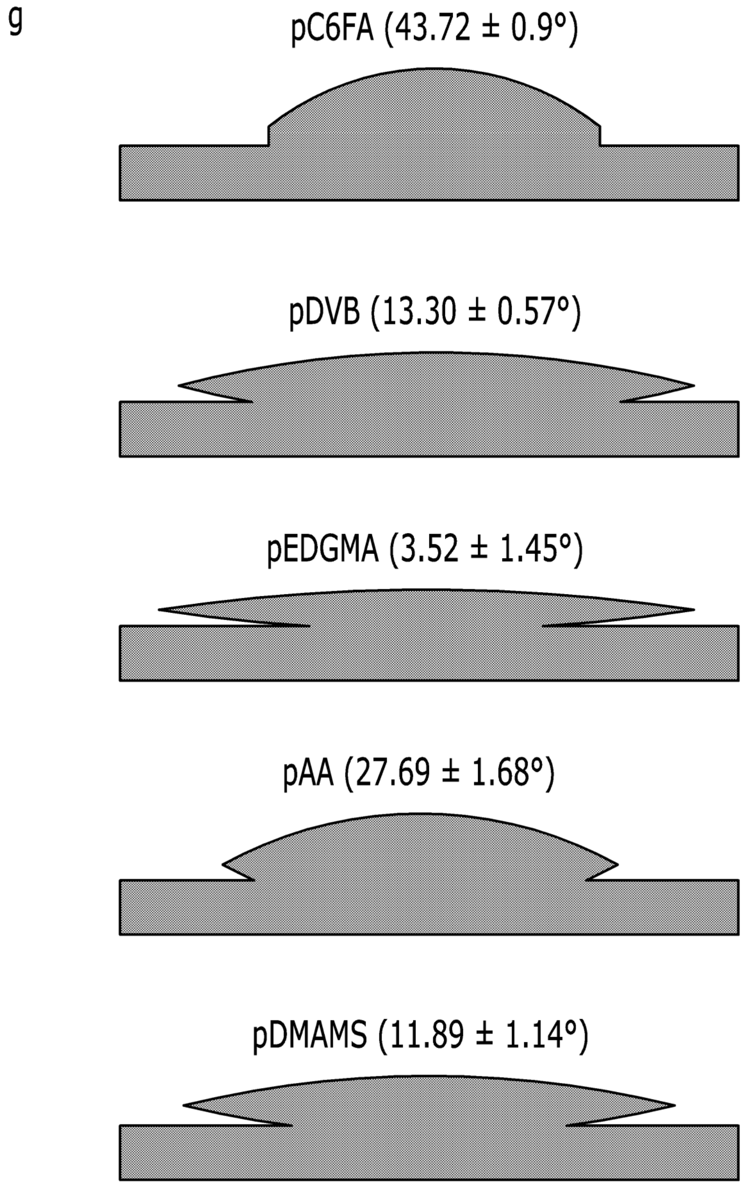
g
pC6FA (43.72 ± 0.9°)
pDVB (13.30 ± 0.57°)
pEDGMA (3.52 ± 1.45°)
pAA (27.69 ± 1.68°)
pDMAMS (11.89 ± 1.14°)

FIG. 1H

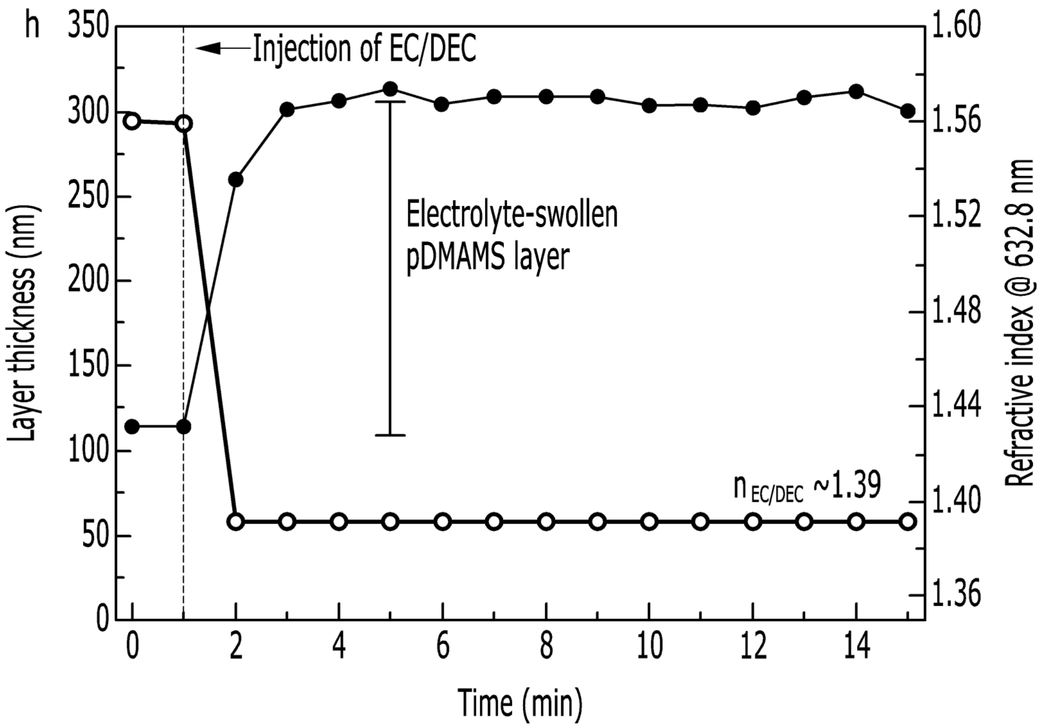
h
Injection of EC/DEC
Electrolyte-swollen
pDMAMS layer
n EC/DEC ~1.39
Layer thickness (nm)
Refractive index @ 632.8 nm
Time (min)
0
50
100
150
200
250
300
350
1.36
1.40
1.44
1.48
1.52
1.56
1.60
0
2
4
6
8
10
12
14

FIG. 1I

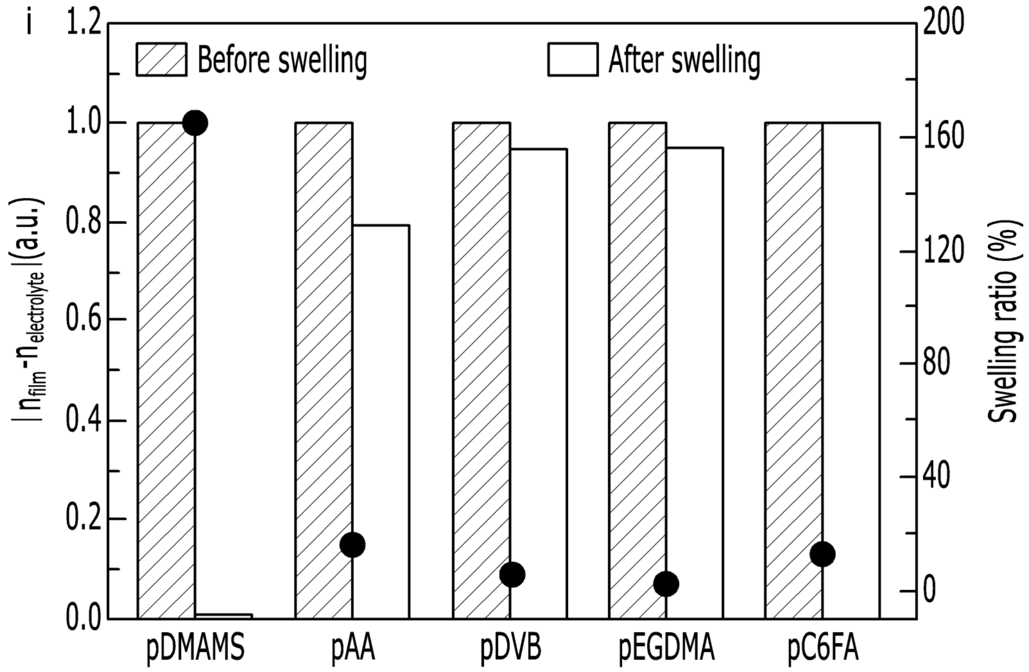
i
Before swelling
After swelling
1.2
1.0
0.8
0.6
0.4
0.2
0.0
200
160
120
80
40
0
|n_film-n_electrolyte|(a.u.)
Swelling ratio (%)
pDMAMS
pAA
pDVB
pEGDMA
pC6FA

FIG. 2A

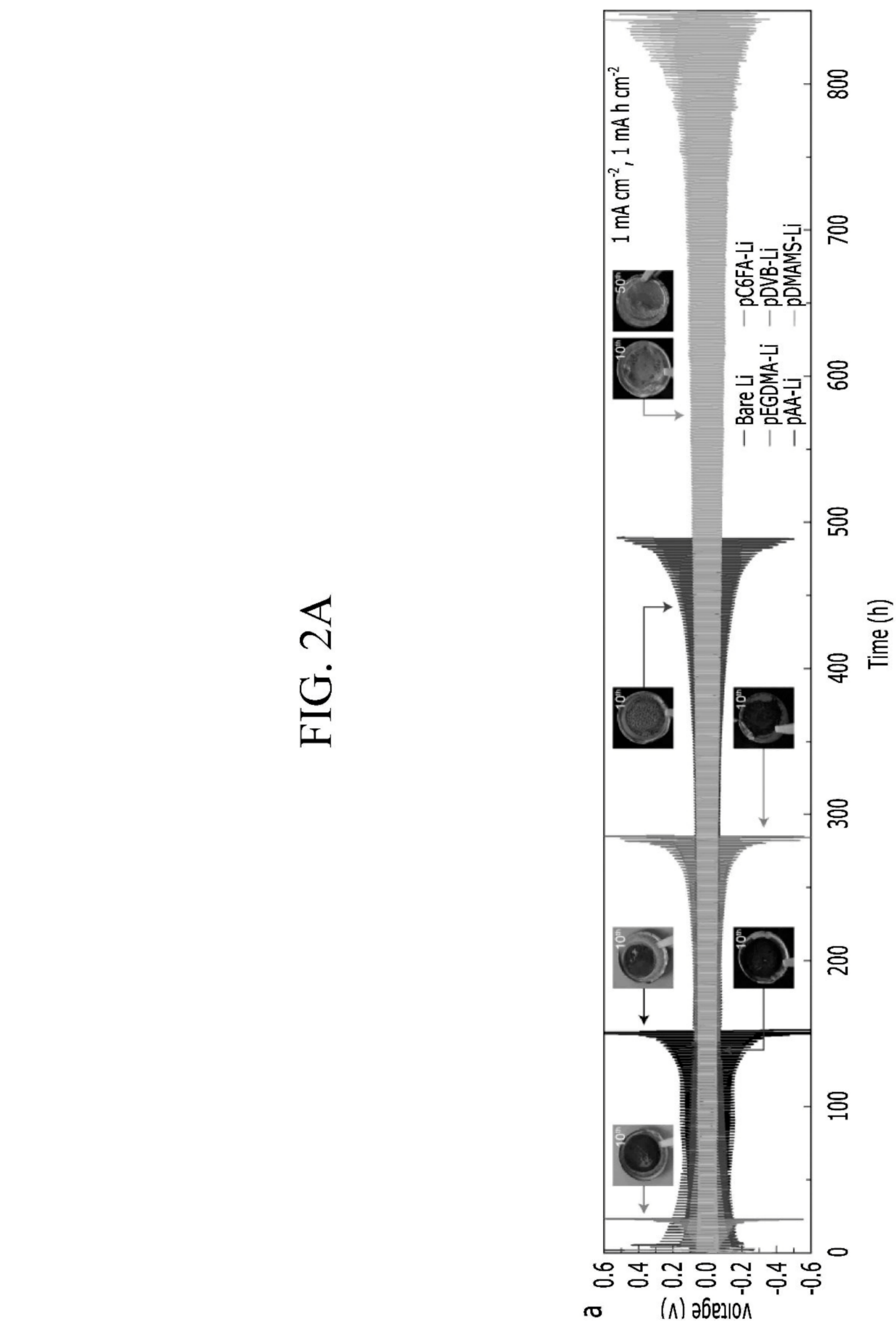
a
Voltage (V)
Time (h)
1 mA cm$^{-2}$, 1 mA h cm$^{-2}$
Bare Li
pEGDMA-Li
pAA-Li
pC6FA-Li
pDVB-Li
pDMAMS-Li
10th
50th
0.6
0.4
0.2
0.0
-0.2
-0.4
-0.6
0
100
200
300
400
500
600
700
800

FIG. 2B

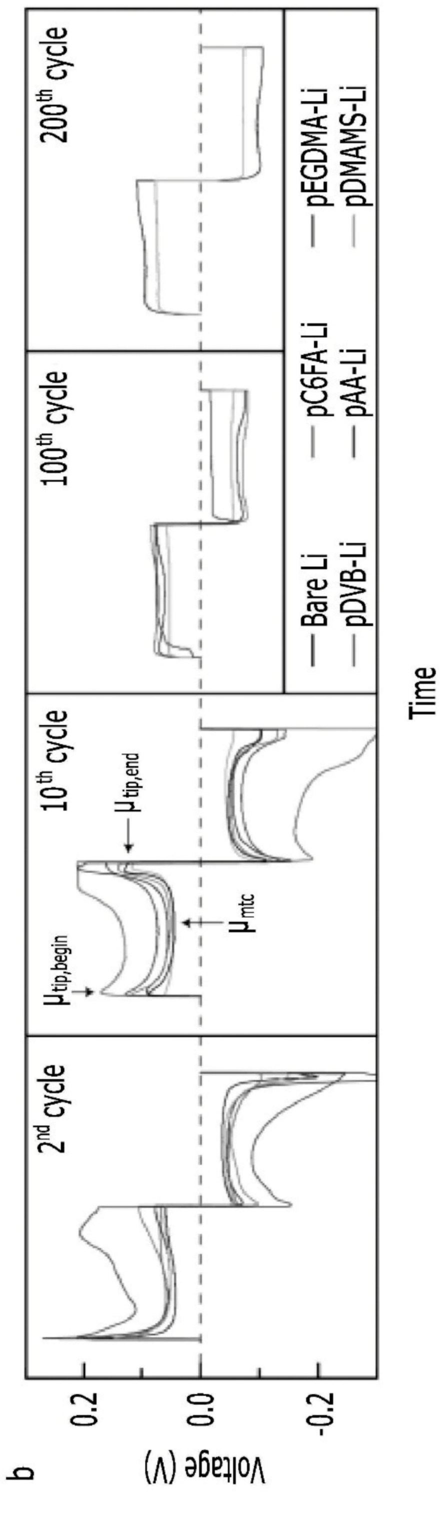
b
Voltage (V)
0.2
0.0
-0.2
2nd cycle
10th cycle
$\mu_{tip,begin}$
$\mu_{tip,end}$
$\mu_{mtc}$
100th cycle
200th cycle
Bare Li
pDVB-Li
pC6FA-Li
pAA-Li
pEGDMA-Li
pDMAMS-Li
Time

FIG. 2C

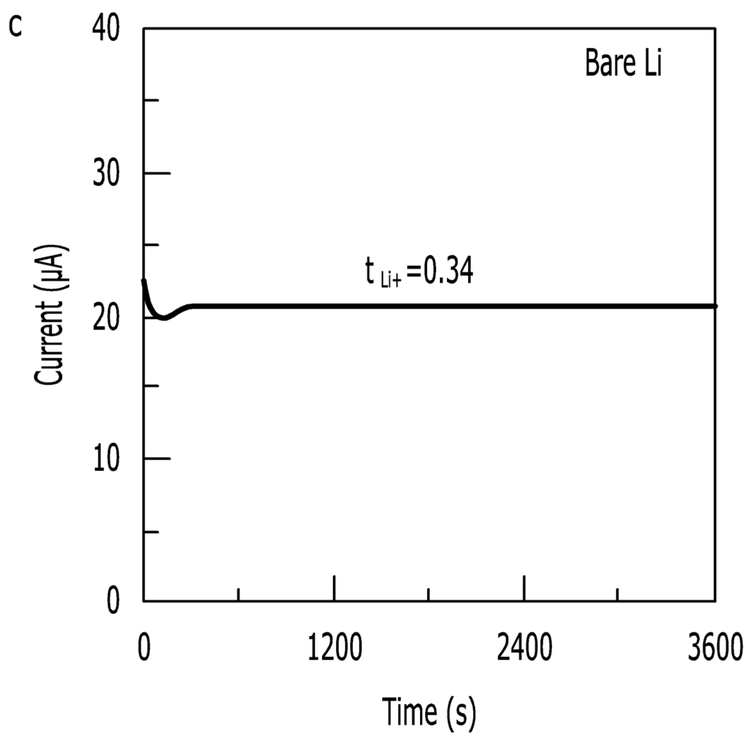

FIG. 2D

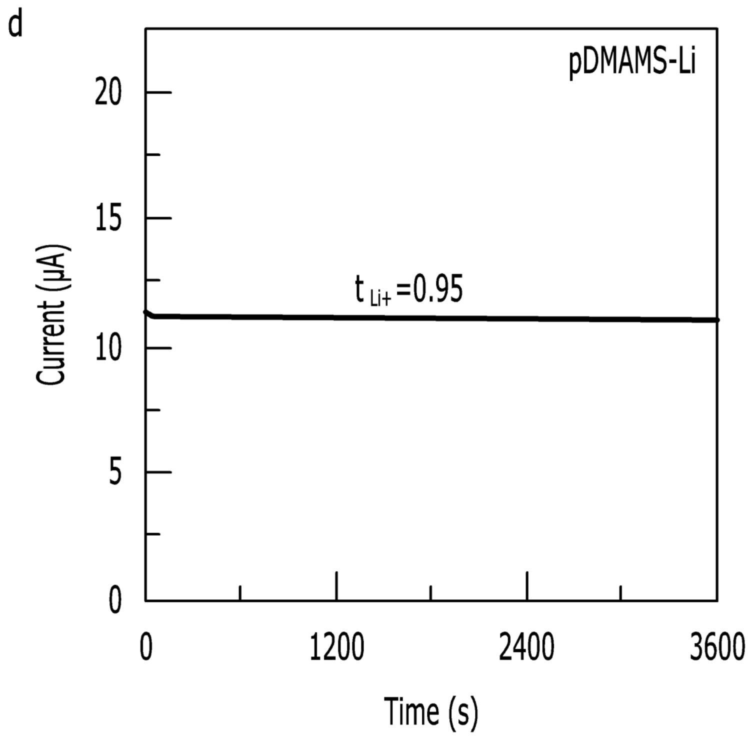
d
pDMAMS-Li
$t_{Li+}$ =0.95
Current (μA)
20
15
10
5
0
0
1200
2400
3600
Time (s)

FIG. 2E

e

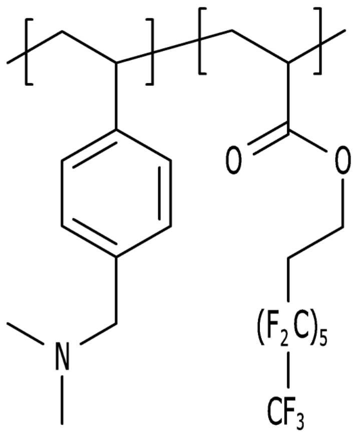

Poly(DMAMS-co-C6FA)

FIG. 2F

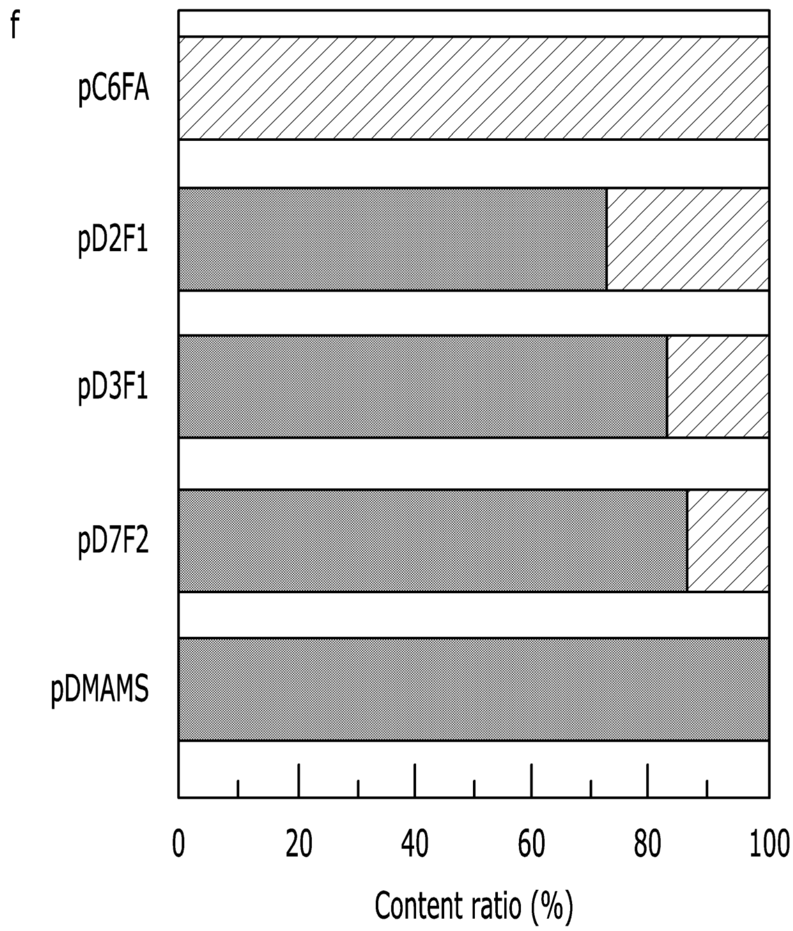
f
pC6FA
pD2F1
pD3F1
pD7F2
pDMAMS
0
20
40
60
80
100
Content ratio (%)

FIG. 2G

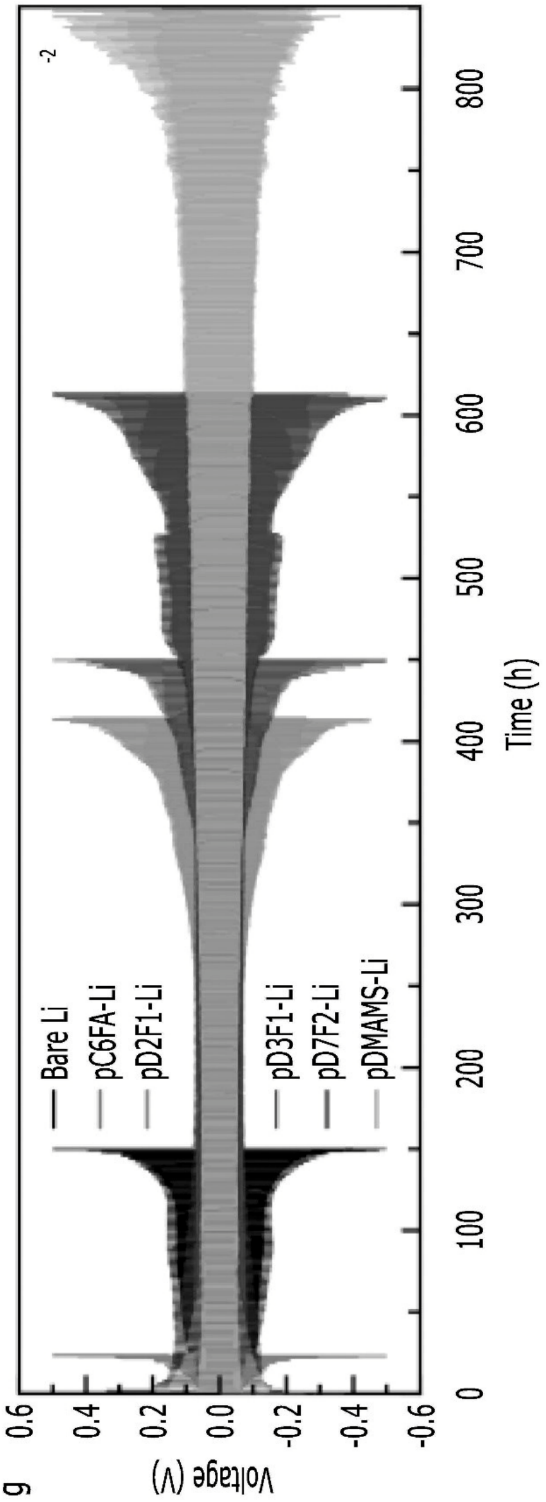
g
Voltage (V)
Time (h)
Bare Li
pC6FA-Li
pD2F1-Li
pD3F1-Li
pD7F2-Li
pDMAMS-Li
0.6
0.4
0.2
0.0
-0.2
-0.4
-0.6
0
100
200
300
400
500
600
700
800

FIG. 2H

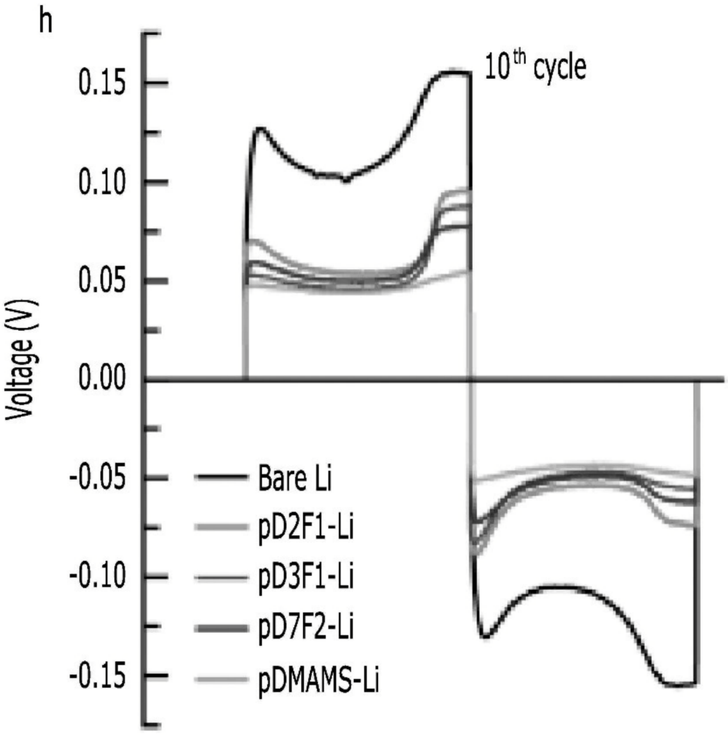
h
10th cycle
0.15
0.10
0.05
0.00
-0.05
-0.10
-0.15
Voltage (V)
Bare Li
pD2F1-Li
pD3F1-Li
pD7F2-Li
pDMAMS-Li

FIG. 3A

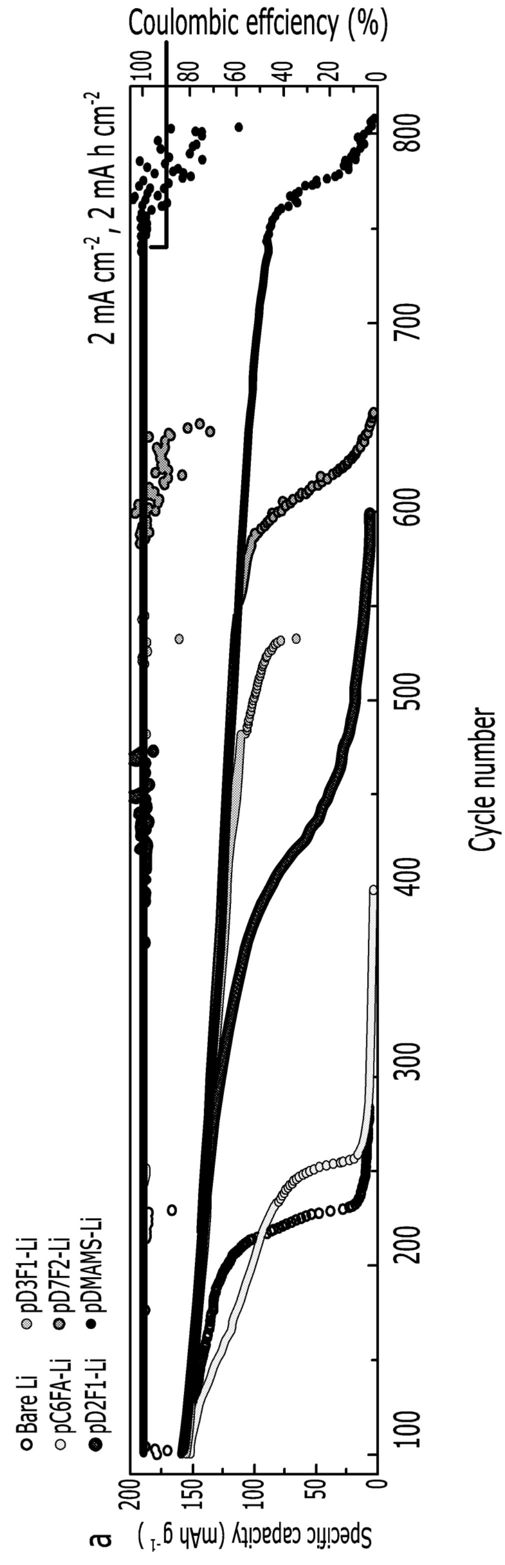
a
Bare Li
pC6FA-Li
pD2F1-Li
pD3F1-Li
pD7F2-Li
pDMAMS-Li
2 mA cm-2, 2 mA h cm-2
Coulombic effciency (%)
Specific capacity (mAh g-1)
Cycle number
200
150
100
50
0
100
200
300
400
500
600
700
800
100
80
60
40
20
0

FIG. 3B

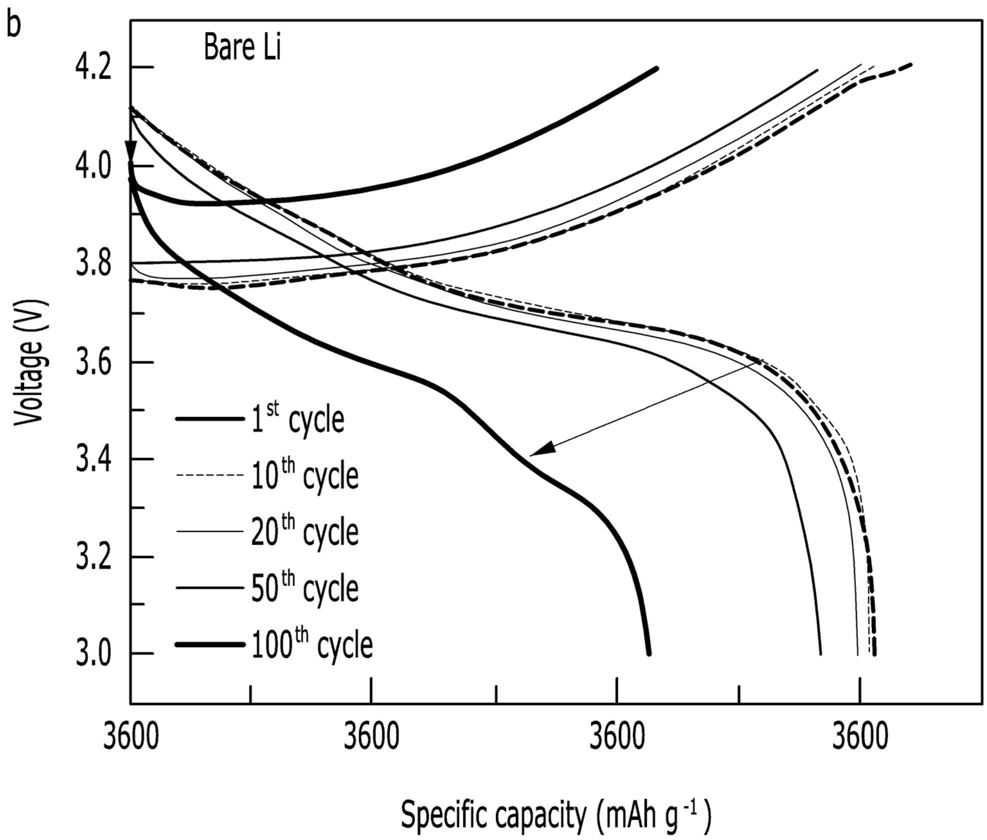
b
Bare Li
4.2
4.0
3.8
3.6
3.4
3.2
3.0
Voltage (V)
1st cycle
10th cycle
20th cycle
50th cycle
100th cycle
3600
3600
3600
3600
Specific capacity (mAh g-1)

FIG. 3C

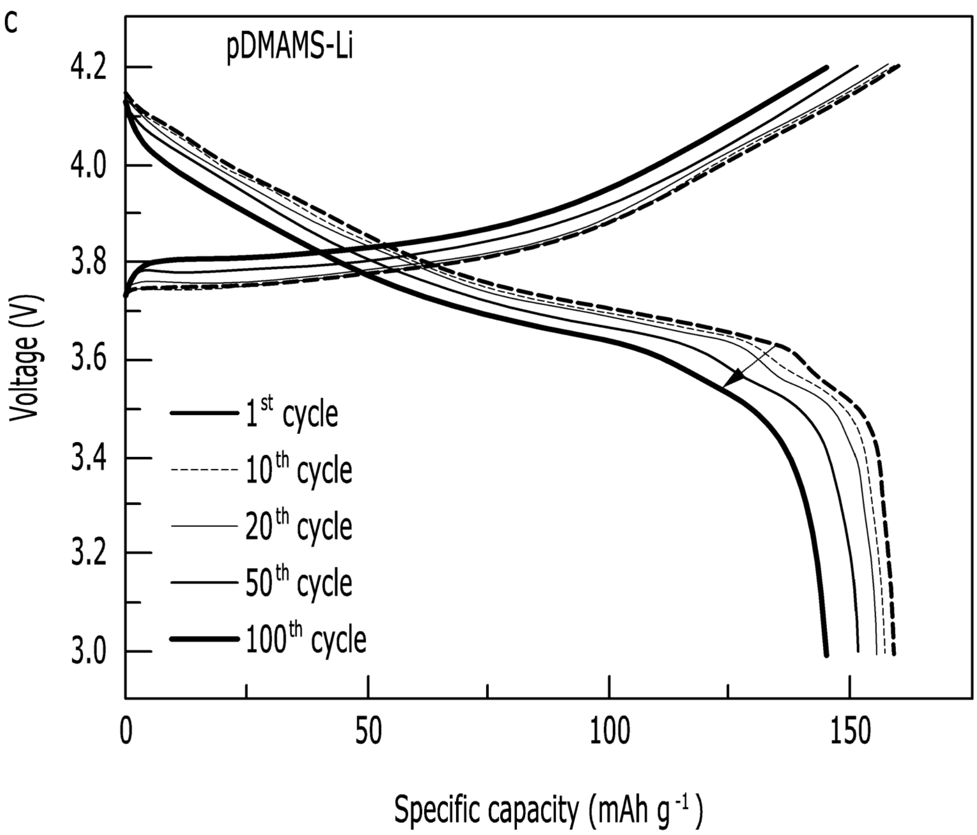
c
pDMAMS-Li
4.2
4.0
3.8
3.6
3.4
3.2
3.0
Voltage (V)
1st cycle
10th cycle
20th cycle
50th cycle
100th cycle
0
50
100
150
Specific capacity (mAh g-1)

FIG. 3D

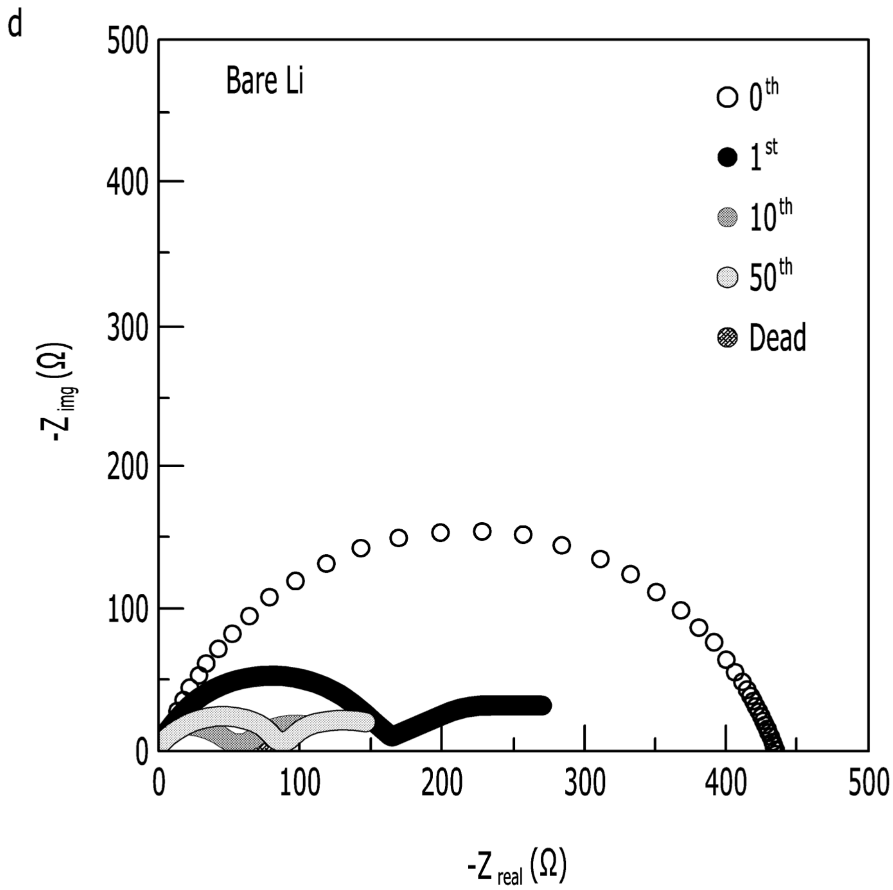
d
Bare Li
0th
1st
10th
50th
Dead
-Z img (Ω)
-Z real (Ω)
0
100
200
300
400
500
0
100
200
300
400
500

FIG. 3E

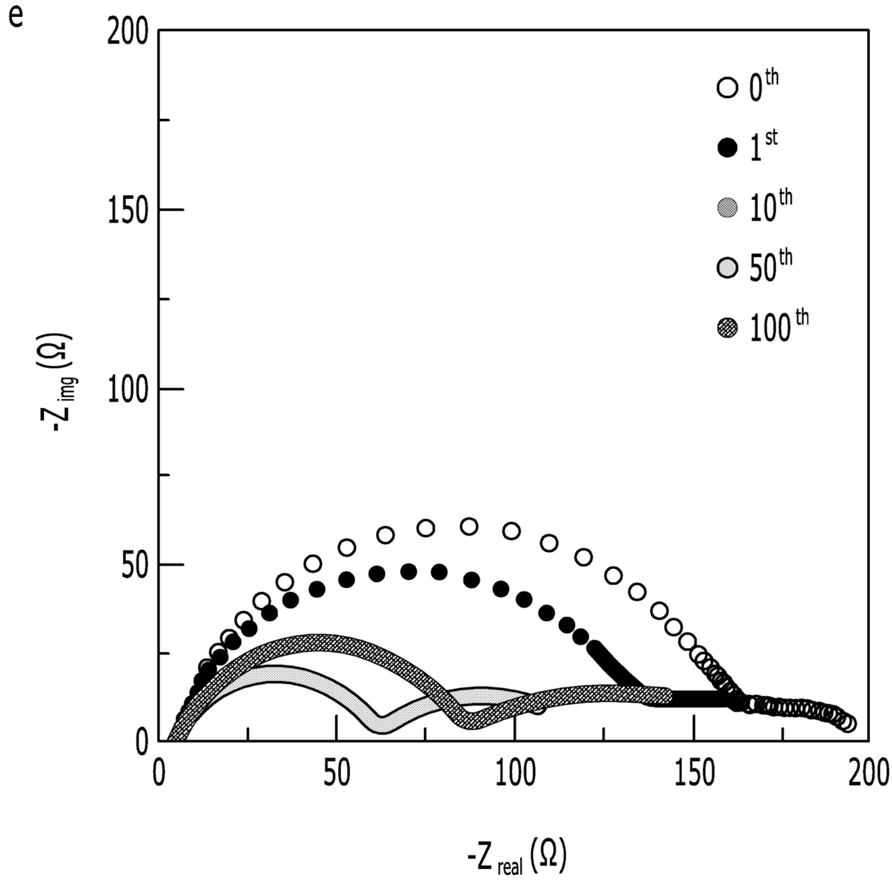
e
200
150
100
50
0
0
50
100
150
200
-Z img (Ω)
-Z real (Ω)
0th
1st
10th
50th
100th

FIG. 3F

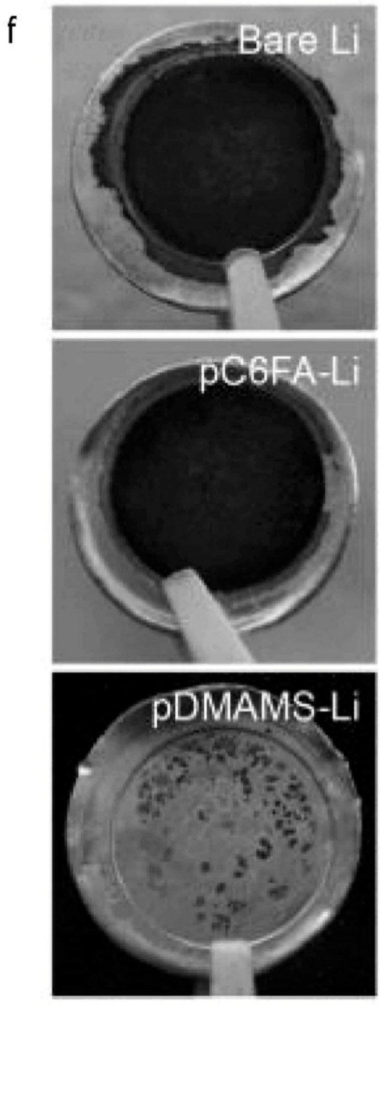

FIG. 3G

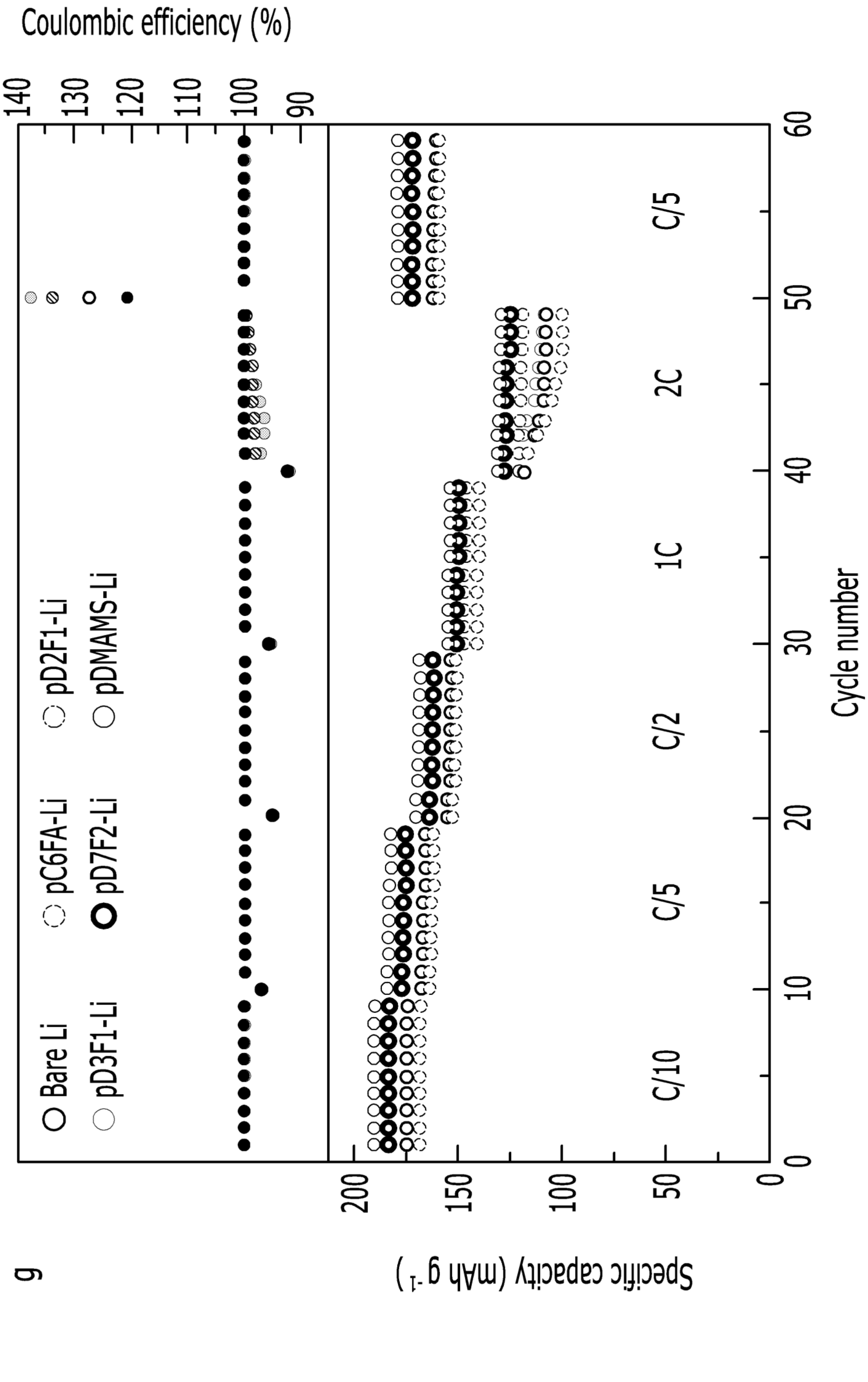
g
Coulombic efficiency (%)
Bare Li
pD3F1-Li
pC6FA-Li
pD7F2-Li
pD2F1-Li
pDMAMS-Li
Specific capacity (mAh g-1)
Cycle number
C/10
C/5
C/2
1C
2C
C/5

FIG. 3H

h

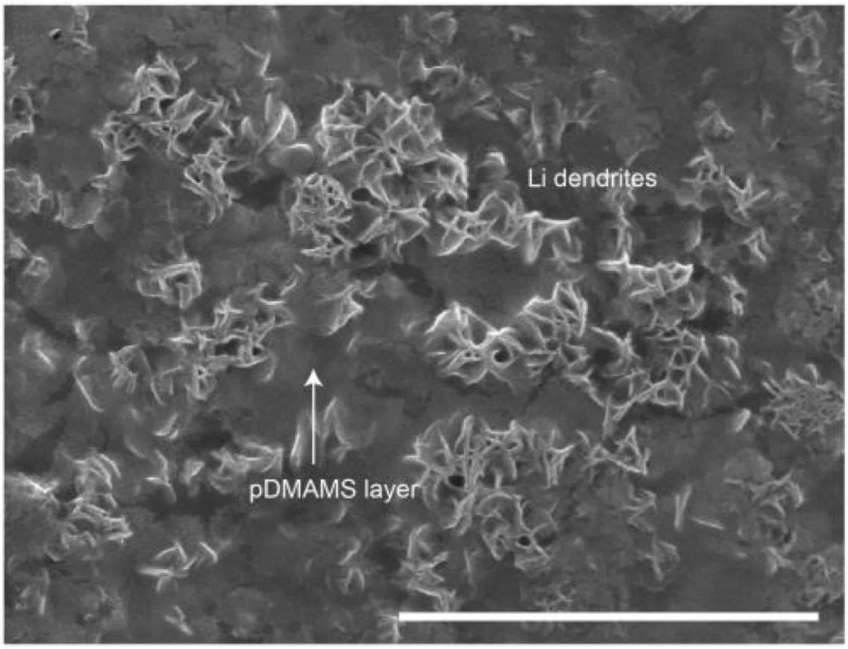

FIG. 4A

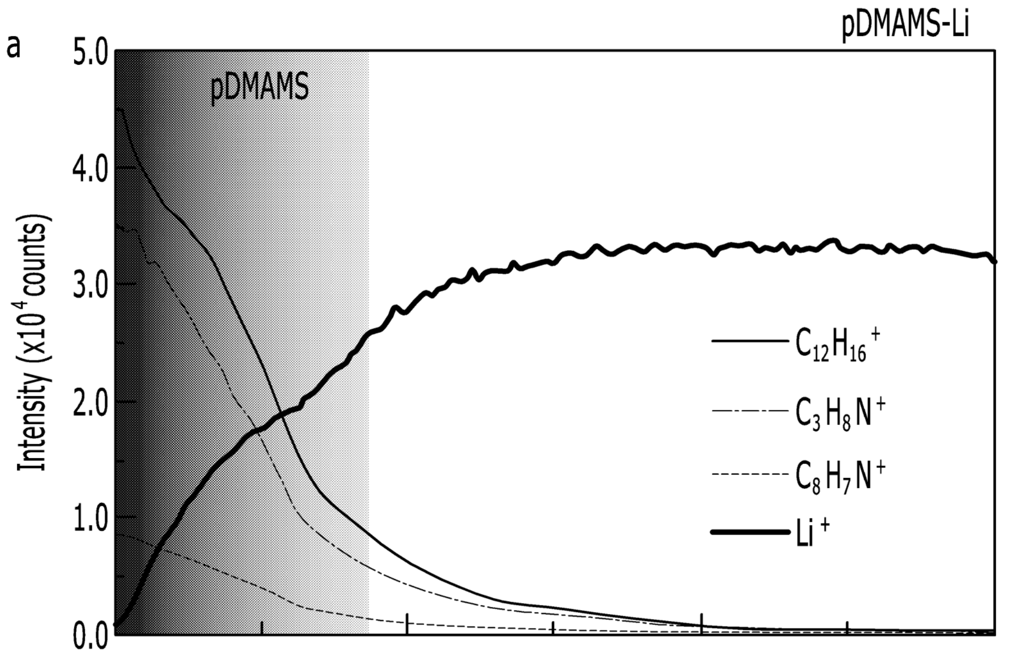
a
pDMAMS-Li
pDMAMS
5.0
4.0
3.0
2.0
1.0
0.0
Intensity (x10^4 counts)
0
100
200
300
C12H16+
C3H8N+
C8H7N+
Li+

FIG. 4B

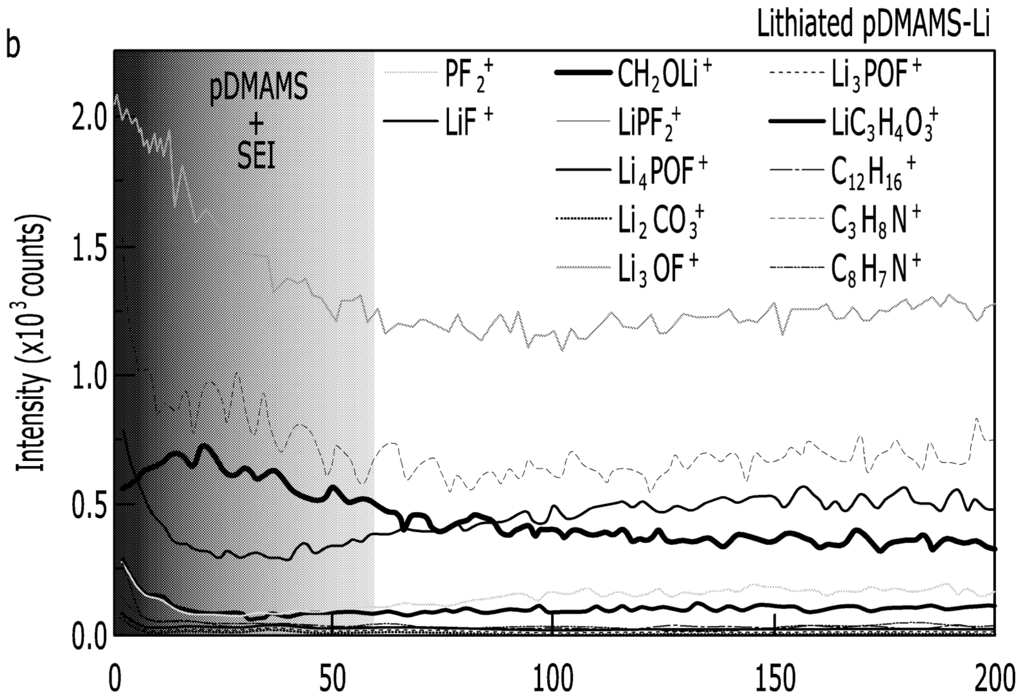
b
Lithiated pDMAMS-Li
pDMAMS
+
SEI
PF$_2^+$
CH$_2$OLi$^+$
Li$_3$POF$^+$
LiF$^+$
LiPF$_2^+$
LiC$_3$H$_4$O$_3^+$
Li$_4$POF$^+$
C$_{12}$H$_{16}^+$
Li$_2$CO$_3^+$
C$_3$H$_8$N$^+$
Li$_3$OF$^+$
C$_8$H$_7$N$^+$
Intensity (x10$^3$ counts)
2.0
1.5
1.0
0.5
0.0
0
50
100
150
200

FIG. 4C

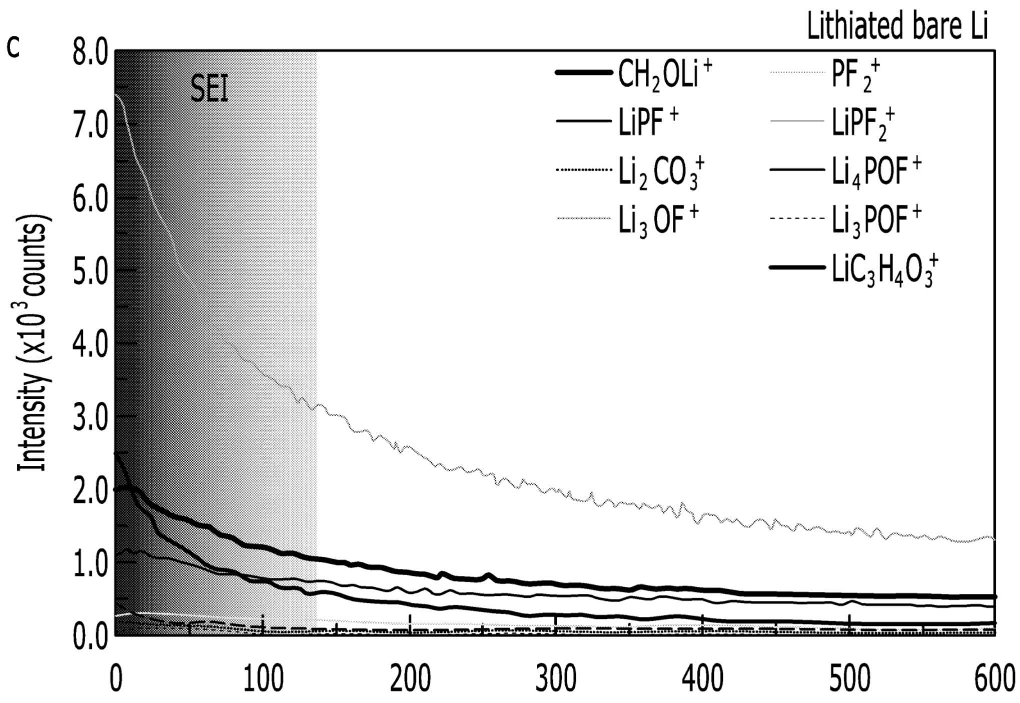
c
Lithiated bare Li
SEI
CH2OLi+
PF2+
LiPF+
LiPF2+
Li2CO3+
Li4POF+
Li3OF+
Li3POF+
LiC3H4O3+
Intensity (x10^3 counts)
8.0
7.0
6.0
5.0
4.0
3.0
2.0
1.0
0.0
0
100
200
300
400
500
600

FIG. 4D

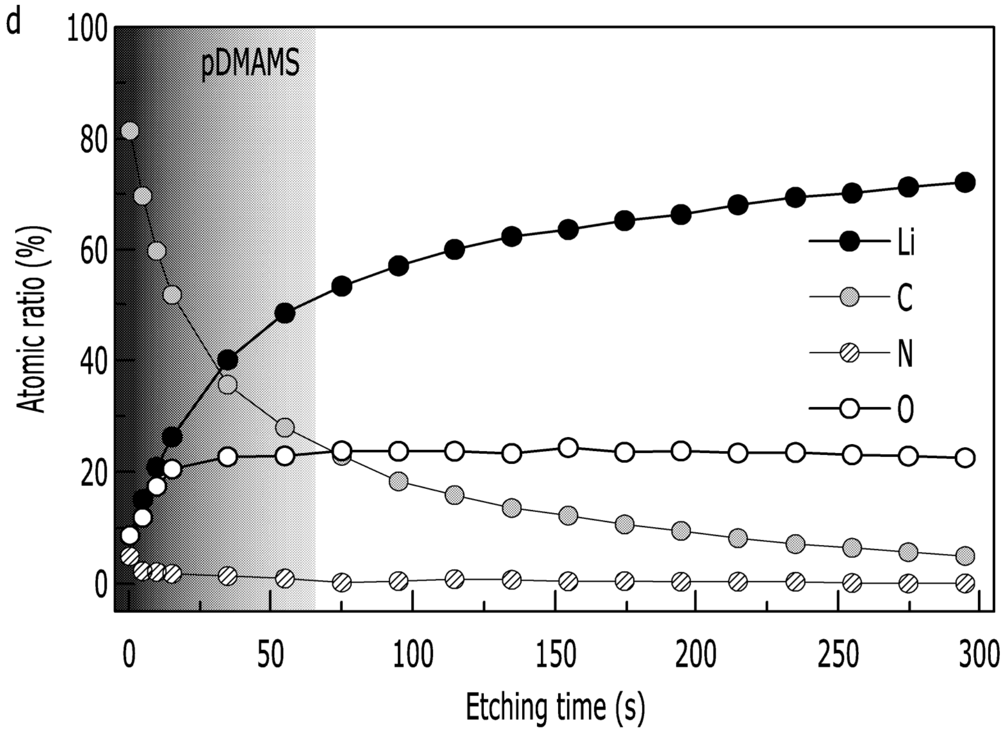
d
pDMAMS
Atomic ratio (%)
Etching time (s)
Li
C
N
O
0
20
40
60
80
100
0
50
100
150
200
250
300

FIG. 4E

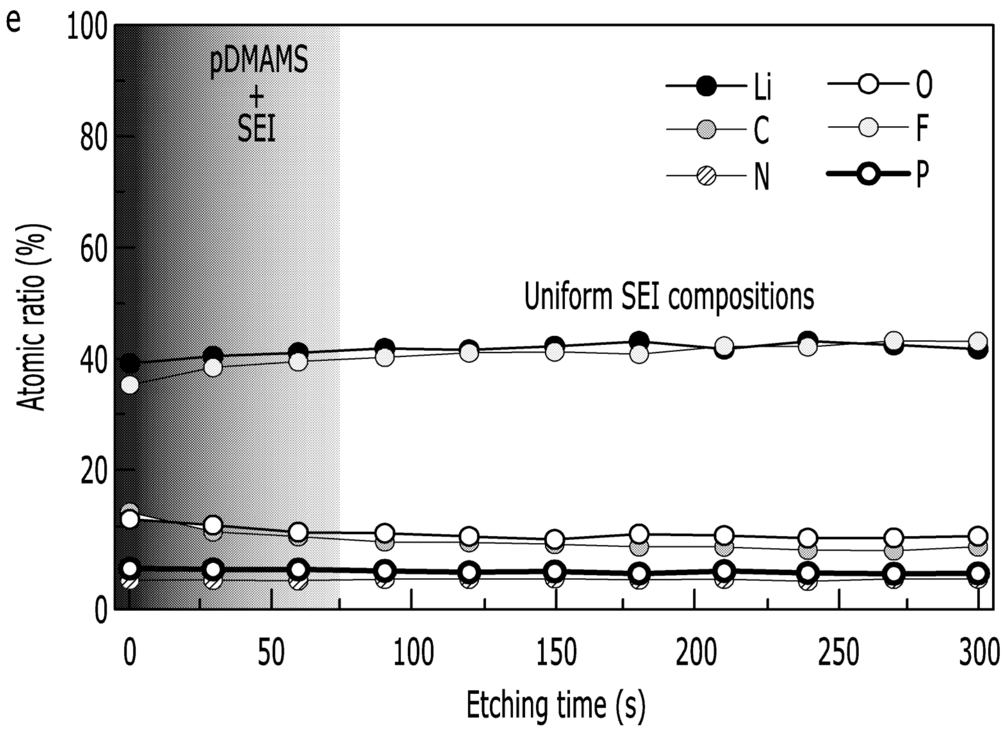
e
pDMAMS
+
SEI
Li
C
N
O
F
P
Uniform SEI compositions
Atomic ratio (%)
Etching time (s)
0
20
40
60
80
100
0
50
100
150
200
250
300

FIG. 4F

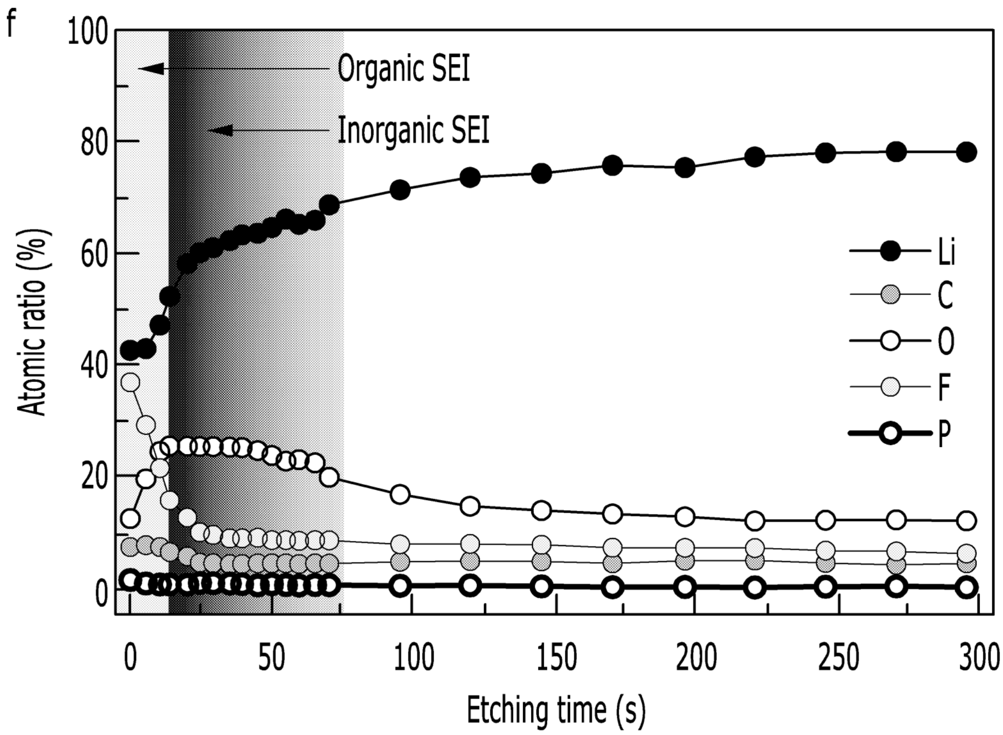
f
Organic SEI
Inorganic SEI
Atomic ratio (%)
Etching time (s)
Li
C
O
F
P
0
20
40
60
80
100
0
50
100
150
200
250
300

FIG. 4G

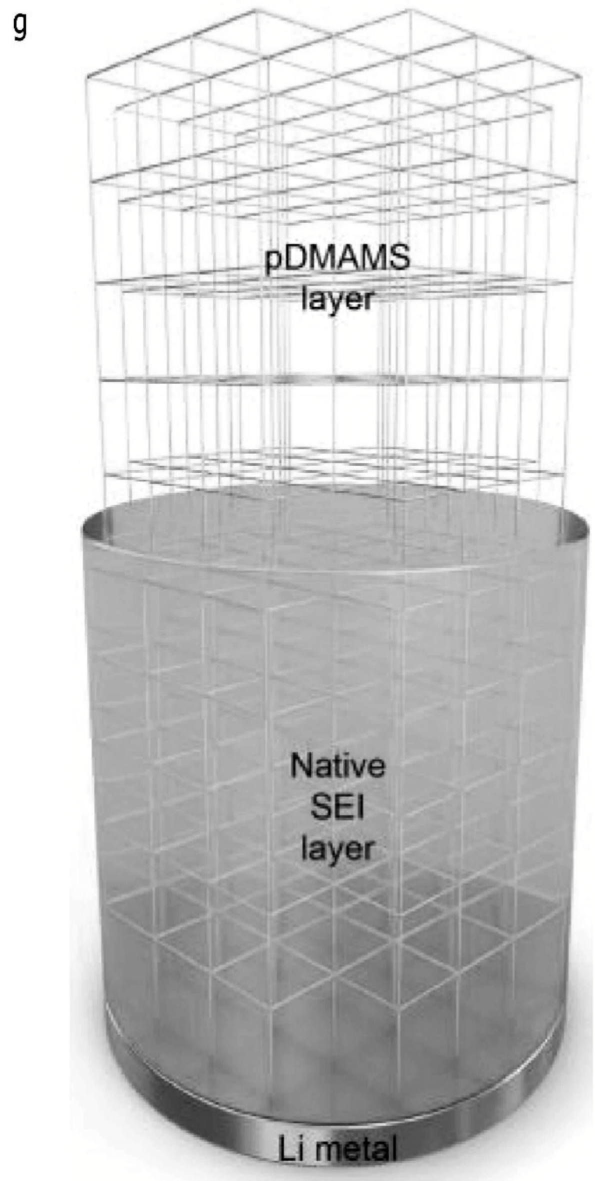

FIG. 4H

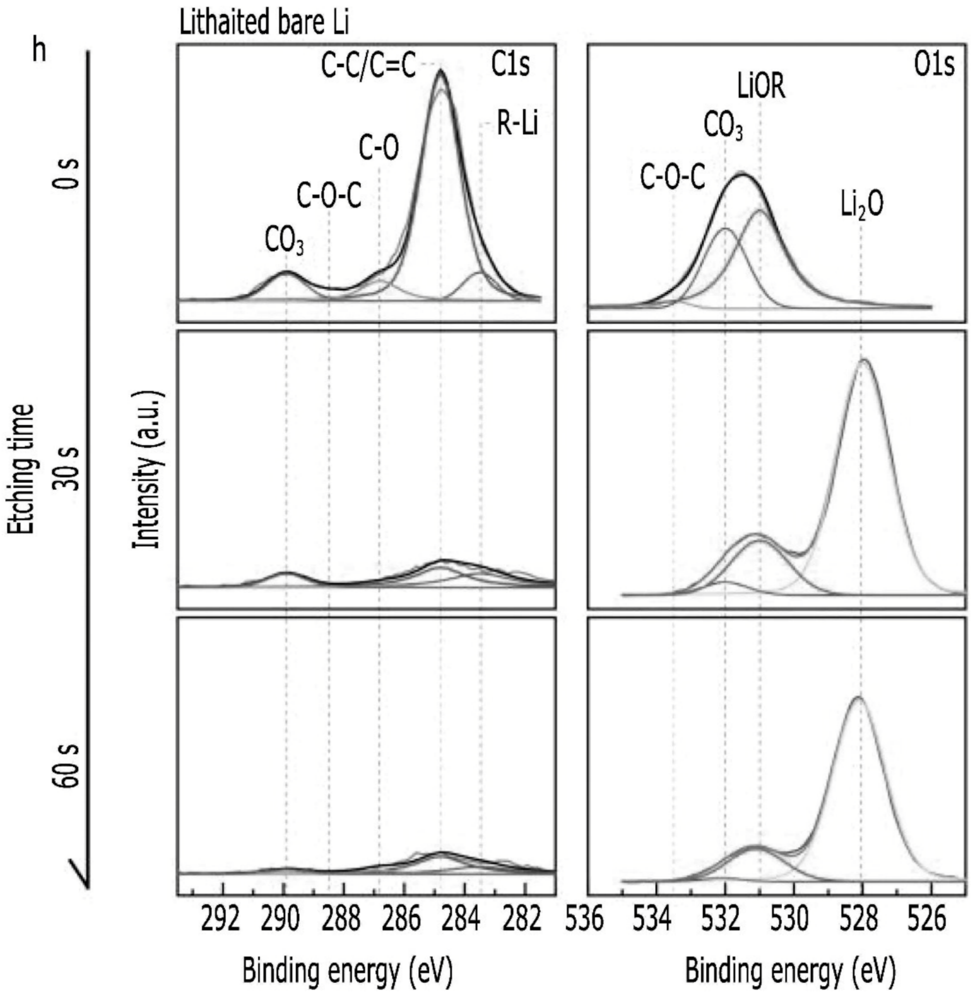
Lithaited bare Li
h
0 s
30 s
60 s
Etching time
Intensity (a.u.)
C1s
C-C/C=C
R-Li
C-O
C-O-C
CO3
O1s
LiOR
CO3
C-O-C
Li2O
292 290 288 286 284 282
536 534 532 530 528 526
Binding energy (eV)
Binding energy (eV)

FIG. 4I

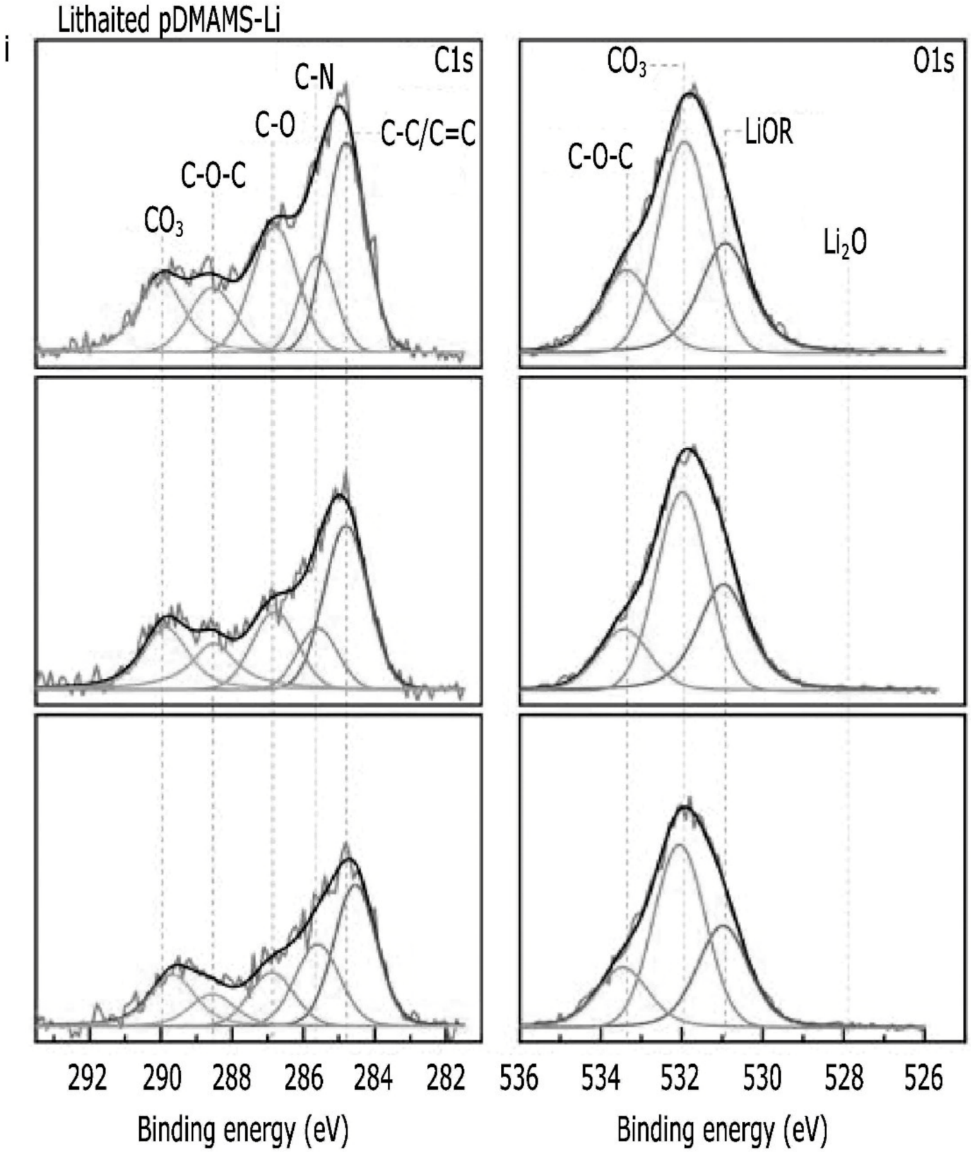
Lithaited pDMAMS-Li
i
C1s
C-N
C-O
C-C/C=C
C-O-C
CO3
O1s
CO3
LiOR
C-O-C
Li2O
292 290 288 286 284 282
Binding energy (eV)
536 534 532 530 528 526
Binding energy (eV)

FIG. 5A

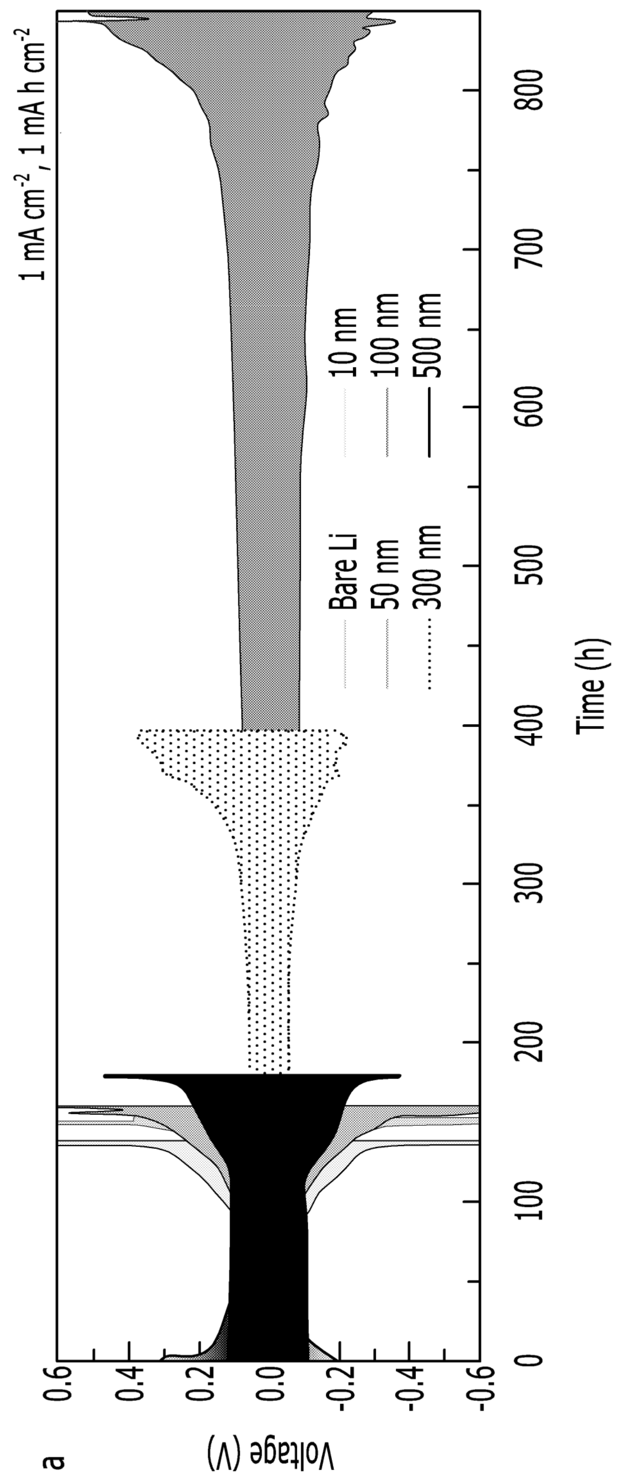
a
1 mA cm$^{-2}$, 1 mA h cm$^{-2}$
Voltage (V)
0.6
0.4
0.2
0.0
-0.2
-0.4
-0.6
Time (h)
0
100
200
300
400
500
600
700
800
Bare Li
10 nm
50 nm
100 nm
300 nm
500 nm

FIG. 5B

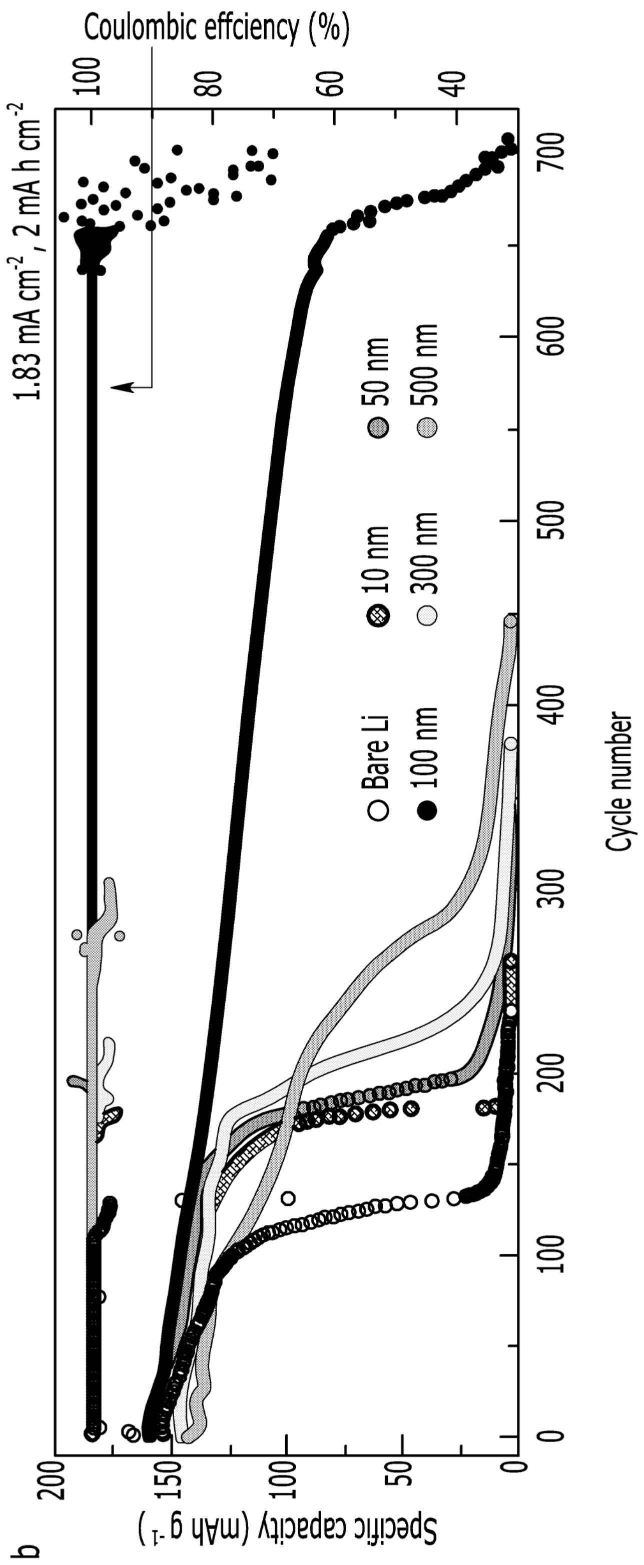
b
1.83 mA cm-2, 2 mA h cm-2
Coulombic effciency (%)
Specific capacity (mAh g-1)
Cycle number
Bare Li
100 nm
10 nm
300 nm
50 nm
500 nm

FIG. 5C

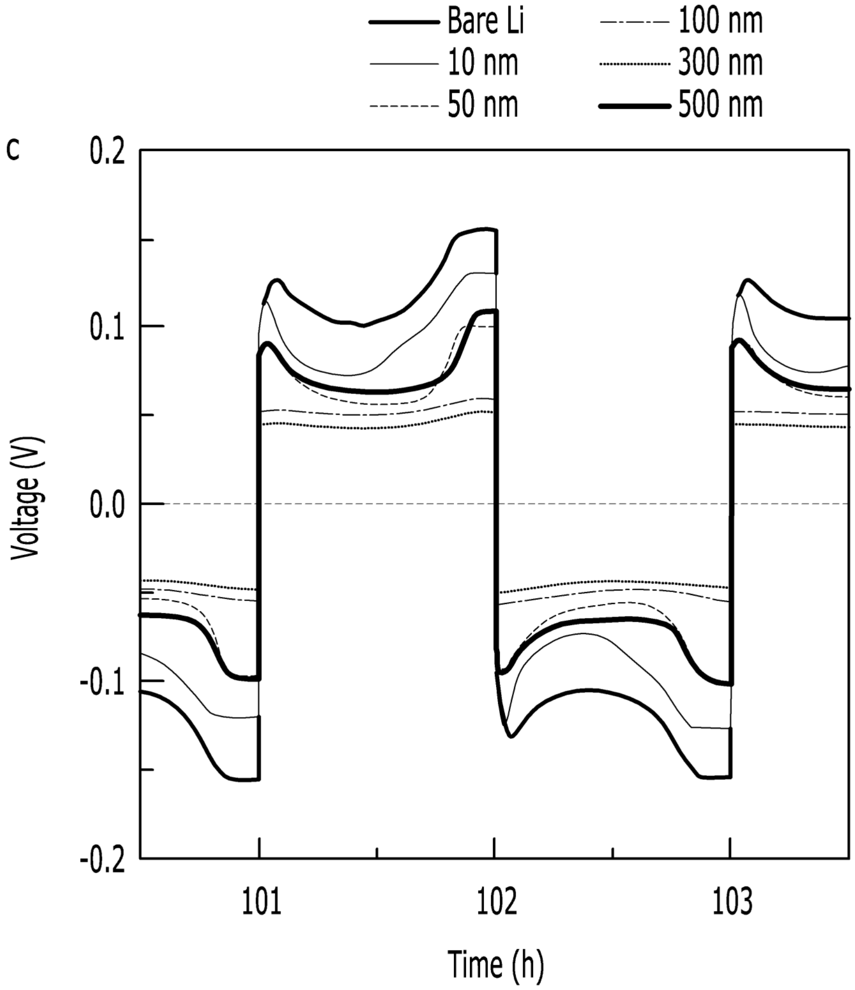
Bare Li
10 nm
50 nm
100 nm
300 nm
500 nm
c
0.2
0.1
0.0
-0.1
-0.2
Voltage (V)
101
102
103
Time (h)

FIG. 5D

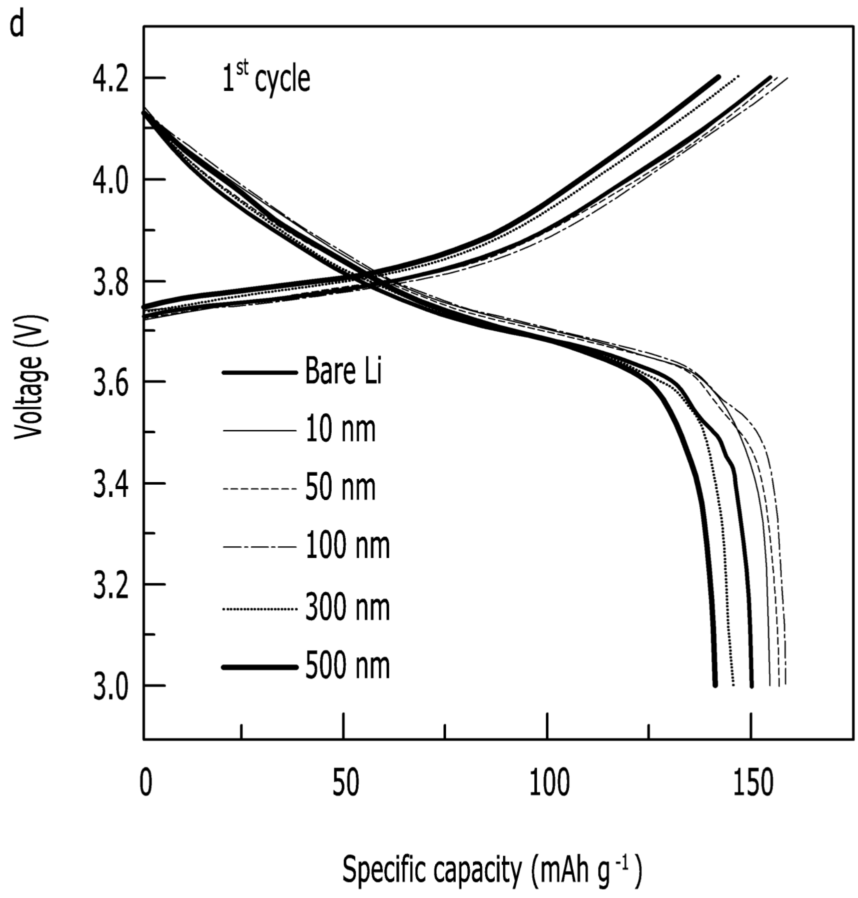
d
1st cycle
Voltage (V)
4.2
4.0
3.8
3.6
3.4
3.2
3.0
Bare Li
10 nm
50 nm
100 nm
300 nm
500 nm
0
50
100
150
Specific capacity (mAh g -1 )

FIG. 5E

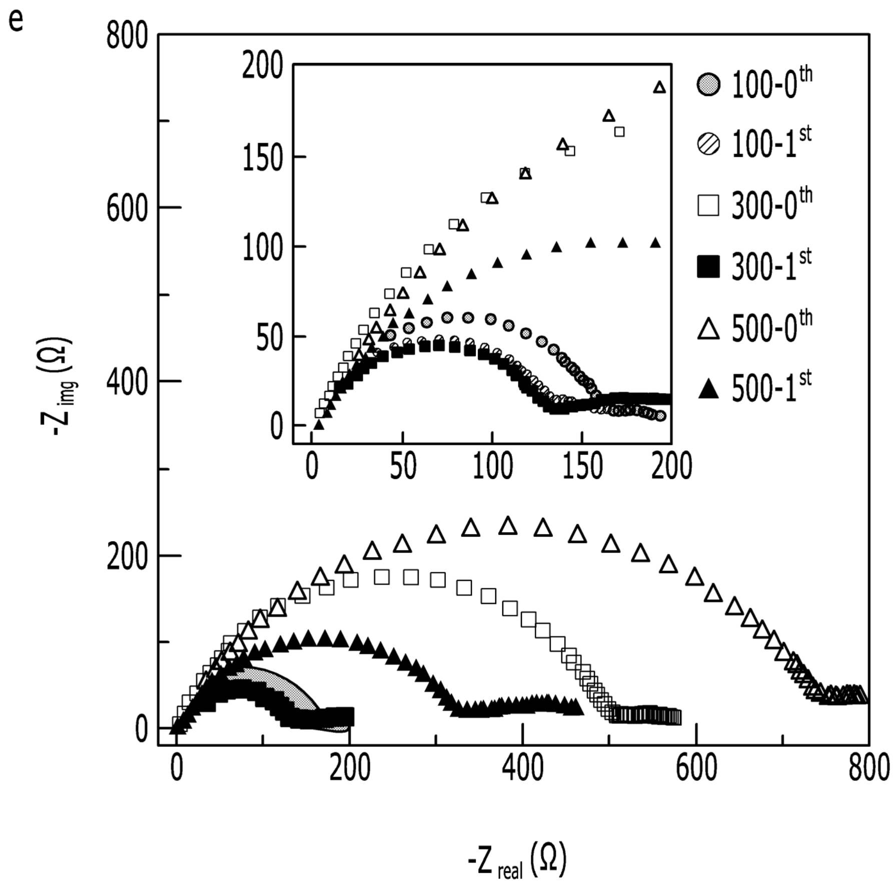
e
800
600
400
200
0
0
200
400
600
800
-Z img (Ω)
-Z real (Ω)
200
150
100
50
0
0
50
100
150
200
100-0th
100-1st
300-0th
300-1st
500-0th
500-1st

FIG. 5F

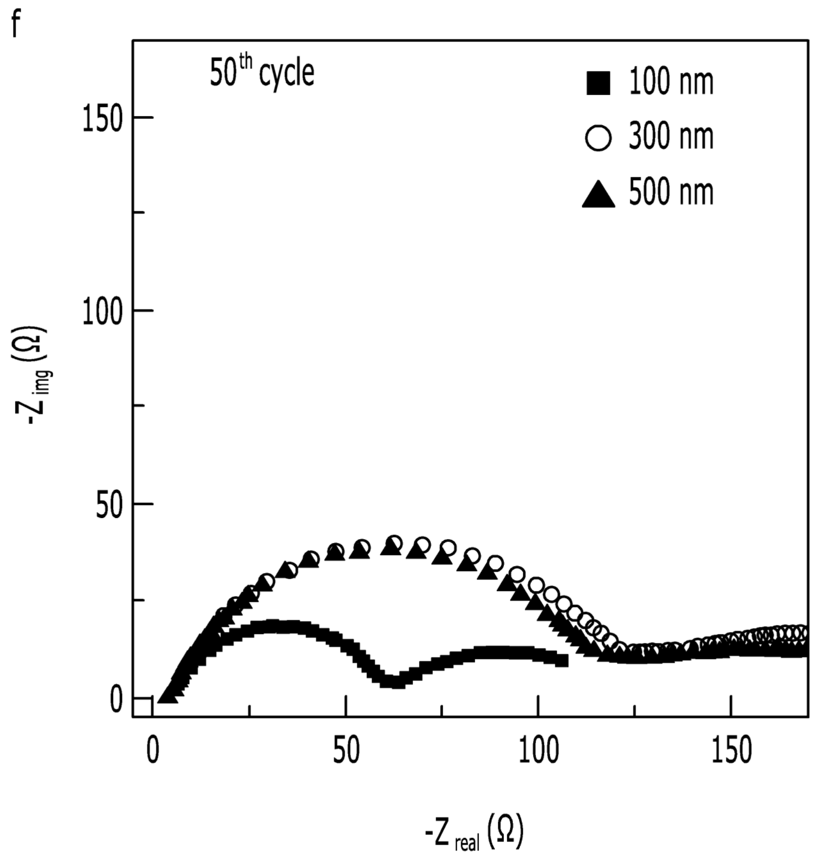
f
50th cycle
100 nm
300 nm
500 nm
150
100
50
0
-Z img (Ω)
0
50
100
150
-Z real (Ω)

FIG. 5G

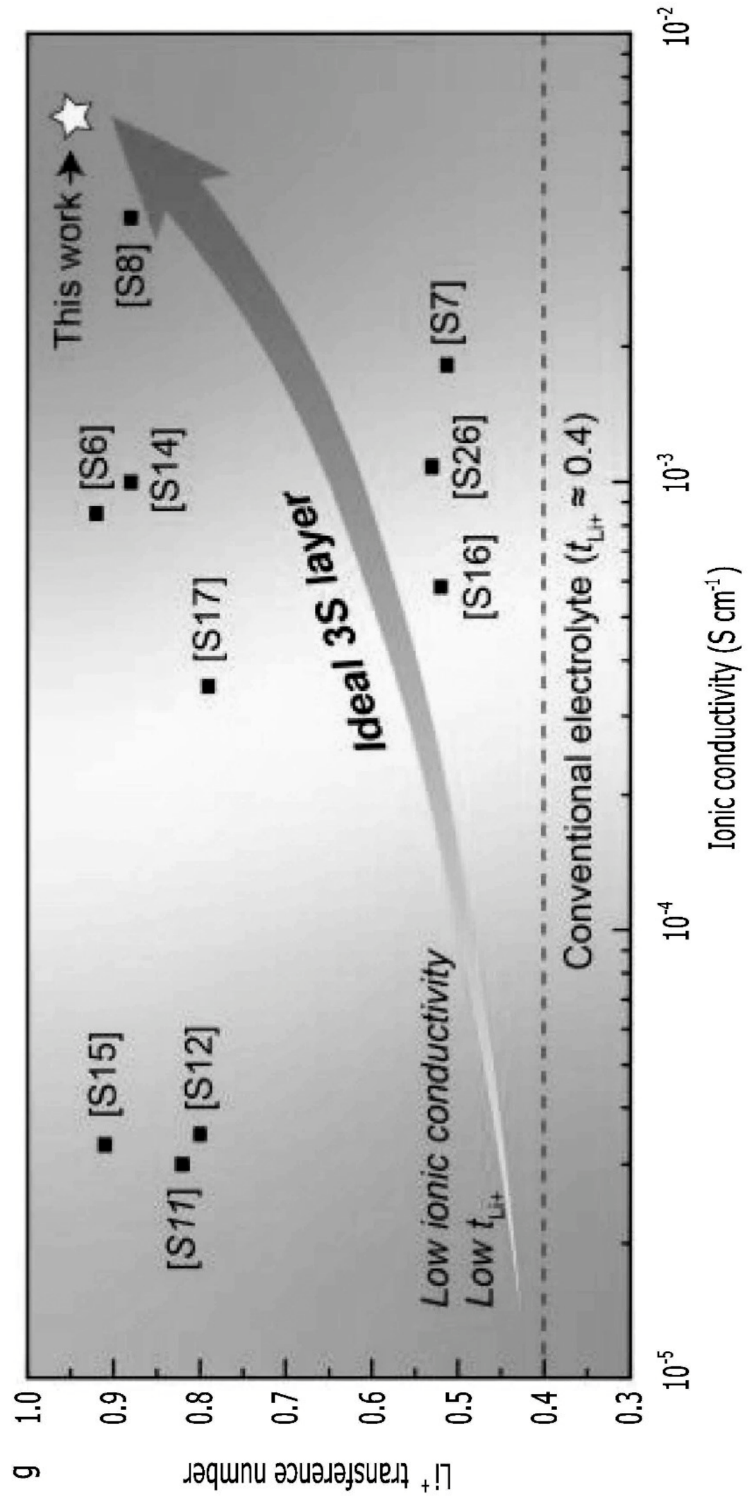
g
$Li^+$ transference number
1.0
0.9
0.8
0.7
0.6
0.5
0.4
0.3
$10^{-5}$
$10^{-4}$
$10^{-3}$
$10^{-2}$
Ionic conductivity (S $cm^{-1}$)
[S15]
[S11]
[S12]
[S17]
[S6]
[S14]
[S8]
This work
[S16]
[S26]
[S7]
Ideal 3S layer
Low ionic conductivity
Low $t_{Li+}$
Conventional electrolyte ($t_{Li+}$ ≈ 0.4)

FIG. 5H

h

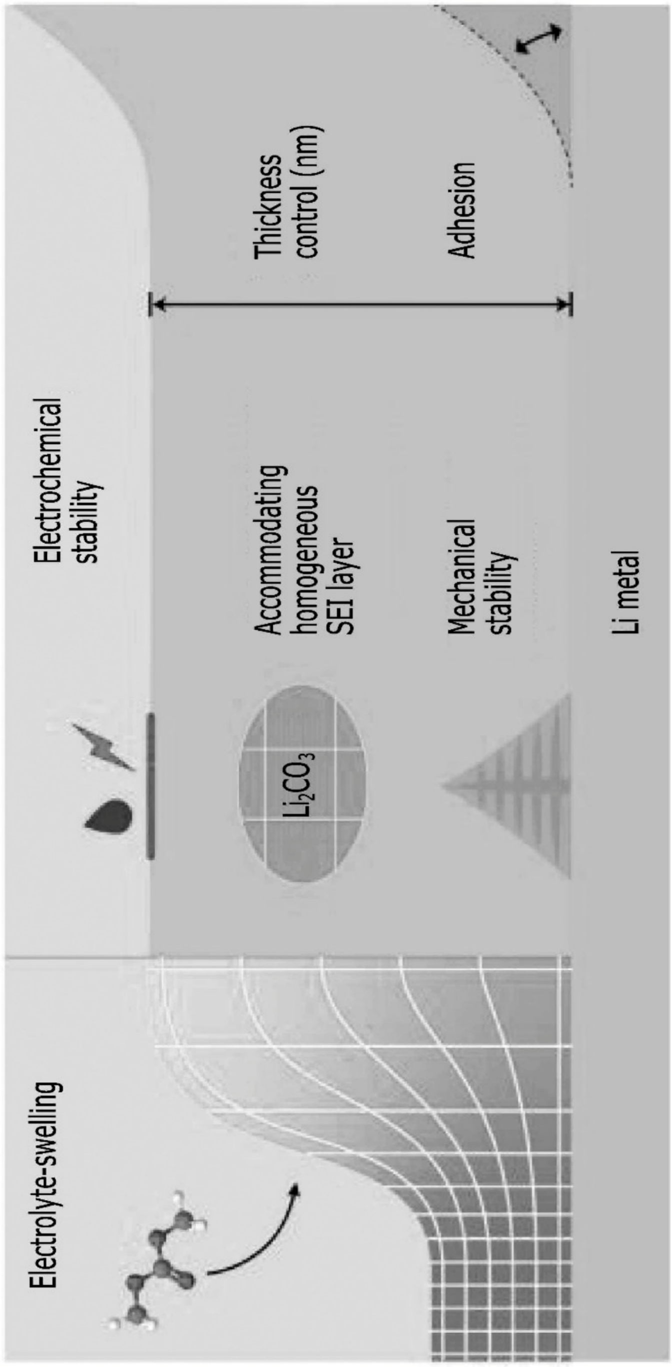
Electrolyte-swelling
Electrochemical stability
Accommodating homogeneous SEI layer
$Li_2CO_3$
Mechanical stability
Li metal
Thickness control (nm)
Adhesion

FIG. 6

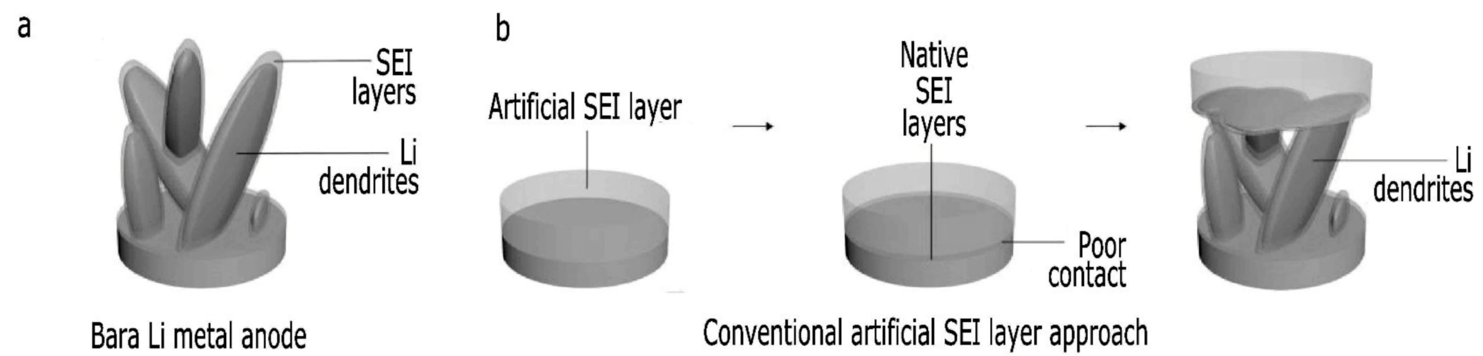
a
SEI layers
Li dendrites
Bara Li metal anode
b
Artificial SEI layer
Native SEI layers
Poor contact
Li dendrites
Conventional artificial SEI layer approach

FIG. 7

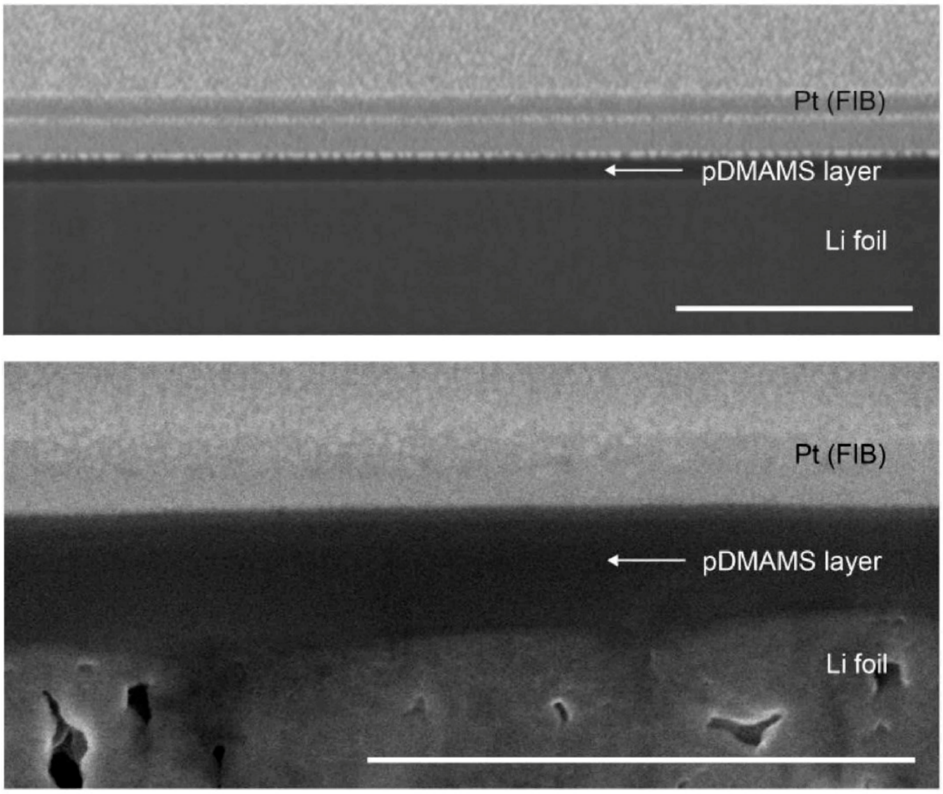

FIG. 8

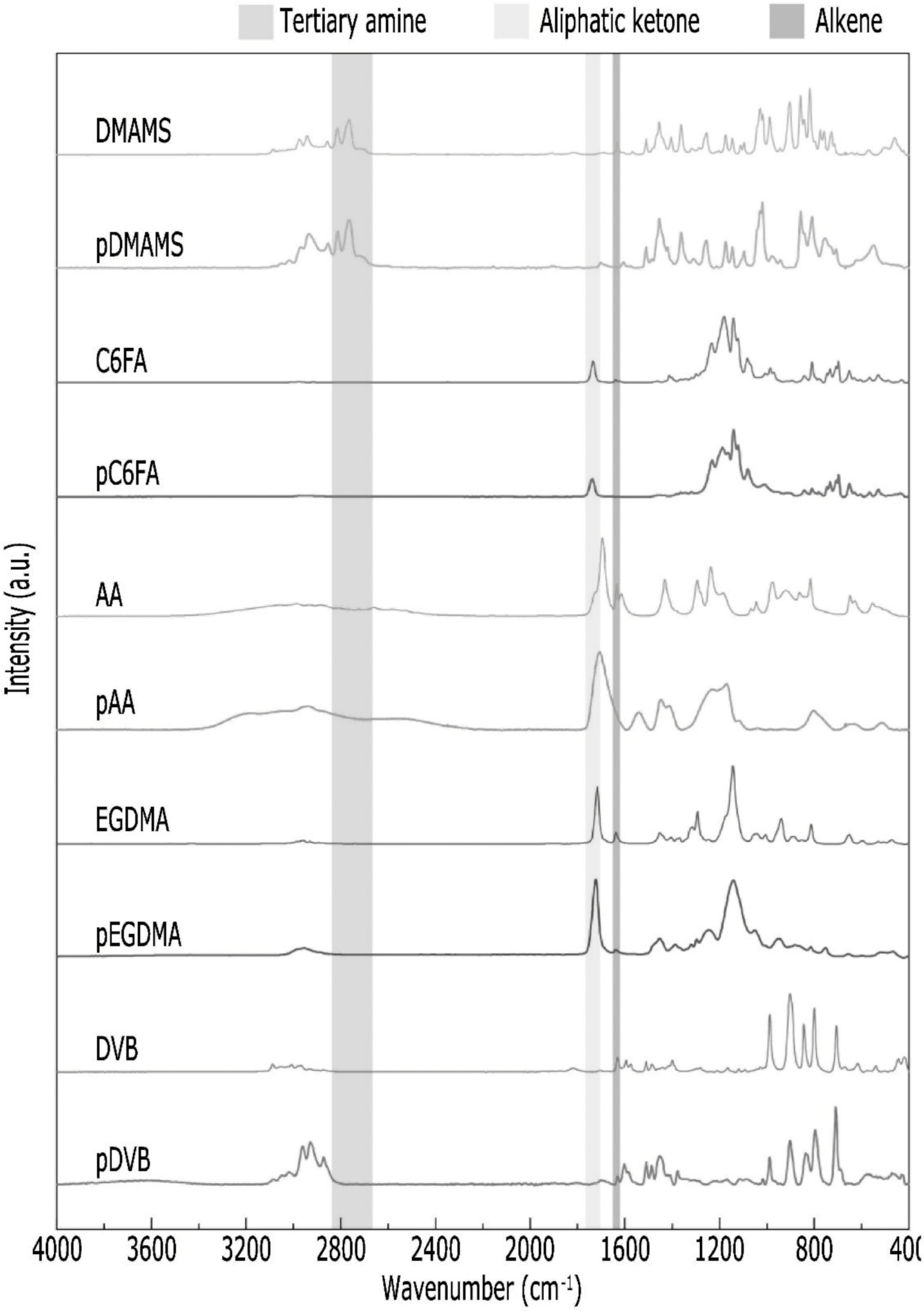
Tertiary amine
Aliphatic ketone
Alkene
DMAMS
pDMAMS
C6FA
pC6FA
AA
pAA
EGDMA
pEGDMA
DVB
pDVB
Intensity (a.u.)
4000
3600
3200
2800
2400
2000
1600
1200
800
40(
Wavenumber (cm-1)

FIG. 9

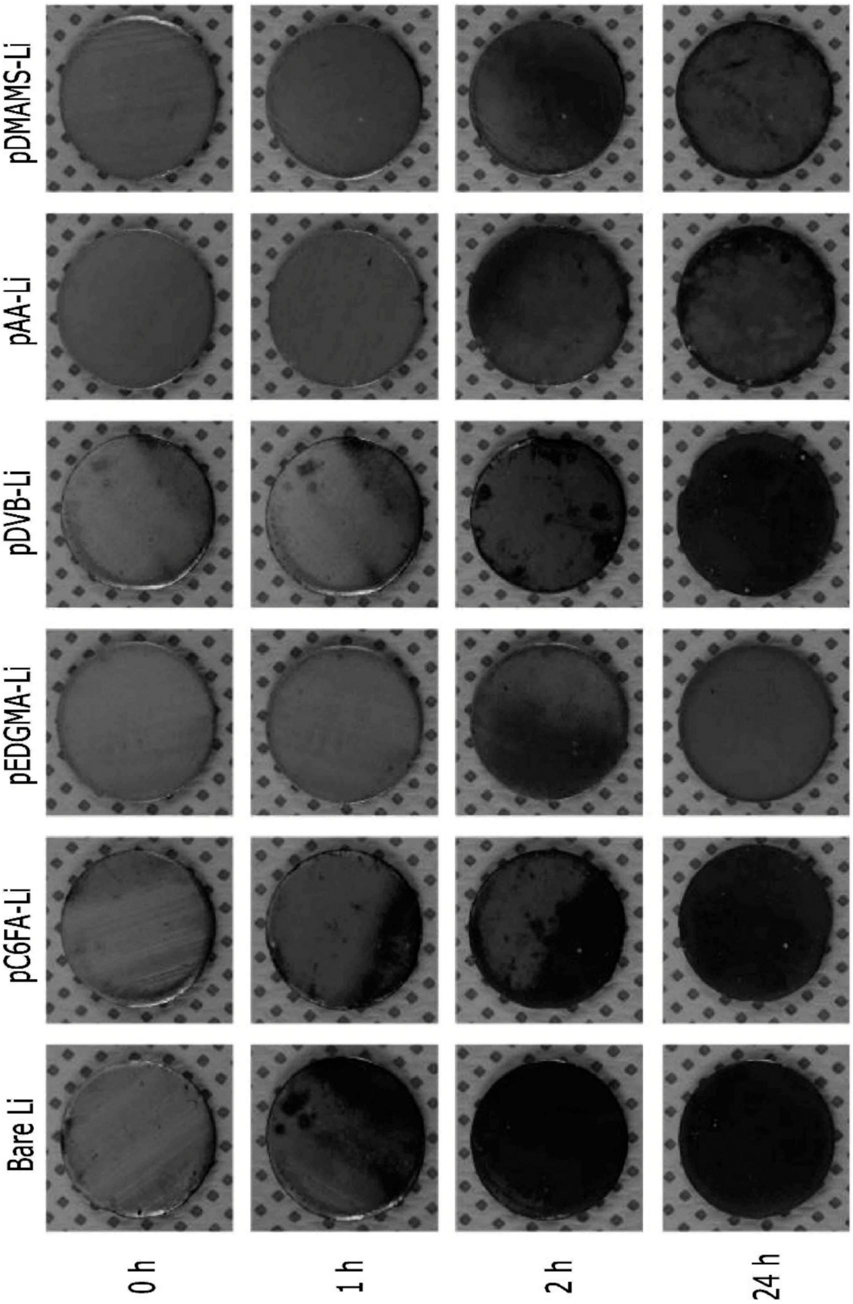

FIG. 10

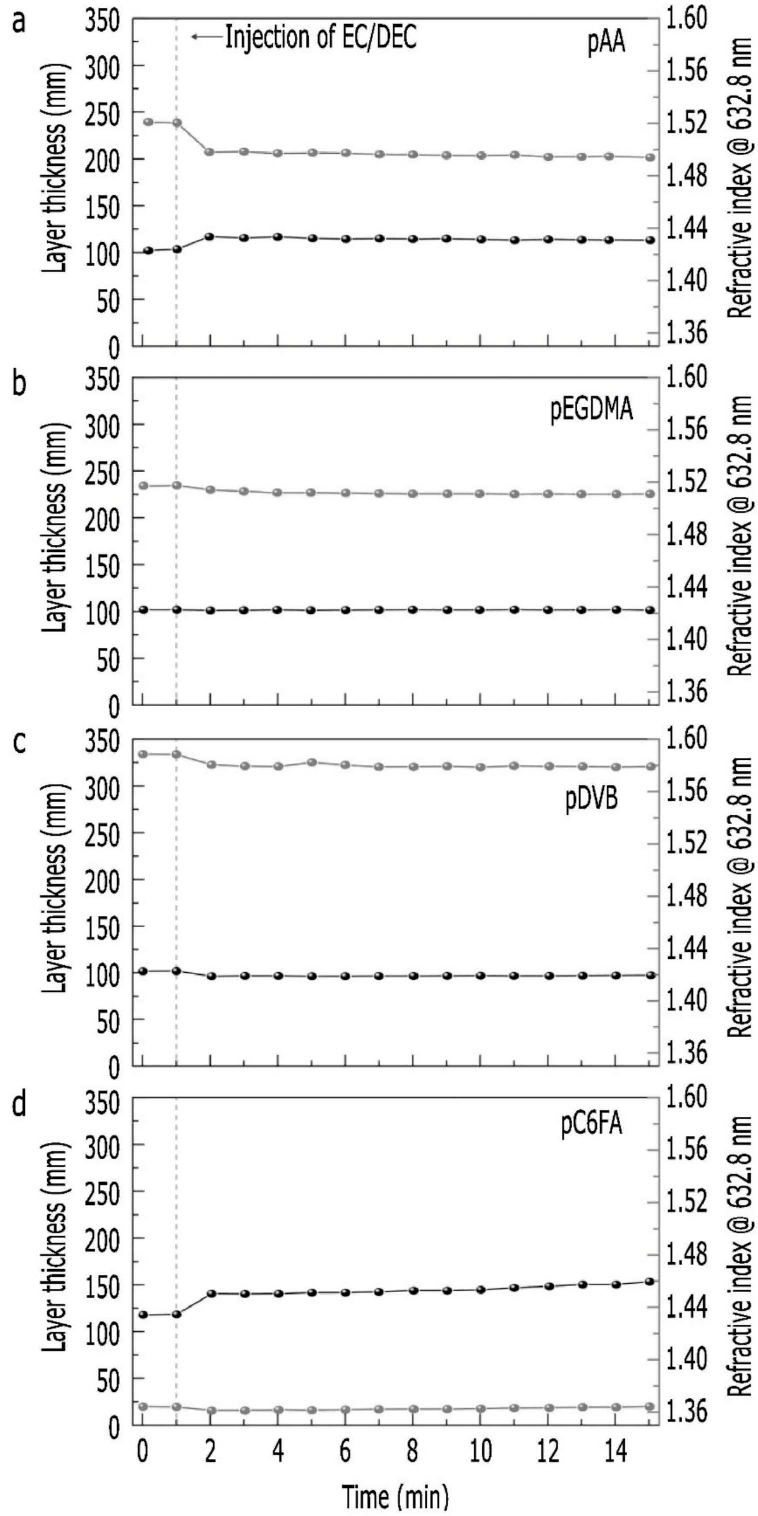
a
Injection of EC/DEC
pAA
b
pEGDMA
c
pDVB
d
pC6FA
Layer thickness (mm)
Refractive index @ 632.8 nm
350
300
250
200
150
100
50
0
1.60
1.56
1.52
1.48
1.44
1.40
1.36
0
2
4
6
8
10
12
14
Time (min)

FIG. 11

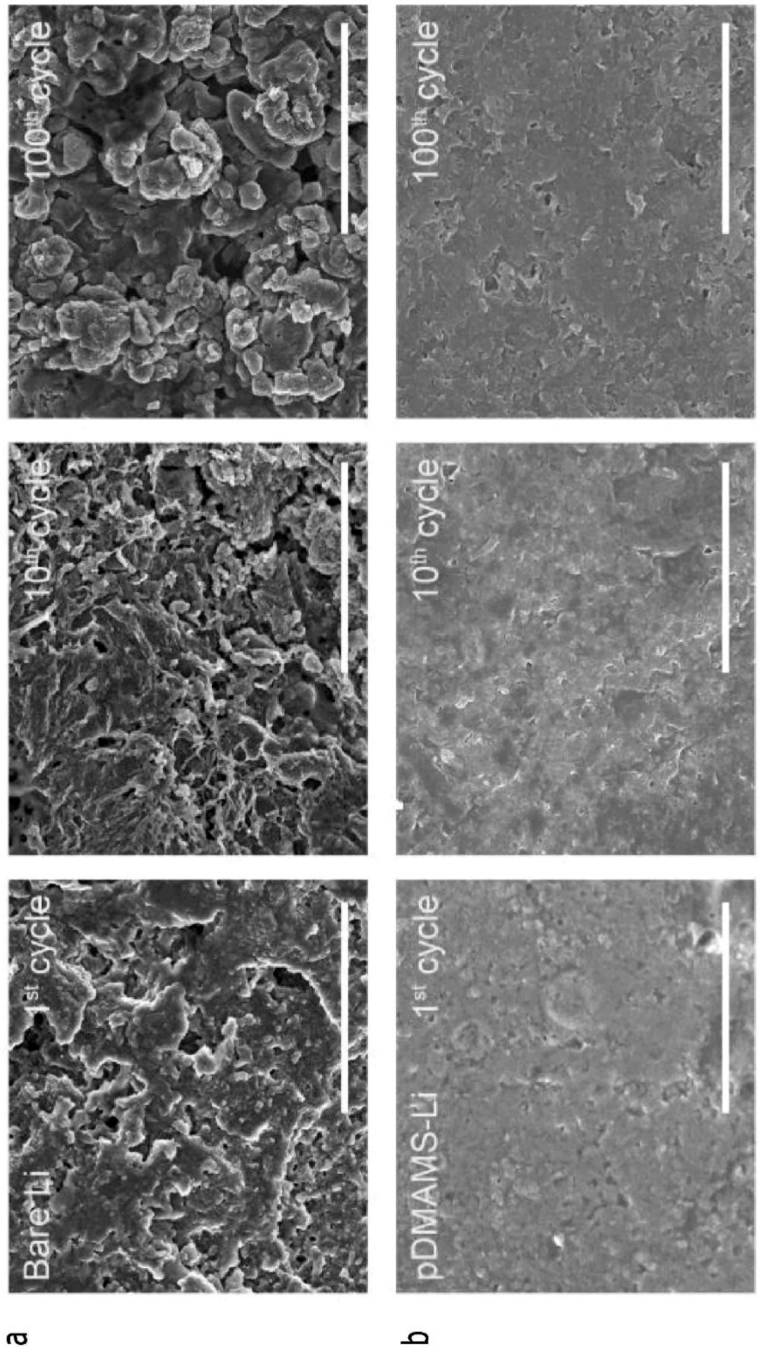
a
Bare Li
1st cycle
10th cycle
100th cycle
b
pDMAMS-Li
1st cycle
10th cycle
100th cycle

FIG. 12

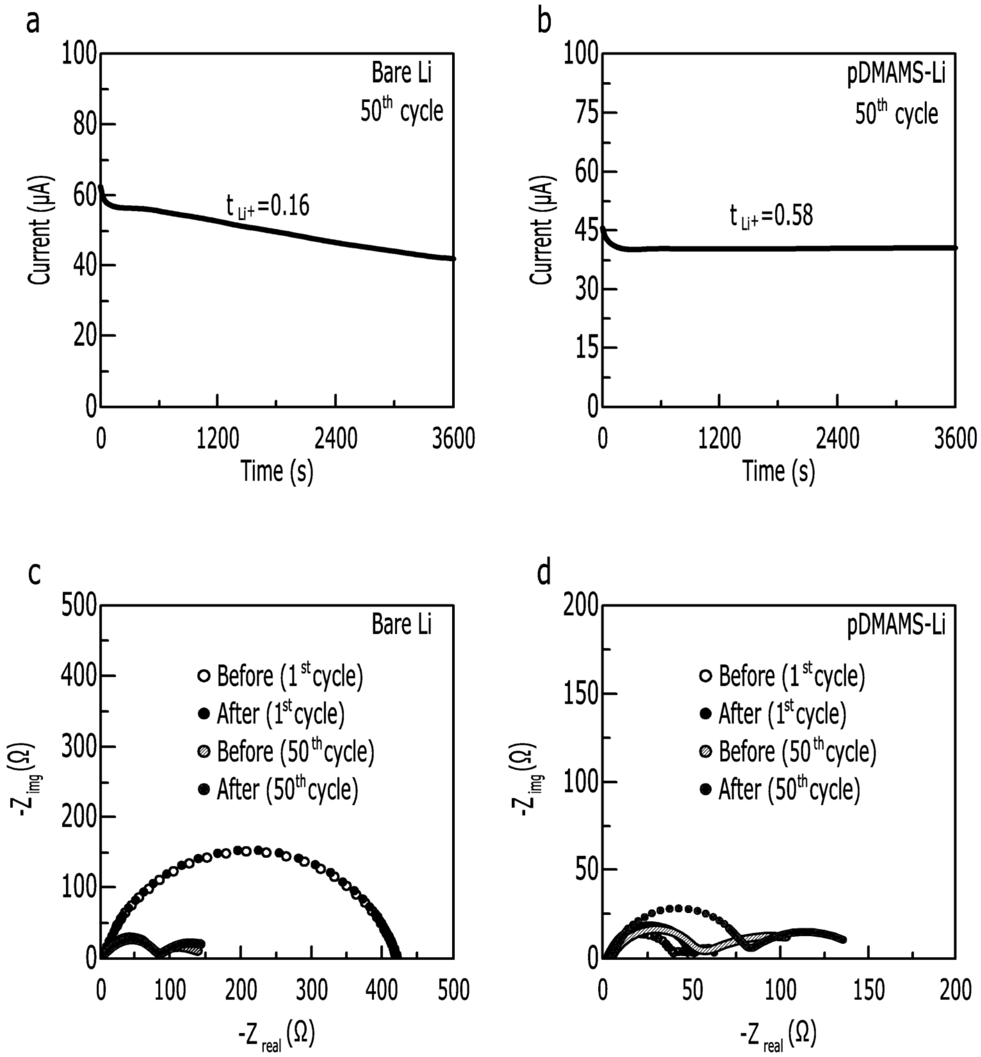
a
Current (μA)
Time (s)
Bare Li
50th cycle
t Li+ =0.16
b
pDMAMS-Li
50th cycle
t Li+ =0.58
c
Bare Li
Before (1st cycle)
After (1st cycle)
Before (50th cycle)
After (50th cycle)
-Z img (Ω)
-Z real (Ω)
d
pDMAMS-Li

FIG. 13

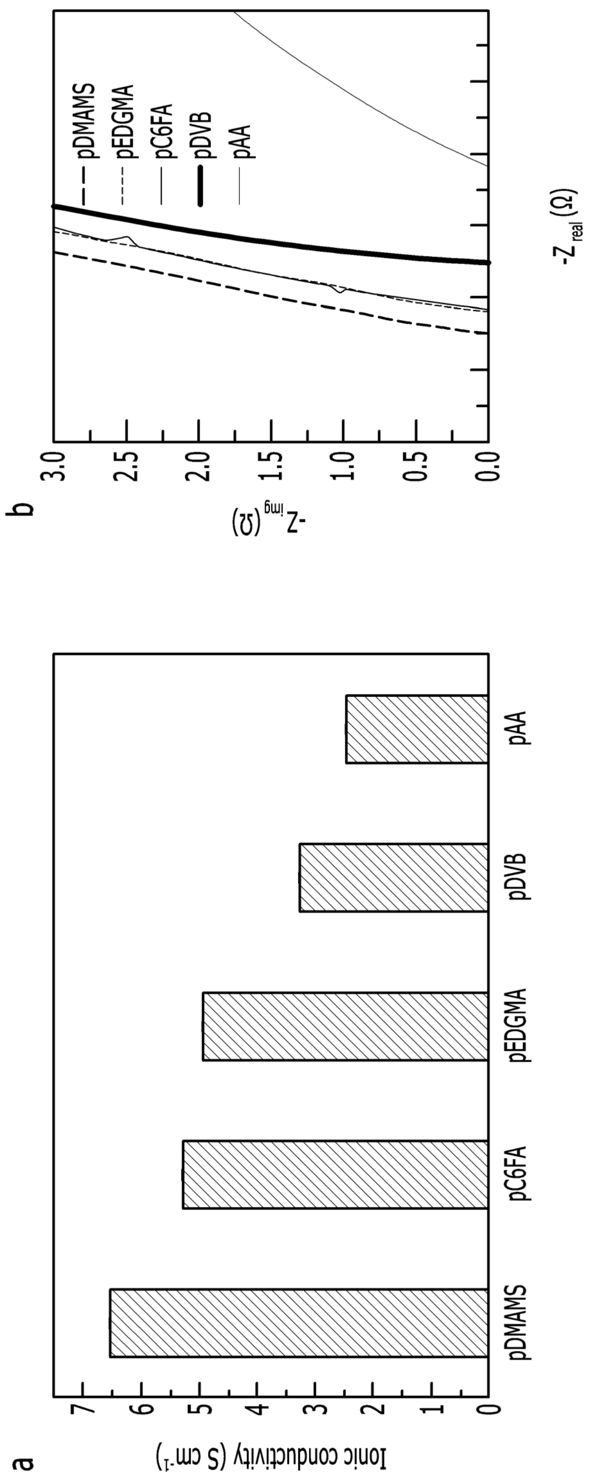
a
Ionic conductivity (S cm-1)
0
1
2
3
4
5
6
7
pDMAMS
pC6FA
pEDGMA
pDVB
pAA
b
-Z img (Ω)
0.0
0.5
1.0
1.5
2.0
2.5
3.0
-Z real (Ω)
pDMAMS
pEDGMA
pC6FA
pDVB
pAA

FIG. 14

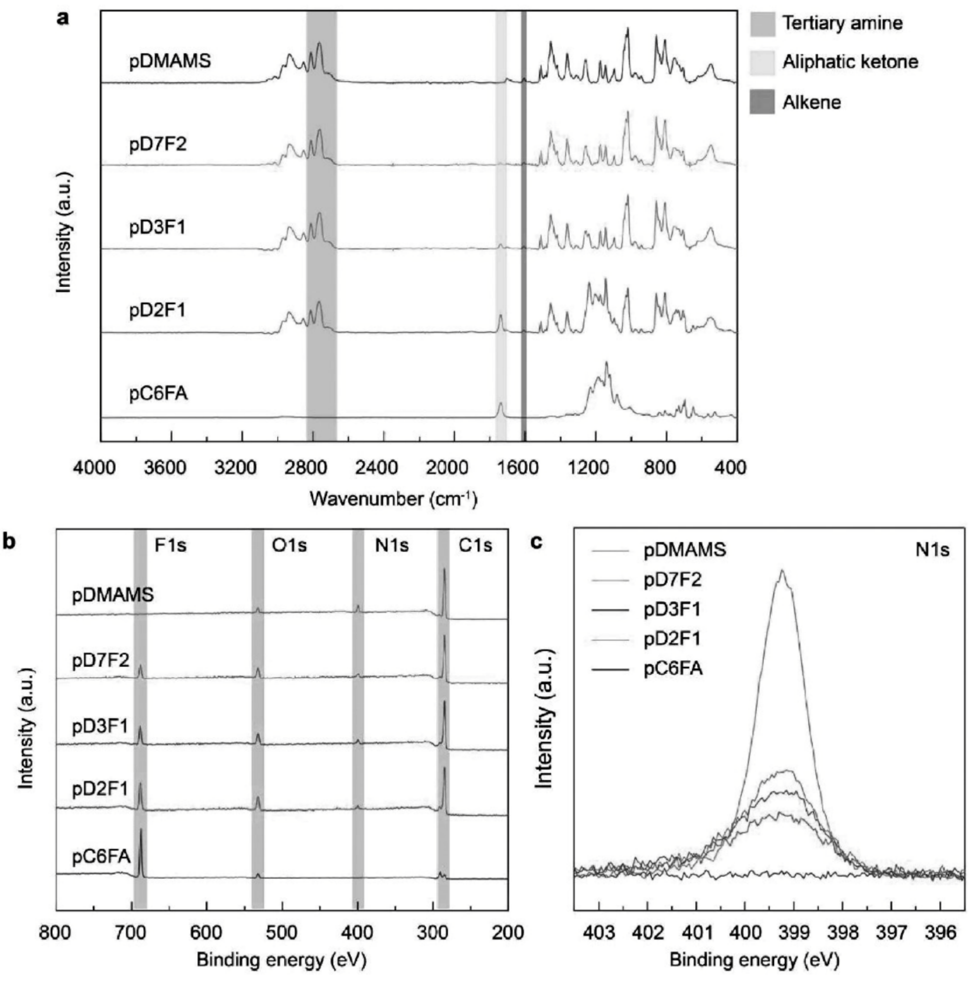
a
Tertiary amine
Aliphatic ketone
Alkene
pDMAMS
pD7F2
pD3F1
pD2F1
pC6FA
Intensity (a.u.)
4000 3600 3200 2800 2400 2000 1600 1200 800 400
Wavenumber (cm-1)
b
F1s
O1s
N1s
C1s
pDMAMS
pD7F2
pD3F1
pD2F1
pC6FA
Intensity (a.u.)
800 700 600 500 400 300 200
Binding energy (eV)
c
pDMAMS
pD7F2
pD3F1
pD2F1
pC6FA
N1s
Intensity (a.u.)
403 402 401 400 399 398 397 396
Binding energy (eV)

FIG. 15

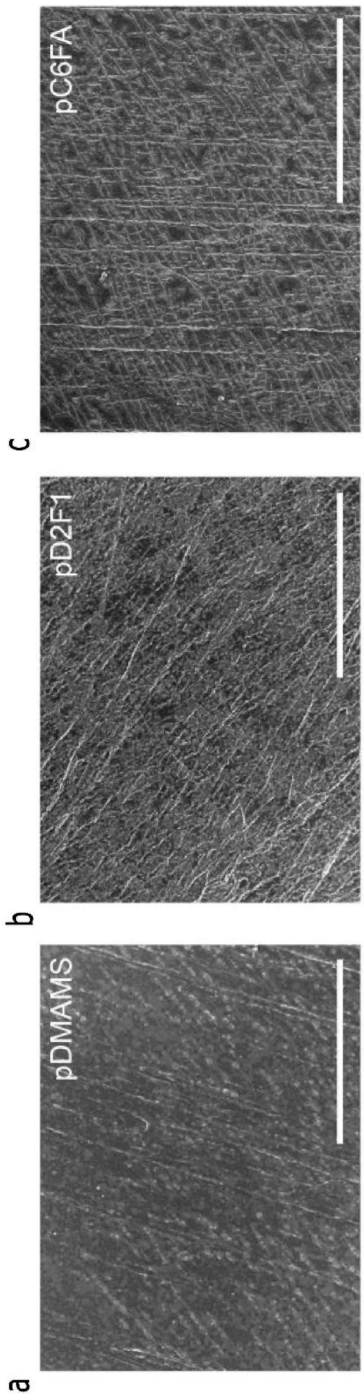

FIG. 16

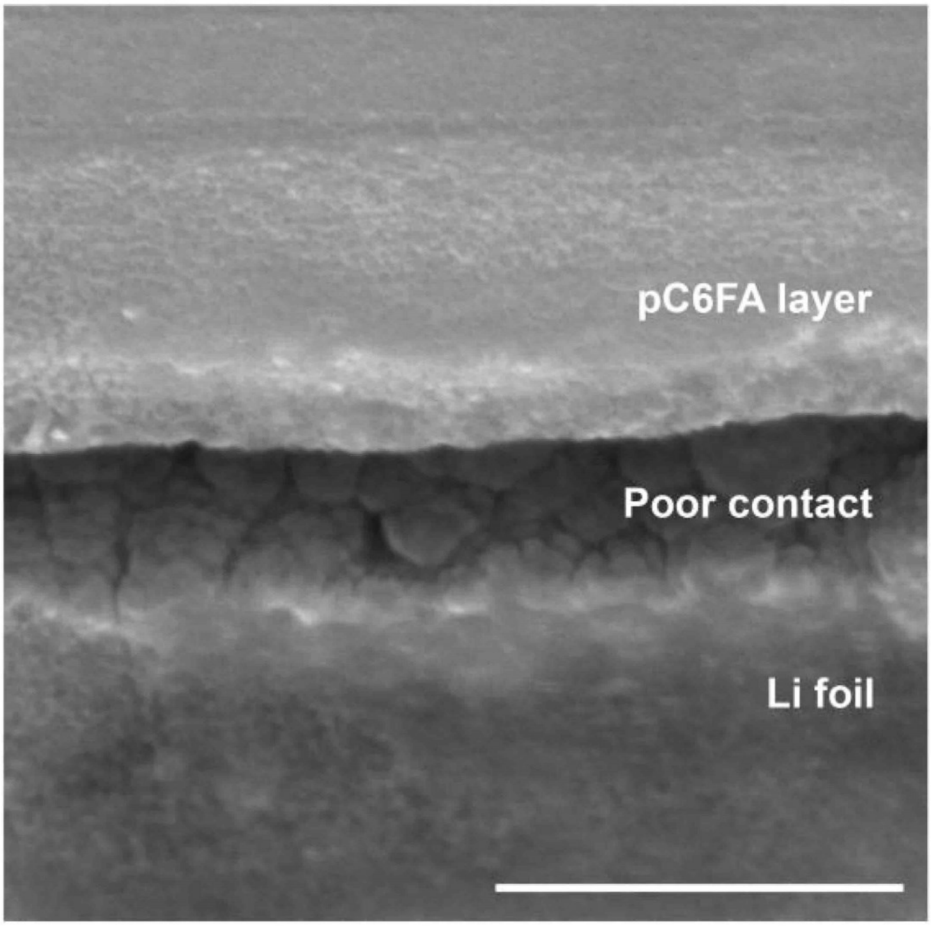

FIG. 17

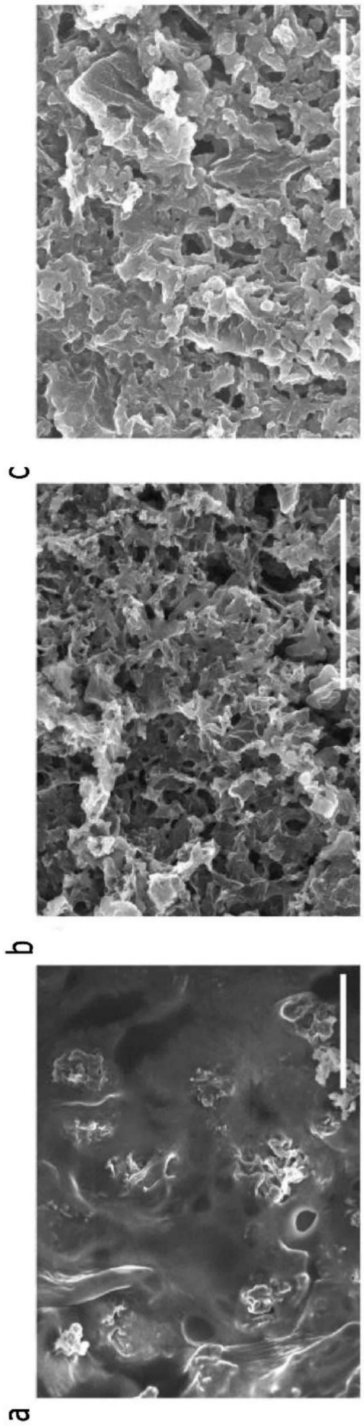

FIG. 18

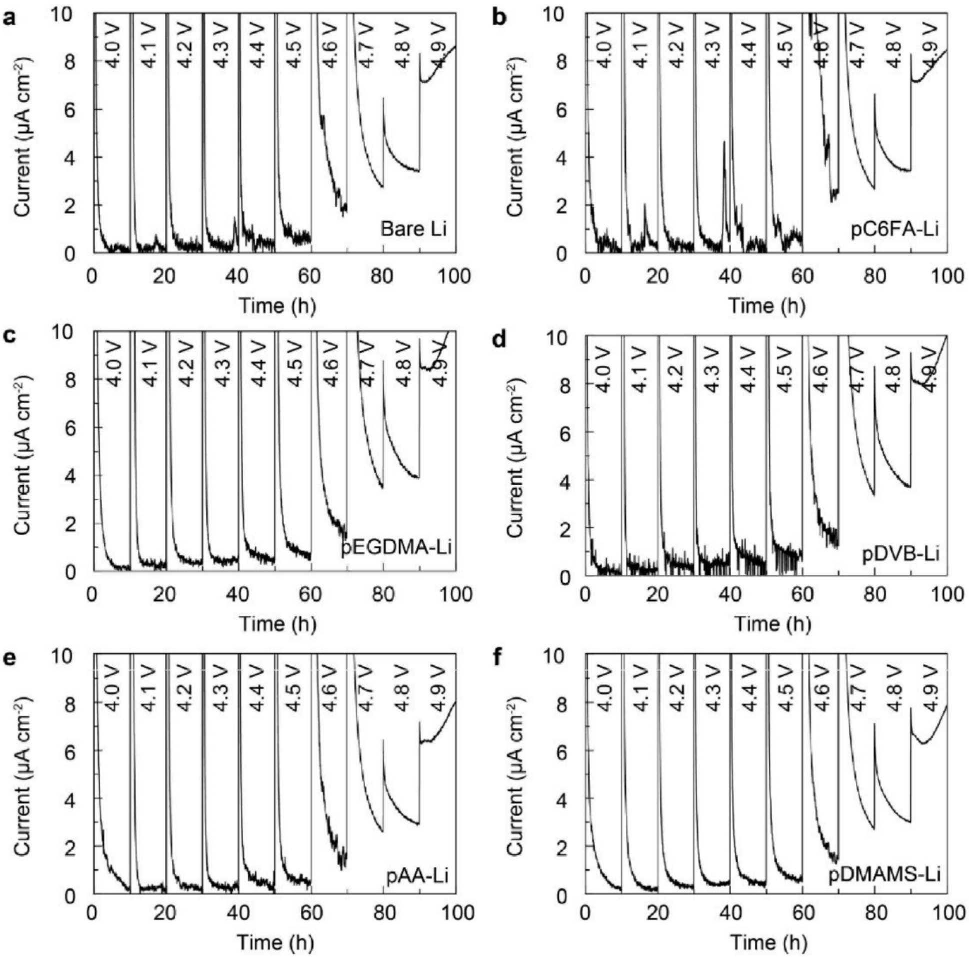
a
b
c
d
e
f
Current (μA cm⁻²)
Time (h)
4.0 V
4.1 V
4.2 V
4.3 V
4.4 V
4.5 V
4.6 V
4.7 V
4.8 V
4.9 V
Bare Li
pC6FA-Li
pEGDMA-Li
pDVB-Li
pAA-Li
pDMAMS-Li

FIG. 19

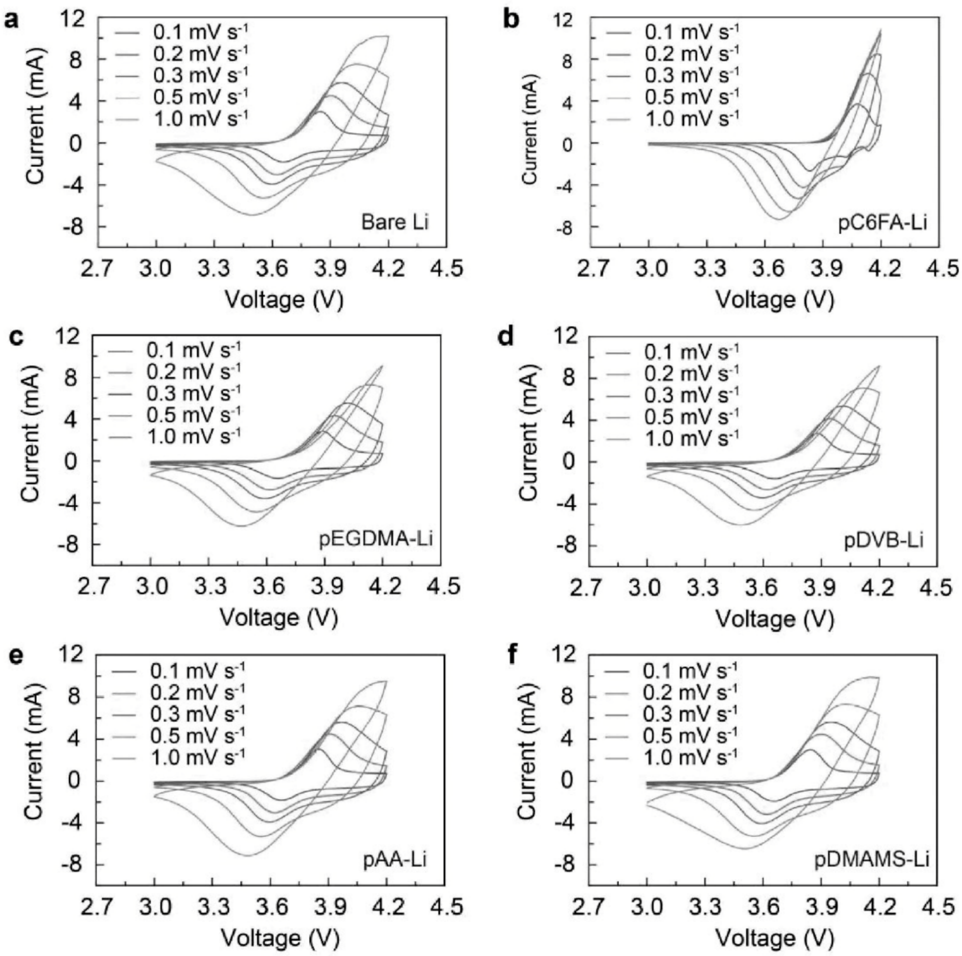
a
b
c
d
e
f
0.1 mV s-1
0.2 mV s-1
0.3 mV s-1
0.5 mV s-1
1.0 mV s-1
Current (mA)
Voltage (V)
Bare Li
pC6FA-Li
pEGDMA-Li
pDVB-Li
pAA-Li
pDMAMS-Li

FIG. 20

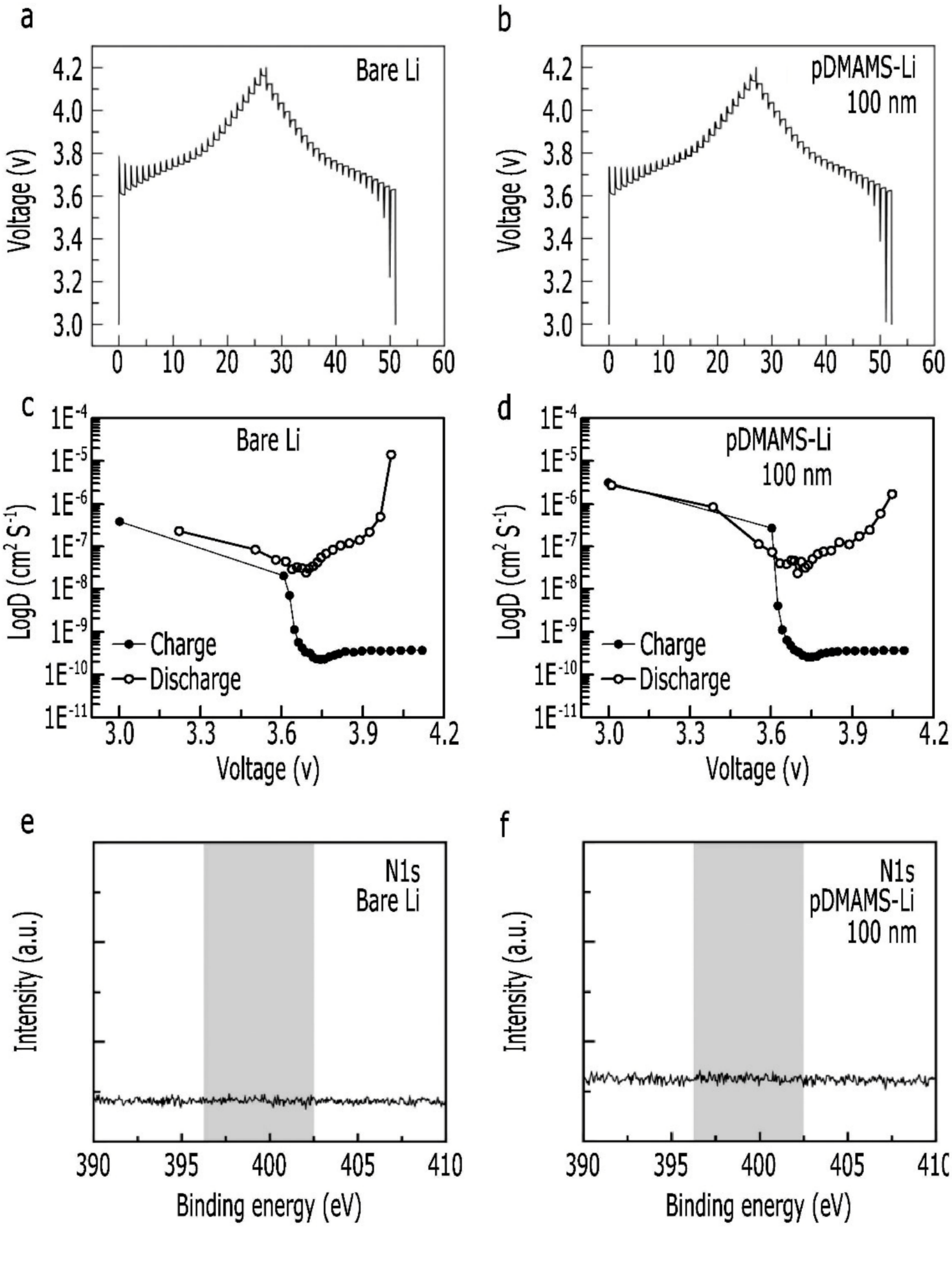
a
Bare Li
Voltage (v)
4.2
4.0
3.8
3.6
3.4
3.2
3.0
0 10 20 30 40 50 60
b
pDMAMS-Li
100 nm
c
LogD (cm² S⁻¹)
1E-4
1E-5
1E-6
1E-7
1E-8
1E-9
1E-10
1E-11
Charge
Discharge
3.0 3.3 3.6 3.9 4.2
Voltage (v)
d
e
N1s
Bare Li
Intensity (a.u.)
390 395 400 405 410
Binding energy (eV)
f
N1s
pDMAMS-Li
100 nm

FIG. 21

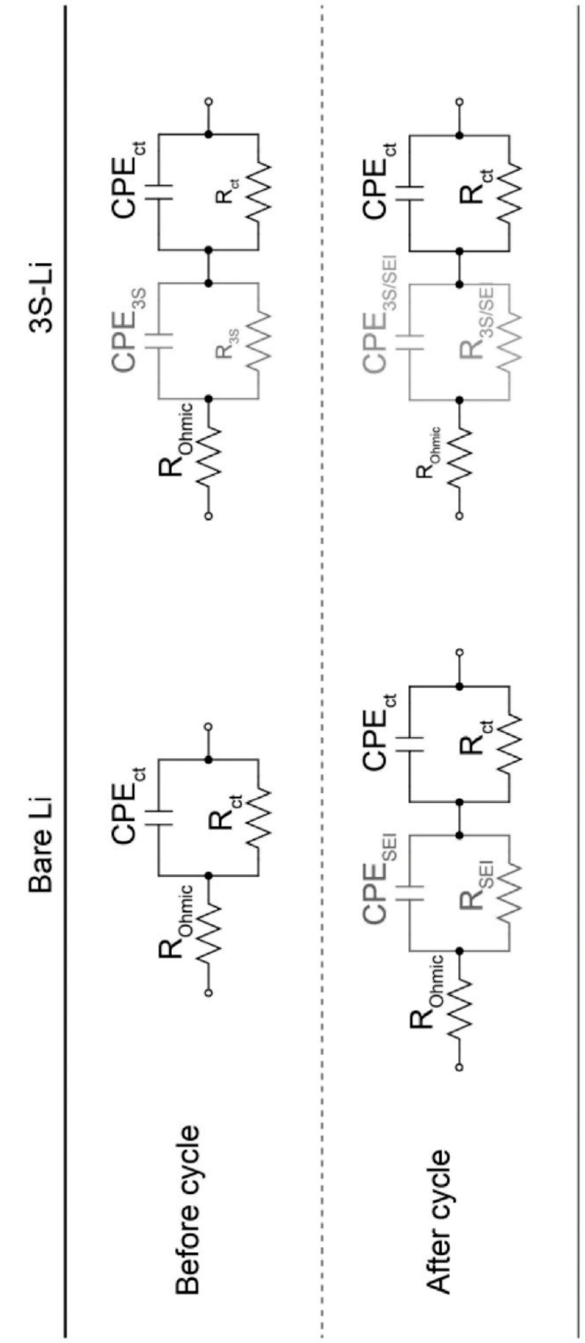

Bare Li
3S-Li
Before cycle
After cycle
R_Ohmic
CPE_ct
R_ct
CPE_3S
R_3S
CPE_SEI
R_SEI
CPE_3S/SEI
R_3S/SEI

FIG. 22

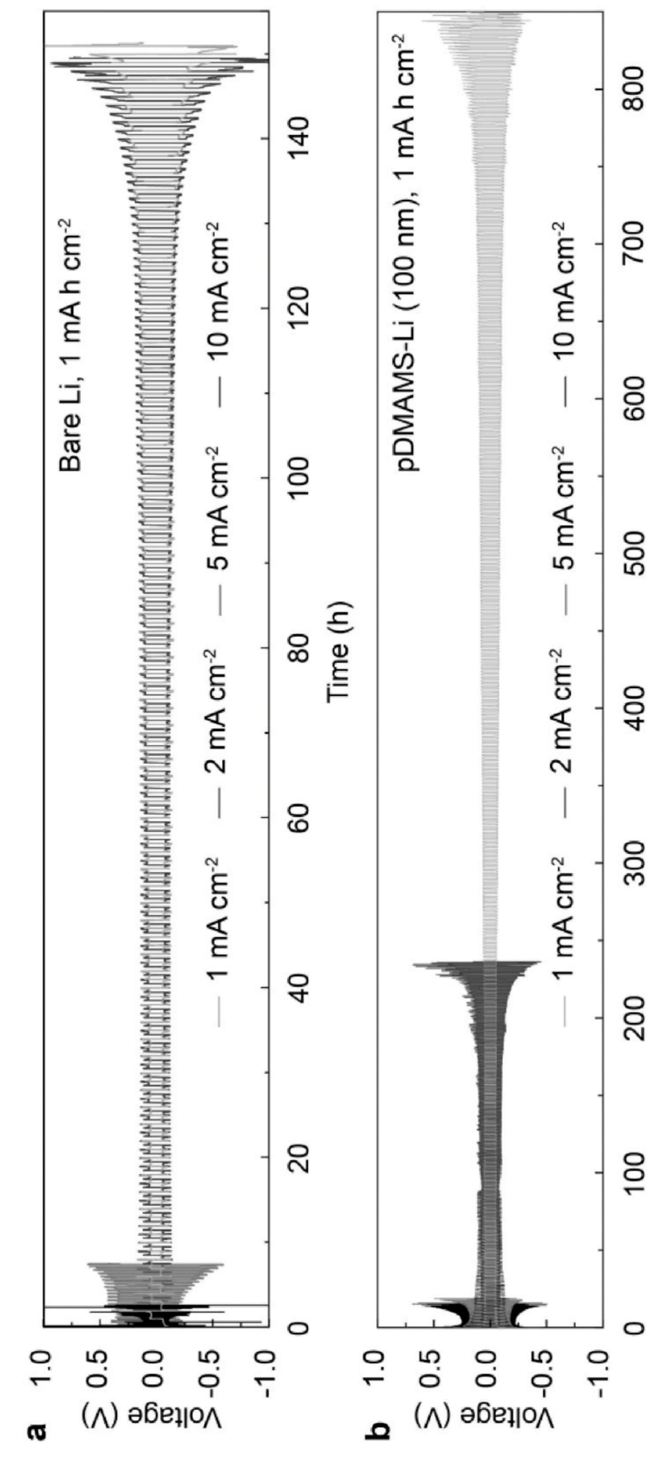
a
Bare Li, 1 mA h cm-2
1 mA cm-2
2 mA cm-2
5 mA cm-2
10 mA cm-2
Voltage (V)
Time (h)
b
pDMAMS-Li (100 nm), 1 mA h cm-2
1 mA cm-2
2 mA cm-2
5 mA cm-2
10 mA cm-2
Voltage (V)

FIG. 23

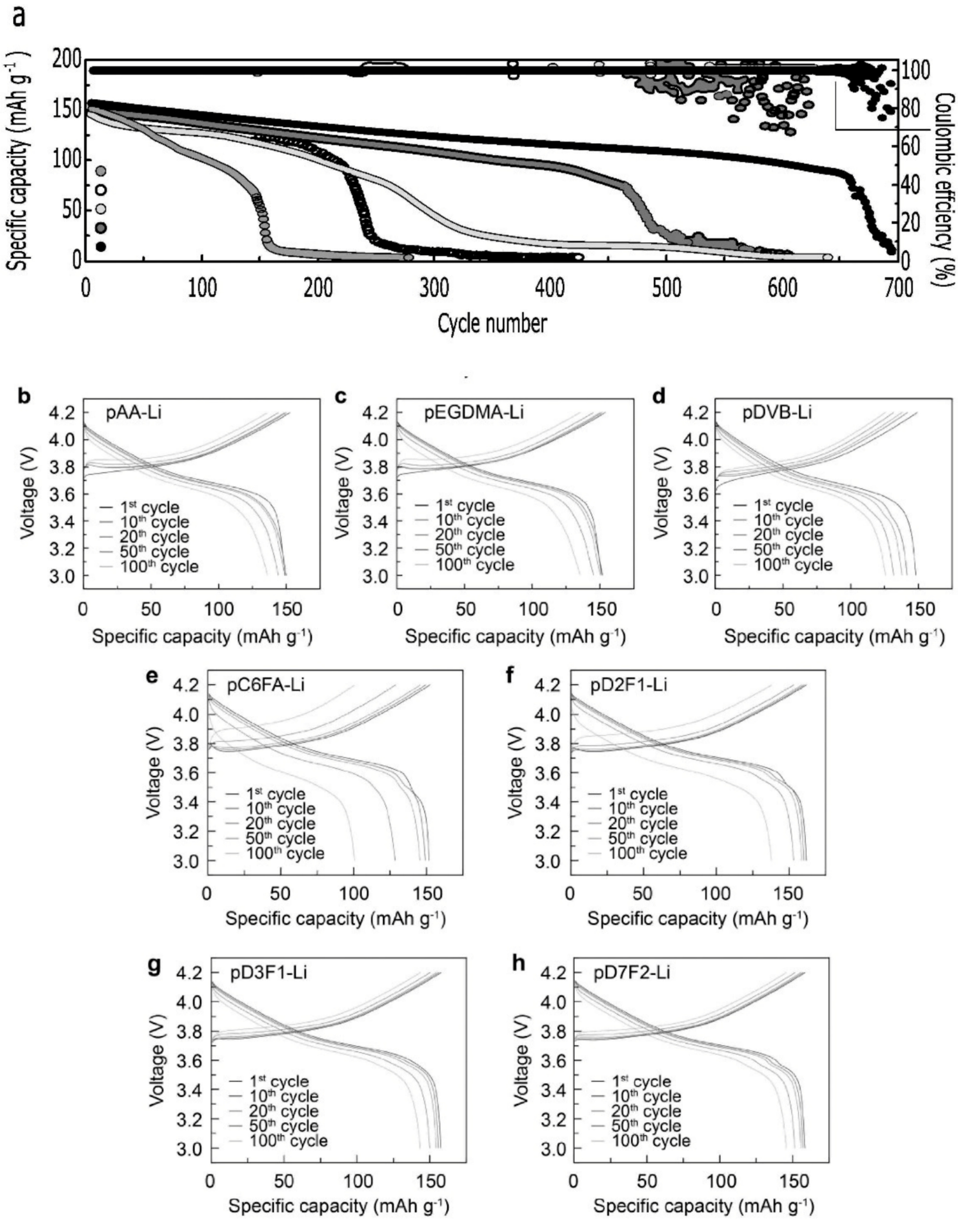
a
Specific capacity (mAh g-1)
Coulombic efficiency (%)
Cycle number
b pAA-Li
c pEGDMA-Li
d pDVB-Li
e pC6FA-Li
f pD2F1-Li
g pD3F1-Li
h pD7F2-Li
Voltage (V)
Specific capacity (mAh g-1)
1st cycle
10th cycle
20th cycle
50th cycle
100th cycle

FIG. 24

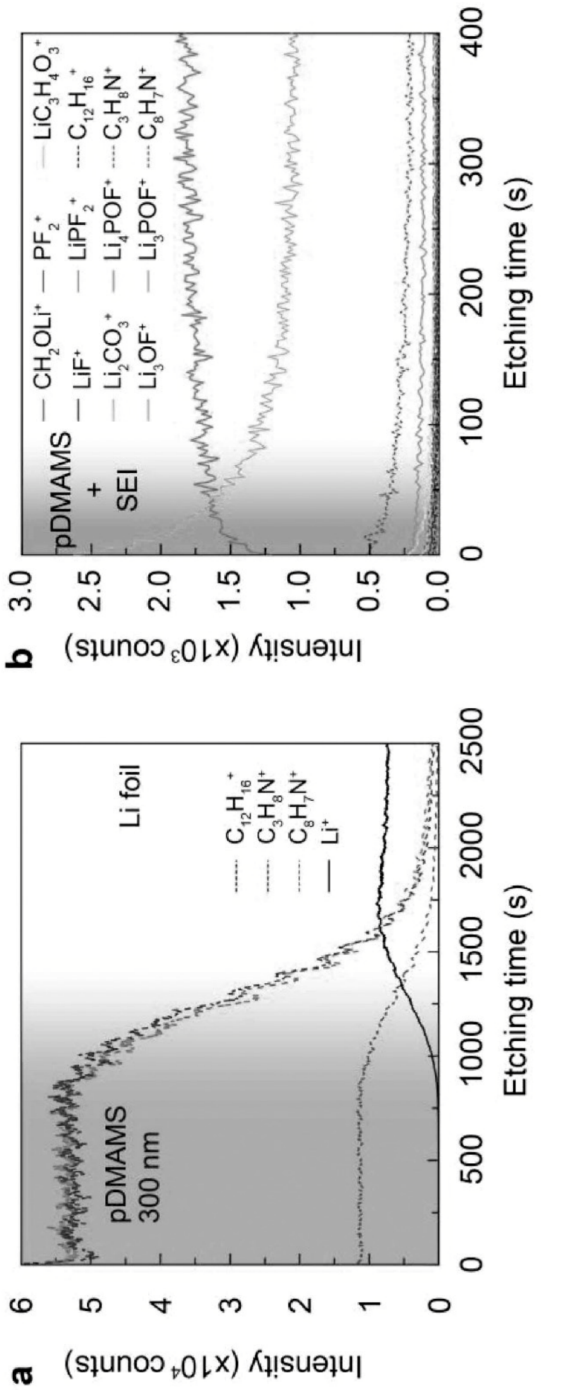
a
Intensity (x10⁴ counts)
Etching time (s)
pDMAMS
300 nm
Li foil
$C_{12}H_{16}^+$
$C_3H_8N^+$
$C_8H_7N^+$
$Li^+$
b
Intensity (x10³ counts)
Etching time (s)
pDMAMS
+
SEI
$CH_2OLi^+$
$PF_2^+$
$LiC_3H_4O_3^+$
$LiF^+$
$LiPF_2^+$
$C_{12}H_{16}^+$
$Li_2CO_3^+$
$Li_4POF^+$
$C_3H_8N^+$
$Li_3OF^+$
$Li_3POF^+$
$C_8H_7N^+$

FIG. 25

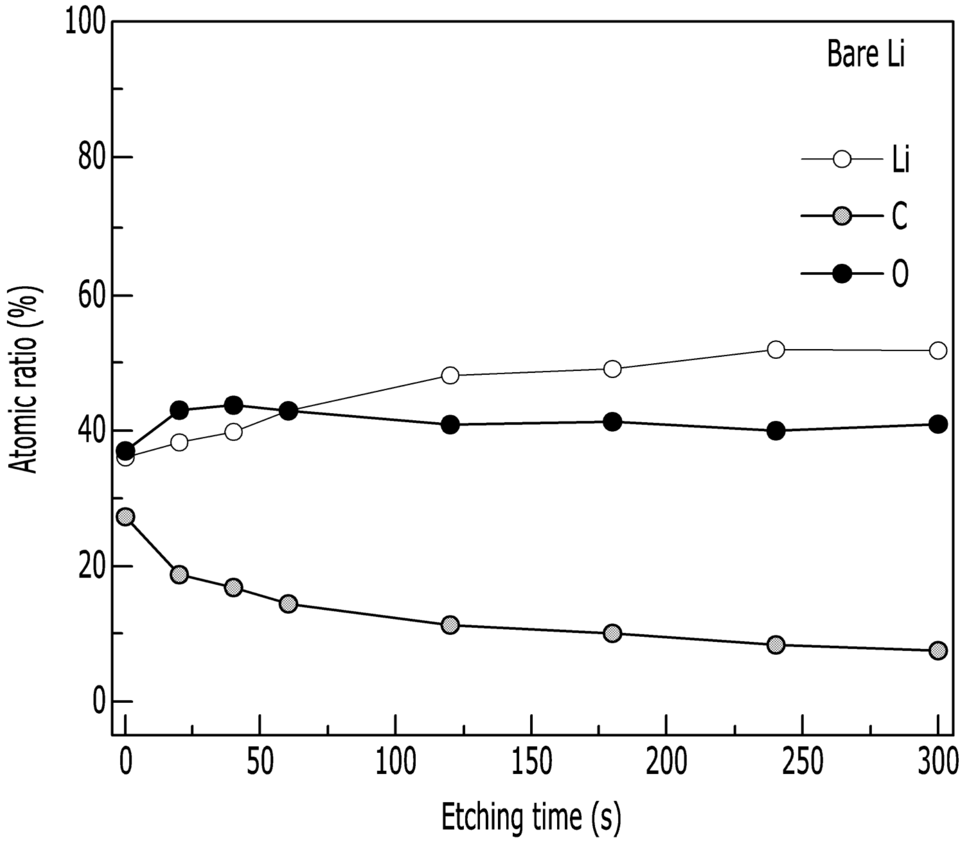
Bare Li
Li
C
O
Atomic ratio (%)
Etching time (s)
0
20
40
60
80
100
0
50
100
150
200
250
300

FIG. 26

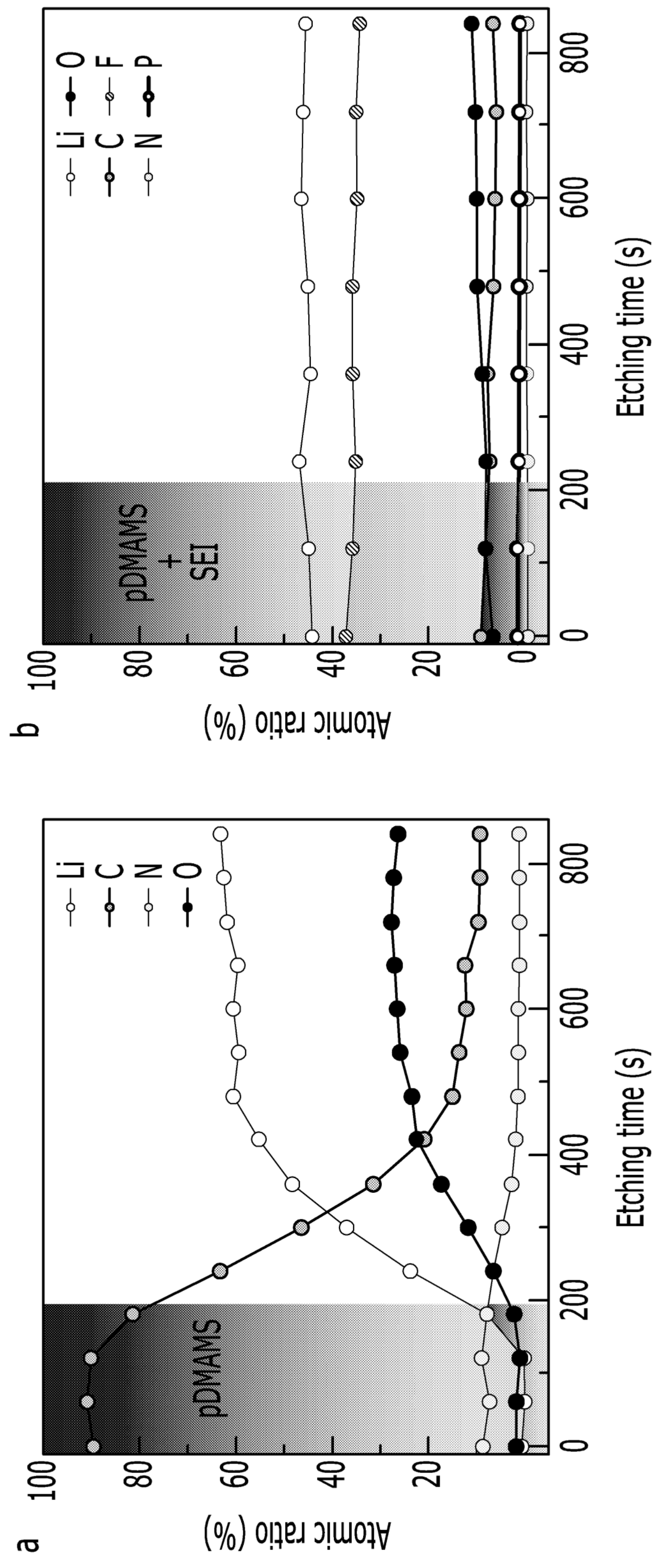
a
Atomic ratio (%)
Etching time (s)
pDMAMS
Li
C
N
O
b
Atomic ratio (%)
Etching time (s)
pDMAMS
+
SEI
Li
C
N
O
F
P

FIG. 27

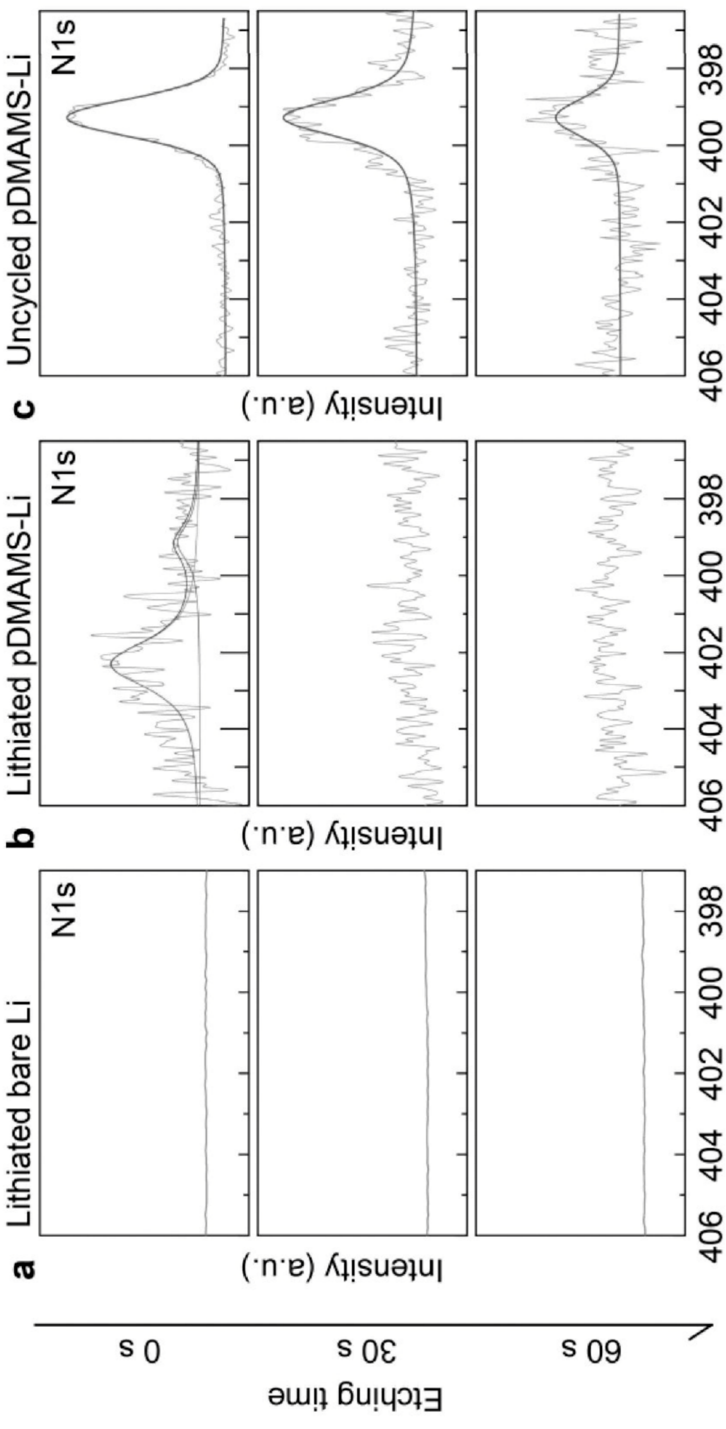
a
Lithiated bare Li
b
Lithiated pDMAMS-Li
c
Uncycled pDMAMS-Li
N1s
Intensity (a.u.)
Binding energy (eV)
406
404
402
400
398
Etching time
0 s
30 s
60 s

FIG. 28

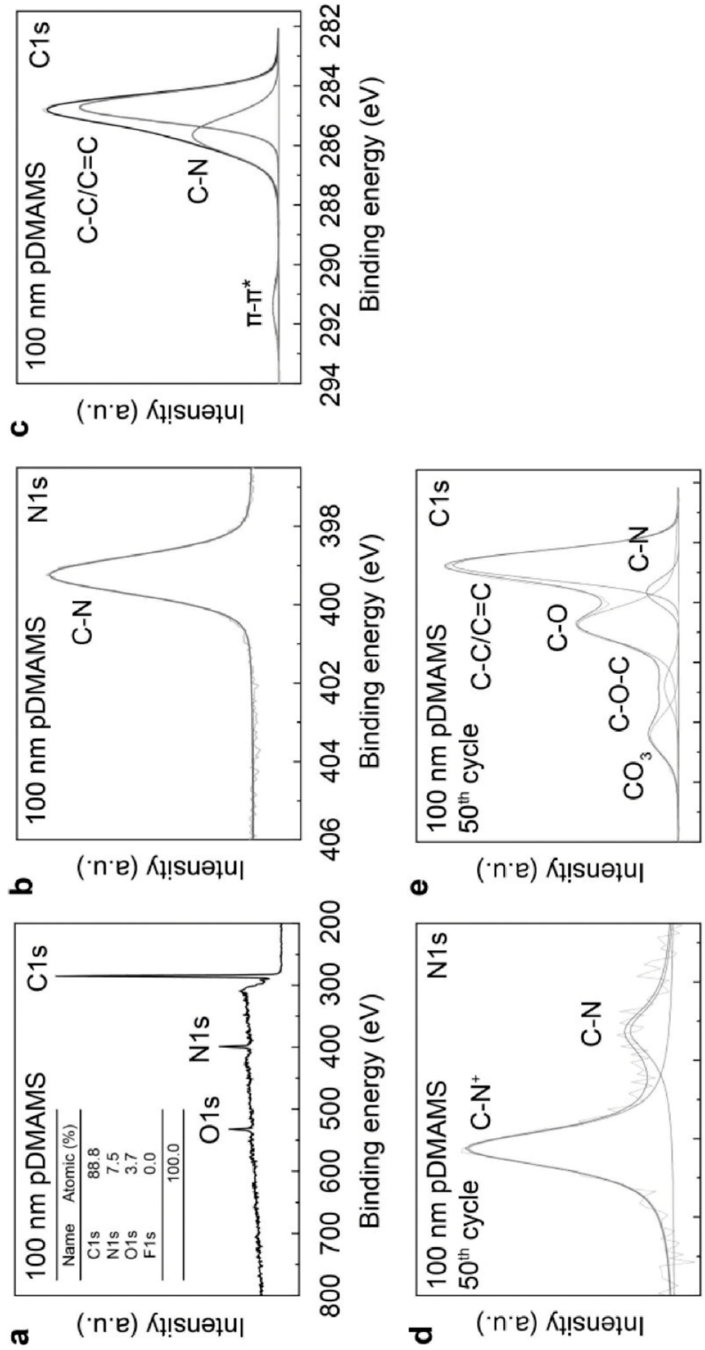
a
100 nm pDMAMS
Name Atomic (%)
C1s 88.8
N1s 7.5
O1s 3.7
F1s 0.0
100.0
C1s
N1s
O1s
Intensity (a.u.)
800 700 600 500 400 300 200
Binding energy (eV)
b
100 nm pDMAMS
N1s
C-N
Intensity (a.u.)
406 404 402 400 398
Binding energy (eV)
c
100 nm pDMAMS
C1s
C-C/C=C
C-N
π-π*
Intensity (a.u.)
294 292 290 288 286 284 282
Binding energy (eV)
d
100 nm pDMAMS
50th cycle
N1s
C-N+
C-N
Intensity (a.u.)
406 404 402 400 398
Binding energy (eV)
e
100 nm pDMAMS
50th cycle
C1s
C-C/C=C
C-O
C-O-C
CO3
C-N
Intensity (a.u.)
294 292 290 288 286 284 282
Binding energy (eV)

FIG. 29

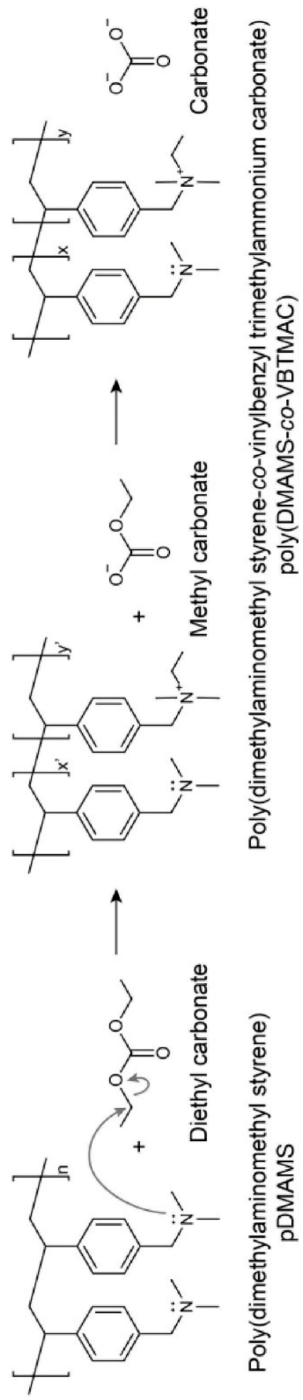

Poly(dimethylaminomethyl styrene)
pDMAMS

Diethyl carbonate

Poly(dimethylaminomethyl styrene-*co*-vinylbenzyl trimethylammonium carbonate)
poly(DMAMS-*co*-VBTMAC)

Methyl carbonate

Carbonate

FIG. 30

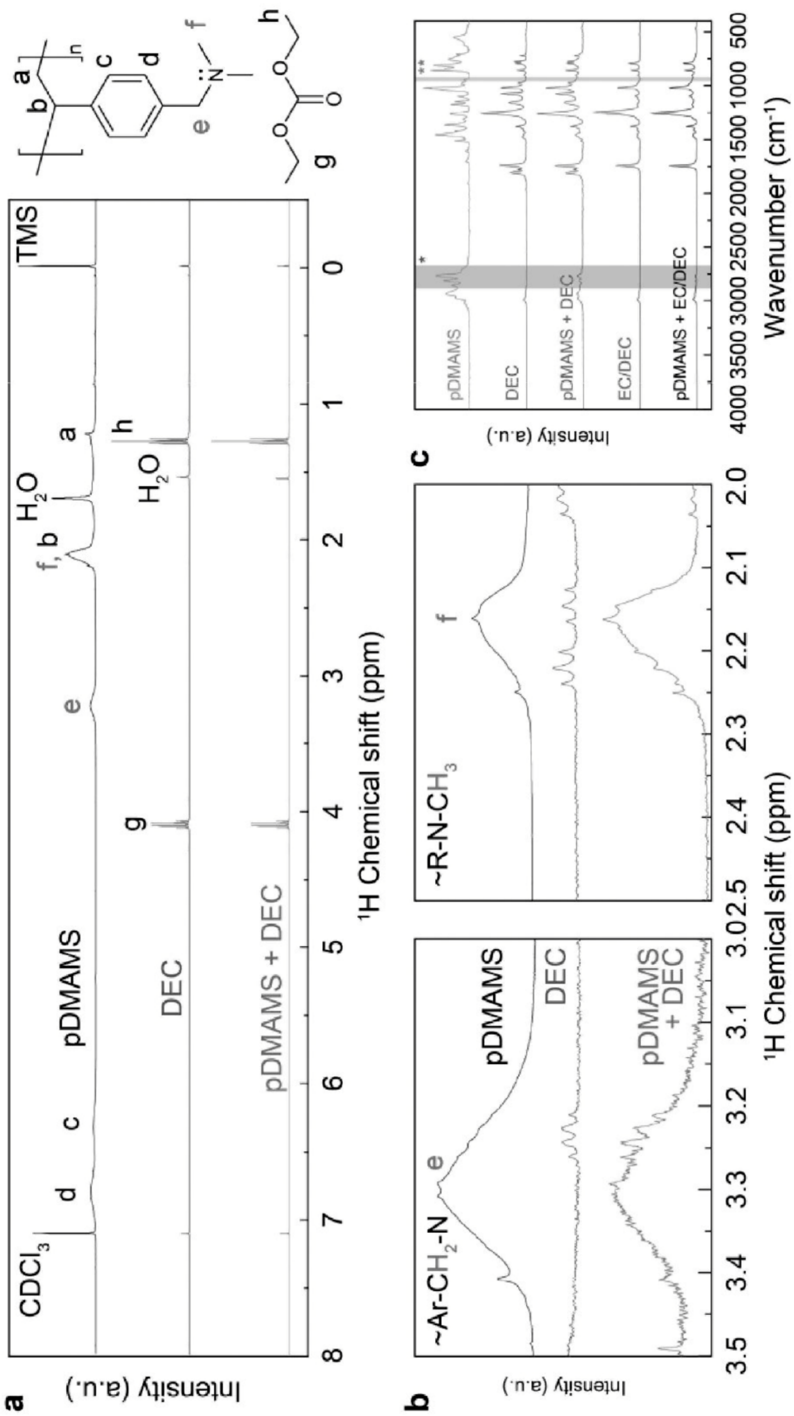
a
Intensity (a.u.)
CDCl3
TMS
pDMAMS
DEC
pDMAMS + DEC
H2O
1H Chemical shift (ppm)
b
~Ar-CH2-N
~R-N-CH3
1H Chemical shift (ppm)
c
pDMAMS
DEC
pDMAMS + DEC
EC/DEC
pDMAMS + EC/DEC
Wavenumber (cm-1)

FIG. 31

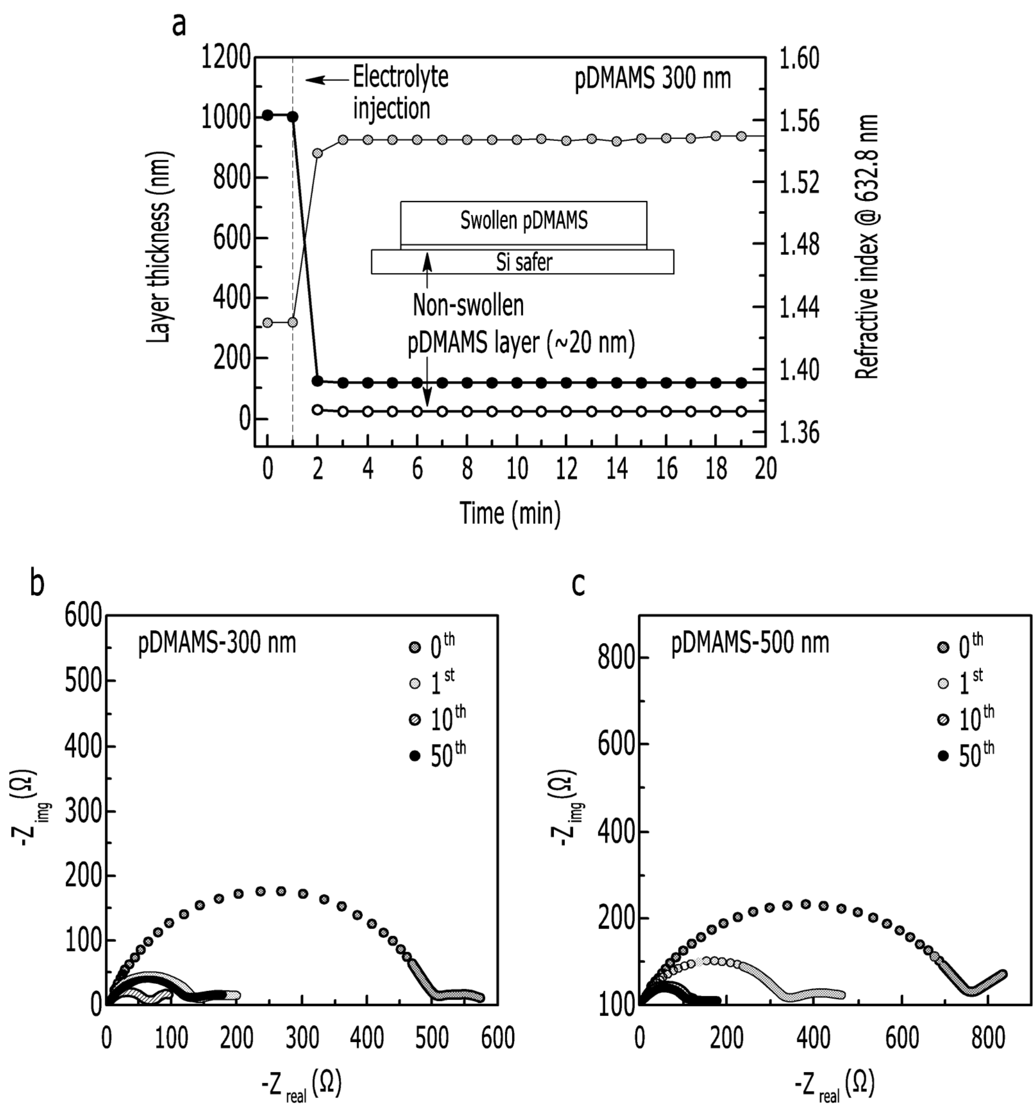
a
Layer thickness (nm)
Refractive index @ 632.8 nm
Time (min)
Electrolyte injection
pDMAMS 300 nm
Swollen pDMAMS
Si safer
Non-swollen
pDMAMS layer (~20 nm)
b
pDMAMS-300 nm
0th
1st
10th
50th
-Z img (Ω)
-Z real (Ω)
c
pDMAMS-500 nm
0th
1st
10th
50th
-Z img (Ω)
-Z real (Ω)

FIG. 32

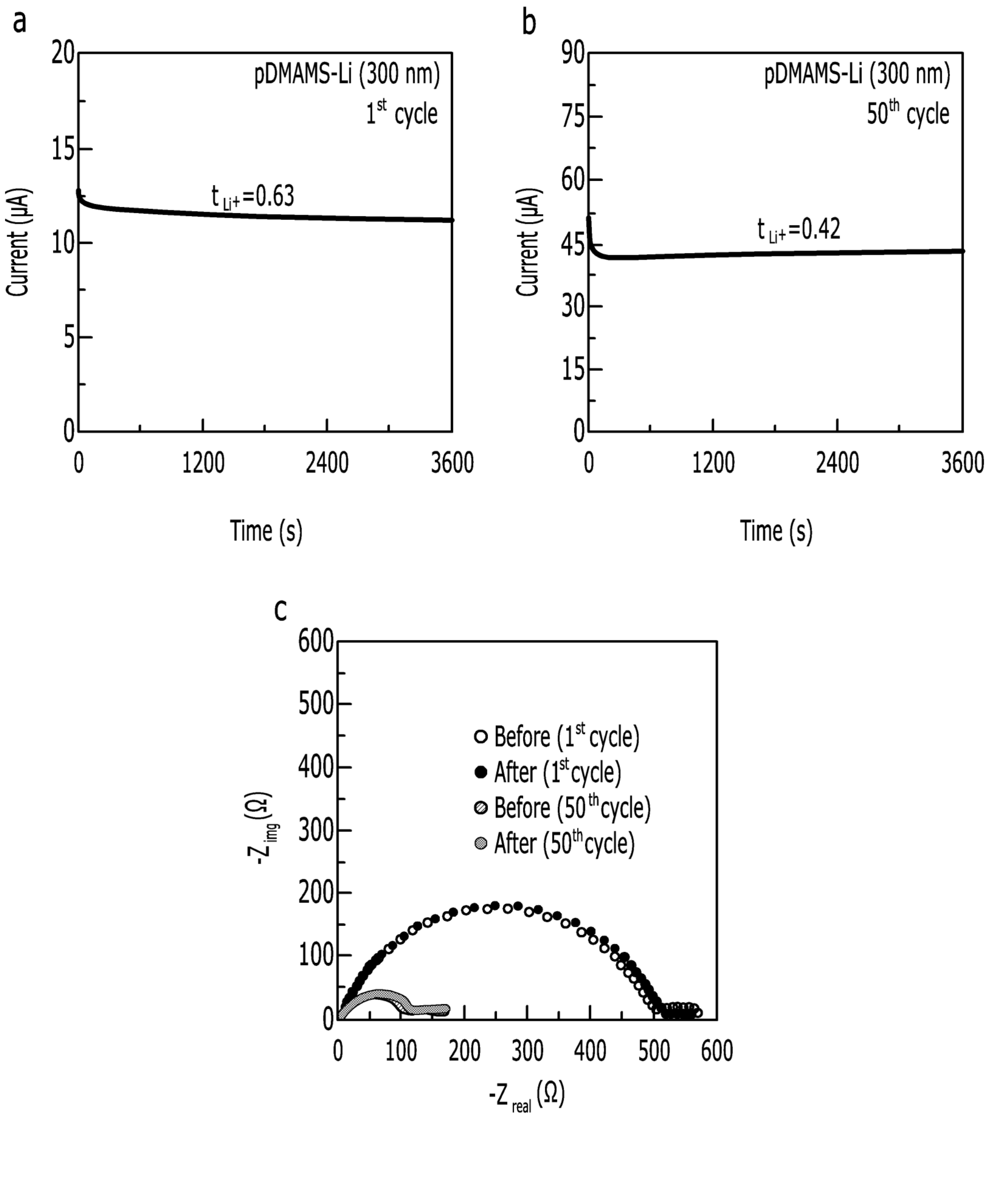
a
pDMAMS-Li (300 nm)
1st cycle
t Li+=0.63
Current (μA)
Time (s)
b
pDMAMS-Li (300 nm)
50th cycle
t Li+=0.42
Current (μA)
Time (s)
c
Before (1st cycle)
After (1st cycle)
Before (50th cycle)
After (50th cycle)
-Z img (Ω)
-Z real (Ω)

# INTERNATIONAL SEARCH REPORT

International application No.
**PCT/KR2024/002186**

## A. CLASSIFICATION OF SUBJECT MATTER

**H01M 4/13**(2010.01)i; **H01M 10/0565**(2010.01)i; **H01M 4/134**(2010.01)i; **H01M 10/0568**(2010.01)i; **H01M 10/052**(2010.01)i

According to International Patent Classification (IPC) or to both national classification and IPC

## B. FIELDS SEARCHED

Minimum documentation searched (classification system followed by classification symbols)

H01M 4/13(2010.01); H01M 10/0525(2010.01); H01M 10/42(2006.01); H01M 4/131(2010.01); H01M 4/139(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 고분자(polymer), 팽윤성(swelling), 리튬금속(lithium metal), 보호층(protective layer), 개시제를 이용한 화학적 기상증착(initiated chemical vapor deposition, iCVD), 터트-부틸 퍼옥사이드(tert-butyl peroxide)

## C. DOCUMENTS CONSIDERED TO BE RELEVANT

| Category* | Citation of document, with indication, where appropriate, of the relevant passages | Relevant to claim No. |
|---|---|---|
| X<br>Y | WANG, Q. et al. Molecular engineering of a gel polymer electrolyte via in-situ polymerization for high performance lithium metal batteries. Chemical Engineering Journal. 2022, vol. 428, thesis no. 131331, inner pp. 1-8 (publication date: 15 July 2021).<br>See abstract, inner pages 1 and 2, and Fig. 1. | 1-5,7-11<br>6,12-14 |
| Y | STALIN, S. et al. Ultrathin zwitterionic polymeric interphases for stable lithium metal anodes. Matter. 2021, vol. 4, no. 11, pp. 3753-3773 (publication date:03 November 2021).<br>See pages 3761 and 3768, and Fig. 1. | 6,12-14 |
| A | KR 10-2021-0015103 A (UNIST(ULSAN NATIONAL INSTITUTE OF SCIENCE AND TECHNOLOGY)) 10 February 2021 (2021-02-10)<br>See claims 1-17. | 1-14 |
| A | KR 10-2019-0091220 A (LG CHEM, LTD.) 05 August 2019 (2019-08-05)<br>See claims 1-10. | 1-14 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **05 June 2024** | **05 June 2024** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2022)

**INTERNATIONAL SEARCH REPORT**

International application No.
**PCT/KR2024/002186**

**C. DOCUMENTS CONSIDERED TO BE RELEVANT**

| Category* | Citation of document, with indication, where appropriate, of the relevant passages | Relevant to claim No. |
|---|---|---|
| A | KR 10-2005-0043674 A (LG CHEM, LTD.) 11 May 2005 (2005-05-11) See claims 1-18. | 1-14 |
| PX | BAE, J. et al. Reinforcing Native Solid-Electrolyte Interphase Layers via Electrolyte-Swellable Soft-Scaffold for Lithium Metal Anode. Advanced Energy Materials. 2023, vol. 13, thesis no. 2203818, inner pp. 1-12 (publication date: 08 March 2023). See inner pages 1-12. | 1-14 |

Form PCT/ISA/210 (second sheet) (July 2022)

**INTERNATIONAL SEARCH REPORT**
**Information on patent family members**

International application No.
**PCT/KR2024/002186**

| Patent document cited in search report | Publication date (day/month/year) | Patent family member(s) | Publication date (day/month/year) |
| --- | --- | --- | --- |
| KR 10-2021-0015103 A | 10 February 2021 | KR 10-2323286 B1 | 08 November 2021 |
| KR 10-2019-0091220 A | 05 August 2019 | CN 110651384 A | 03 January 2020 |
| | | CN 110651384 B | 19 July 2022 |
| | | EP 3671911 A1 | 24 June 2020 |
| | | EP 3671911 B1 | 24 August 2022 |
| | | KR 10-2400819 B1 | 23 May 2022 |
| | | PL 3671911 T3 | 07 November 2022 |
| | | US 11450855 B2 | 20 September 2022 |
| | | US 2020-0227753 A1 | 16 July 2020 |
| | | WO 2019-147082 A1 | 01 August 2019 |
| KR 10-2005-0043674 A | 11 May 2005 | CA 2545174 A1 | 19 May 2005 |
| | | CA 2545174 C | 19 May 2015 |
| | | CN 100440589 C | 03 December 2008 |
| | | CN 1875504 A | 06 December 2006 |
| | | EP 1690307 A1 | 16 August 2006 |
| | | EP 1690307 B1 | 05 March 2014 |
| | | JP 2007-510267 A | 19 April 2007 |
| | | JP 2007-510267 T | 19 April 2007 |
| | | JP 4489778 B2 | 23 June 2010 |
| | | KR 10-0612572 B1 | 11 August 2006 |
| | | TW 200601603 A | 01 January 2006 |
| | | TW I258238 B | 11 July 2006 |
| | | US 2005-0118508 A1 | 02 June 2005 |
| | | US 7700226 B2 | 20 April 2010 |
| | | WO 2005-045957 A1 | 19 May 2005 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020230022353
- KR 1020240024293